(19) Europäisches Patentamt / European Patent Office / Office européen des brevets

(11) **EP 4 718 144 A1**

(12) **EUROPEAN PATENT APPLICATION**
published in accordance with Art. 153(4) EPC

(43) Date of publication:
**01.04.2026 Bulletin 2026/14**

(21) Application number: **24795482.9**

(22) Date of filing: **25.01.2024**

(51) International Patent Classification (IPC):
**G02B 27/01** (2006.01)    **G02B 17/08** (2006.01)

(52) Cooperative Patent Classification (CPC):
**G02B 17/08; G02B 27/01**

(86) International application number:
**PCT/CN2024/074002**

(87) International publication number:
**WO 2024/222093 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 CN 202310443709**
**14.07.2023 CN 202321865614 U**
**14.08.2023 CN 202322181896 U**
**30.08.2023 CN 202322356240 U**
**19.10.2023 CN 202322814027 U**
**16.11.2023 CN 202311529739**

(71) Applicant: **Hangzhou Lingban Technology Co., Ltd.**
**Hangzhou, Zhejiang 310000 (CN)**

(72) Inventors:
• **JIANG, Chaoqun**
**Hangzhou, Zhejiang 310000 (CN)**
• **CHEN, Pengbo**
**Hangzhou, Zhejiang 310000 (CN)**
• **DU, Hui**
**Hangzhou, Zhejiang 310000 (CN)**
• **XIA, Jie**
**Hangzhou, Zhejiang 310000 (CN)**

(54) **OPTICAL DISPLAY DEVICE AND AR DISPLAY DEVICE**

(57) An optical display device is provided and includes an image source (1), a first prism unit (2), a second prism unit (3), and a first lens unit (4). A first semi-transmissive and semi-reflective film is disposed on a surface (402) on a side that is of the first lens unit (4) and that is away from the first prism unit (2); and projected light output by the image source (1) is incident into the first prism unit (2) through a first surface (201) of the first prism unit (2), is incident into the first lens unit (4) after being sequentially reflected totally by a second surface (202) of the first prism unit (2), reflected by a third surface (203) of the first prism unit (2), and transmitted by the second surface (202) of the first prism unit (2), and then is output and incident into a human eye after being reflected by the first semi-transmissive and semi-reflective film and then sequentially transmitted by the second surface (202) and the third surface (203) of the first prism unit (2) and the second prism unit (3). The optical display device has a simple structure, and implements a lightweight overall structure and a relatively good display effect.

FIG. 1

**Description**

**CROSS-REFERENCES TO RELATED APPLICATIONS**

This application claims priorities to:

Chinese Patent Application No. 202310443709.8, filed with the China National Intellectual Property Administration on April 24, 2023 and entitled "OPTICAL DISPLAY DEVICE AND AR DISPLAY DEVICE";
Chinese Patent Application No. 2023221818965, filed with the China National Intellectual Property Administration on August 14, 2023 and entitled "LIGHTWEIGHT NEAR-EYE DISPLAY APPARATUS";
Chinese Patent Application No. 2023218656147, filed with the China National Intellectual Property Administration on July 14, 2023 and entitled "LIGHTWEIGHT HEAD-MOUNTED DISPLAY APPARATUS WITH LARGE FIELD OF VIEW";
Chinese Patent Application No. 2023223562402, filed with the China National Intellectual Property Administration on August 30, 2023 and entitled "STRAY-LIGHT-ELIMINATING OPTICAL MODULE AND NEAR-EYE DISPLAY APPARATUS";
Chinese Patent Application No. 2023228140271, filed with the China National Intellectual Property Administration on October 19, 2023 and entitled "DIOPTER-ADJUSTABLE NEAR-EYE DISPLAY APPARATUS"; and
Chinese Patent Application No. 2023115297397, filed with the China National Intellectual Property Administration on November 16, 2023 and entitled "LIGHTWEIGHT AND STRAY-LIGHT-ELIMINATING NEAR-EYE DISPLAY APPARATUS", all of which are incorporated herein by reference in their entireties.

**TECHNICAL FIELD**

The present invention relates to the field of optical devices, and in particular, to an optical display device and an AR display device.

**BACKGROUND**

An augmented reality (AR) display technology implements superposition display of virtual and real images by using an optical element. Currently, optical devices that implement the AR display technology may be generally classified into two different types. In one type of optical device, projected light is projected into an optical waveguide by using a projection light engine, and the light is conducted through total reflection in the optical waveguide, and then is output to a human eye, and ambient light may also be projected into the human eye by using the optical waveguide, so that superposition display of virtual and real images is implemented. In the other type of optical device, projected light is conducted to a human eye by using a geometric optical element, and ambient light may also be projected and incident into the human eye by using the geometric optical element, so that superposition display of virtual and real images is implemented.

In the display device that implements the AR display technology by using the geometric optical element, how to implement a lightweight device structure is one of hot research directions in the industry.

**SUMMARY**

The objective of the present invention is to provide an optical display device and an AR display device, which have simple structures, and implement lightweight overall structures and a relatively good display effect to some extent.

To resolve the foregoing technical problem, the present invention provides an optical display device, including an image source, a first prism unit, a second prism unit, and a first lens unit.

The image source is disposed on a side of a first surface of the first prism unit, and the first lens unit is attached to a second surface of the first prism unit; a first surface of the second prism unit is attached to a third surface of the first prism unit; the first surface and the third surface of the first prism unit are closer to an eye of a wearer than the second surface of the first prism unit; and a first semi-transmissive and semi-reflective film is disposed on a surface on a side that is of the first lens unit and that is away from the first prism unit.

Projected light output by the image source is incident into the first prism unit through the first surface of the first prism unit, is incident into the first lens unit after being sequentially reflected totally by the second surface of the first prism unit, reflected by the third surface of the first prism unit, and transmitted by the second surface of the first prism unit, and then is output and incident into the human eye after being reflected by the first semi-transmissive and semi-reflective film and then sequentially transmitted by the second surface and the third surface of the first prism unit and the second prism unit.

Optionally, an included angle a between the second surface and the third surface of the first prism unit satisfies 15°<a<35°, an included angle b between the first surface and a second surface of the second prism unit satisfies 15°<b<25°, a-b≤10°, and the second surface of the second prism unit is a surface on a side on which projected light is output.

Optionally, a polarizing film is disposed on the third surface of the first prism unit, and a first quarter-wave plate is disposed between the first lens unit and the polarizing film.

Alternatively, a second semi-transmissive and semi-reflective film is disposed on the third surface of the first prism unit.

Optionally, a fourth surface of the first prism unit is further provided between the first surface of the first prism unit and the third surface of the first prism unit, and the fourth surface of the first prism unit is parallel to the second surface of the first prism unit, or the fourth surface of the first prism unit is parallel to a second surface of the second prism unit.

Optionally, each of the first prism unit and the second prism unit is a prism with a refractive index of 1.45-1.75 and an Abbe number of 18.0-60.0.

A focal length f1 of the first lens unit satisfies 10 mm≤f1≤25 mm, a refractive index of the first lens unit is 1.45-1.90, an Abbe number of the first lens unit is 35.0-85.0, a curvature radius R11 of a first surface of the first lens unit satisfies R11≥100 mm or R11≤-100 mm, and a curvature radius R12 of a second surface of the first lens unit satisfies 40 mm≤R12≤80 mm, where the first surface of the first lens unit is a surface on a side close to the first prism unit, and the second surface of the first lens unit is a surface on a side away from the first prism unit.

A gap between the first surface of the first lens unit and the second surface of the first prism unit is 0.01-1.0 mm.

Optionally, the image source is movable relative to the first prism unit, and a moving distance is less than 2.5 mm.

Optionally, an included angle between a direction in which the image source moves relative to the first prism unit and an optical axis direction of the image source is 0-15°.

Optionally, a second lens unit is further disposed between the image source and the first surface of the first prism unit.

Optionally, the second lens unit and the image source are movable synchronously relative to the first prism unit to perform diopter adjustment.

Optionally, a focal length f2 of the second lens unit satisfies f2≥50 mm or f2≤-50 mm, a refractive index of the second lens unit is 1.45-1.90, an Abbe number of the second lens unit is 35.0-85.0, and a curvature radius R21 of a first surface and a curvature radius R22 of a second surface of the second lens unit satisfy |R21-R22|>50 mm, where the first surface of the second lens unit is a surface on a side away from the first prism unit, and the second surface of the second lens unit is a surface on a side close to the first prism unit.

A gap between the first surface of the second lens unit and the first surface of the first prism unit is 0.05-3.00 mm.

Optionally, a third lens unit is further disposed on a side of the second surface of the second prism unit, and the second surface of the second prism unit is a surface on which projected light is transmitted and output from the second prism unit.

Optionally, a focal length f3 of the third lens unit satisfies f3≥50 mm or f3≤-50 mm, a refractive index of the third lens unit is 1.45-1.90, an Abbe number of the third lens unit is 35.0-85.0, a curvature radius R31 of a first surface of the third lens unit satisfies R31≥100 mm or R31≤-100 mm, and a curvature radius R32 of a second surface of the third lens unit satisfies R32≥100 mm or R32≤-100 mm, where the first surface of the third lens unit is a surface on a side close to the second prism unit, and the second surface of the third lens unit is a surface on a side away from the second prism unit.

Optionally, the third lens unit is movable relative to the second prism unit in an optical axis direction, to implement diopter adjustment.

Optionally, a film system unit is further included, and the film system unit is configured to fully or partially reflect light emitted by the image source to the first lens unit, and configured to transmit light reflected by the first lens unit back to the first prism unit.

The film system unit is disposed between the third surface of the first prism unit and the first surface of the second prism unit.

Optionally, the first surface of the first prism unit is a spherical surface or an aspherical surface, and a surface of the first lens unit is a free combination of a spherical surface, an aspherical surface, a free-form surface, a Fresnel surface, and a planar surface.

Optionally, the image source is movable relative to the first surface of the first prism unit to implement diopter adjustment, and a focal length of the first surface of the first prism unit is 25-200 mm.

Optionally, a fourth lens unit is further included, the fourth lens unit is disposed close to the first semi-transmissive and semi-reflective film, and a focal length of the fourth lens unit and a focal length of the first lens unit have opposite values.

Optionally, the focal length of the first lens unit is 10-25 mm.

Optionally, the film system unit includes at least one of a third semi-transmissive and semi-reflective film, a reflective polarization film, a quarter-wave plate, and an absorptive polarization film.

Optionally, a transmittance-to-reflectance ratio of each semi-transmissive and semi-reflective film is 1:9-9:1.

Optionally, a gap between the image source and the first surface of the first prism unit is 0.25-3.0mm.

Optionally, the optical display device further satisfies the following conditions:

$$R1 \leq -100 \text{ mm or } R1 \geq 100 \text{ mm};$$

$$-40 \text{ mm} \leq R2 \leq -100 \text{ mm};$$

and

$$R3 \leq -200 \text{ mm or } R3 \geq 18 \text{ mm},$$

where

R1 represents a curvature radius of a lens surface that is of the first lens unit and that is close to a fourth lens unit, R2 represents a curvature radius of a lens surface that is of the first lens unit and that is away from the fourth lens unit, and R3 represents a curvature radius of the first surface of the first prism unit.

Optionally, a formula for the aspherical surface is as follows:

$$z = \frac{CY^2}{1 + \sqrt{1 - (1+k)C^2Y^2}} + \sum_{i=2}^{N} a_i Y^{2i}$$

z represents a sagittal height, Y represents a lens center height, k represents a conic coefficient, C represents a curvature, $a_i$ represents a $(2i)^{th}$ order aspherical coefficient, and N is a positive integer.

Optionally, the optical display device further satisfies the following conditions:

| Lens surface | R | k | $a_2$ | $a_3$ | $a_4$ | $a_5$ | $a_6$ |
|---|---|---|---|---|---|---|---|
| Len1_S1 | 121.258 | 20.875 | 8.904E-06 | -9.721E-09 | 1.509E-11 | -6.648E-14 | 4.967E-16 |
| Len1_S2 | -76.681 | 15.429 | 9.487E-07 | -1.952E-09 | -1.724E-11 | 1.0755E-13 | 7.325E-17 |
| P2_S3 | 92.176 | 83.964 | -8.063E-04 | 2.352E-05 | -1.074E-07 | -2.971E-09 | 2.369E-11 |

R represents a curvature radius with a unit of mm, Len1_S1 represents a lens surface that is of the first lens unit and that is close to the fourth lens unit, Len1_S2 represents a lens surface that is of the first lens unit and that is away from the fourth lens unit, and P2_S3 represents the first surface of the first prism unit.

Optionally, a first polarization unit is further included. The first polarization unit is located between the first prism unit and the second prism unit, and is configured to: reflect imaging light in a first polarization transmission direction to the first lens unit and transmit imaging light in a second polarization transmission direction, the first polarization transmission direction and the second polarization transmission direction form 90°, and the first polarization transmission direction is the same as a polarization transmission direction of the image source; and the first semi-transmissive and semi-reflective film is configured to reflect the imaging light in the first polarization transmission direction, so that the light enters the human eye sequentially through the first prism unit and the second prism unit, and configured to transmit real-scene light, so that the light enters the human eye sequentially through the first prism unit and the second prism unit.

A second surface of the second prism unit is further attached to a second polarization unit, where the second polarization unit is configured to: transmit light parallel to a third polarization transmission direction and reflect light perpendicular to the third polarization transmission direction, and the third polarization transmission direction is the same as the second polarization transmission direction.

Optionally, the first polarization unit includes a first linear polarization plate, a polarization reflection plate, and a second quarter-wave plate that are sequentially disposed in a direction from the second prism unit to the first prism unit.

Optionally, a third polarization unit is further disposed on the image source, and the third polarization unit is configured to convert imaging light into 45° linearly polarized light.

Optionally, the second polarization unit includes a second linear polarization plate, and the third polarization unit includes a third linear polarization plate.

Optionally, the 45° linearly polarized light undergoes first reflection on the second surface of the first prism unit to form first light, the first light undergoes second reflection on the first polarization unit to form second light, the second light undergoes third reflection on the first semi-transmissive and semi-reflective film to form third light, and the third light is converted by the first polarization unit into fourth light and then transmitted through the second polarization unit to enter the human eye, the first light is 45° linearly polarized light, the second light is left-handed circularly polarized light, the third light is right-handed circularly polarized light, the fourth light is -45° linearly polarized light, and the second polarization unit is configured to: transmit -45° linearly polarized light and reflect 45° linearly polarized light.

Optionally, a fifth lens unit is further included, the fifth lens unit is disposed between the image source and the first prism unit, and the fifth lens unit includes at least one lens.

Optionally, the fifth lens unit and the image source are movable synchronously relative to the first prism unit to perform diopter adjustment.

Optionally, a polarization conversion unit is further included.

The image source is provided with a linear polarization film on a light-emitting side.

A film system unit is further included, and the film system unit includes a polarization reflection unit and is attached to the third surface of the first prism unit.

The polarization conversion unit is disposed between the first prism unit and the first lens unit, or is disposed between the polarization reflection unit and the first prism unit.

A thickness of the linear polarization film is 60-250 nm, a thickness of the film system unit is 90-280 nm, a thickness of the polarization conversion unit is 30-100 nm, and a thickness of the semi-transmissive and semi-reflective film is 50-300 nm.

Imaging light emitted by the image source is converted by the linear polarization film into linearly polarized light, and the linearly polarized light enters the first prism unit and undergoes total reflection, and then arrives at the film system unit, and is reflected by the film system unit to the first lens unit, and then is reflected by the first semi-transmissive and semi-reflective film on the first lens unit back to the first prism unit, and is transmitted sequentially through the film system unit and the second prism unit to arrive at the human eye for imaging.

Optionally, the polarization conversion unit is a quarter-wave plate, and an included angle between a reflection axis of the film system unit and a slow axis of the polarization conversion unit is 45°±1°.

Optionally, the polarization reflection unit is a polarization reflection film.

Optionally, the film system unit further includes a polarization absorption unit, the polarization absorption unit is a polarization absorption film and is located between the polarization reflection unit and the second prism unit, and an absorption axis of the polarization absorption unit is parallel to a reflection axis of the polarization reflection unit.

Optionally, the image source is further movable relative to the first prism unit, and a moving distance is less than 5 mm.

Optionally, an included angle between a direction in which the image source moves relative to the first prism unit and an optical axis direction of the image source is 0-15°.

Optionally, a sixth lens unit is further included, the sixth lens unit is located on the light-emitting side of the image source, and the linearly polarized light enters the first prism unit through the sixth lens unit.

Optionally, a focal length of the sixth lens unit is 5-50 mm.

Optionally, the image source and the sixth lens unit are further movable synchronously relative to the first prism unit, and a moving distance is less than 4 mm.

Optionally, an included angle between a direction in which the image source and the sixth lens unit move synchronously relative to the first prism unit and an optical axis direction of the image source is 0-10°.

Optionally, a polarizer is further disposed on a side that is of the second prism unit and that is close to the human eye, and a thickness of the polarizer is 60-250 nm.

Optionally, each lens unit includes at least one lens.

Optionally, a lens surface type of each lens is a free combination of a spherical surface, an aspherical surface, a free-form surface, a Fresnel surface, and a planar surface.

Optionally, the first lens unit is a curved lens.

Optionally, the aspherical surface satisfies the following formula:

$$z = \frac{CY^2}{1 + \sqrt{1 - (1+k)C^2Y^2}} + \sum_{i=2}^{N} a_i Y^{2i}$$

z represents a sagittal height, Y represents a lens center height, k represents a conic coefficient, C represents a curvature, $a_i$ represents an ith aspherical coefficient, and N is a positive integer.

Optionally, a seventh lens unit is further included, the seventh lens unit is disposed on a side that is of the first lens unit and that is away from the human eye of the wearer, and a focal length of the seventh lens unit and a focal length of the first lens unit have opposite values.

The second prism unit includes at least one Fresnel lens.

A film system unit is further included, and the film system unit is located between the first prism unit and the second prism unit.

Optionally, the film system unit includes at least one of a fourth semi-transmissive and semi-reflective film, a reflective polarization film, a quarter-wave plate, and an absorptive polarization film.

Optionally, a transmittance-to-reflectance ratio of each semi-transmissive and semi-reflective film is 1:9-9:1.

Optionally, an air gap between the first prism unit and the first lens unit is 0.01-1 mm.

Optionally, the second prism unit includes a Fresnel lens, an included angle between a line connecting tooth bottoms of two adjacent teeth of the Fresnel lens and a corresponding tooth width direction is 15-35°, a tooth width of the Fresnel lens is greater than or equal to 0.1 mm, a draft angle of a tooth of the Fresnel lens is 60-120°, and each of the Fresnel lens and the first prism unit has a refractive index of 1.45-1.75 and an Abbe number of 18.0-60.0.

Optionally, a film system unit is further included, and the film system unit is disposed between the first prism unit and the second prism unit.

The second prism unit is a Fresnel lens, and is disposed close to the third surface of the first prism unit, and a Fresnel surface of the Fresnel lens is disposed on a side adjacent to the human eye of the wearer, and satisfies the following conditions:

$$\sin(\beta) * n > \sin(\max(aor)) \text{ or } \sin(\beta) * n < \sin(\min(aor));$$

$$r/pitch < 0.05;$$

and

$$R/pitch < 0.05.$$

In the formula, $\beta$ represents a draft angle of each tooth, aor represents an included angle range between a normal of an aperture stop and lines respectively connecting any point on the aperture stop with a tooth tip and a tooth bottom of the draft angle of each tooth, max(aor) represents a maximum value of aor, min(aor) represents a minimum value of aor, n represents a material refractive index of the Fresnel lens, pitch represents a tooth width of each tooth, r represents a chamfer radius of a tooth bottom of each tooth, and R represents a chamfer radius of a tooth tip of each tooth.

Optionally, a value range of pitch of a Fresnel surface of the second prism unit is 0.15-0.6 mm, and each of value ranges of r and R is 0.05-0.02 mm.

Optionally, the film system unit includes at least one of a fifth semi-transmissive and semi-reflective film, a reflective polarization film, a quarter-wave plate, and an absorptive polarization film.

Optionally, an air gap between the first prism unit and the first lens unit is 0.01-1.0 mm.

Optionally, the first lens unit is a curved lens, a curvature radius R11 of a first surface of the first lens unit satisfies R11≥150 mm or R11≤-150 mm, and a curvature radius R12 of a second surface of the first lens unit satisfies 40 mm≤R12≤75 mm; the first surface of the first prism unit is a curved surface, and a curvature radius R13 satisfies R13≥22 mm or R13≤-100 mm; the first surface of the first lens unit is a surface on a side close to the first prism unit; and the second surface of the first lens unit is a surface on a side away from the first prism unit.

Optionally, an eighth lens unit is further included, the eighth lens unit is disposed close to the first semi-transmissive and semi-reflective film, and a focal length of the eighth lens unit and a focal length of the first lens unit (4) have opposite values.

Optionally, the focal length of the first lens unit is 10-25 mm.

Optionally, the image source further moves relative to the first prism unit to perform diopter adjustment.

In the optical display device provided in this application, the projected light output by the image source can be repeatedly reflected in the first prism unit through cooperation between the first prism unit and the first lens unit, so that a transmission optical path of the projected light can be repeatedly folded in the first prism unit to provide a sufficient transmission optical path for the projected light. In addition, the projected light needs to be reflected in the first prism unit only twice, to avoid a problem that a size of the first prism unit is excessively large due to an excessive quantity of reflection times while ensuring a sufficient optical path of the projected light, thereby facilitating lightening of a structure of the entire display device. In addition, because the first surface of the first prism unit is on a side close to the eyes of the wearer, and the image source outputs the projected light to the first surface of the first prism unit, the image source is located on a side that is of the first prism unit and that is close to the head of the wearer, to facilitate installation of the image source and simplify an installation structure of the image source. The optical display device provided in this application has a simple structure, and a size of the entire display device is relatively small. Therefore, lightening of the optical display device and a relatively good display effect are implemented to some extent, to facilitate widespread application of the device.

**BRIEF DESCRIPTION OF DRAWINGS**

To describe the technical solutions in embodiments of this application or in the conventional technology more clearly, the following briefly describes the accompanying drawings needed for describing the embodiments or the conventional technology. It is clear that the accompanying drawings in the following description merely show some embodiments of the present invention, and a person of ordinary skill in the art can still derive other drawings from these accompanying drawings without creative efforts.

FIG. 1 is a schematic diagram of a structure of an optical display device according to an embodiment of this application;
FIG. 2 is a spot diagram of a structure of an optical display device when a-b=6 according to an embodiment of this application;
FIG. 3 is a spot diagram of a structure of an optical display device when a-b=0 according to an embodiment of this application;
FIG. 4 is a spot diagram of a structure of an optical display device when a-b=10 according to an embodiment of this application;
FIG. 5 is a schematic diagram of a structure of another optical display device according to an embodiment of this application;
FIG. 6 is a schematic diagram of a structure of another optical display device according to an embodiment of this application;
FIG. 7 is a schematic diagram of a structure of another optical display device according to an embodiment of this application;
FIG. 8 is a schematic diagram of a structure of another optical display device according to an embodiment of this application;
FIG. 9 is an MTF graph at a diopter 0D according to an embodiment of this application;
FIG. 10 is a spot diagram at a diopter 0D according to an embodiment of this application;
FIG. 11 is an MTF graph at a diopter -3D according to an embodiment of this application;
FIG. 12 is a spot diagram at a diopter -3D according to an embodiment of this application;
FIG. 13 is an MTF graph at a diopter -7D according to an embodiment of this application;
FIG. 14 is a spot diagram at a diopter -7D according to an embodiment of this application;
FIG. 15 is a schematic diagram of a structure of another optical display device according to an embodiment of this application;
FIG. 16 is a diagram of a cheek reflection principle according to an embodiment of this application;
FIG. 17 is a composition diagram of each polarization unit according to an embodiment of this application;
FIG. 18 is a schematic diagram of a structure of another optical display device according to an embodiment of this application;
FIG. 19 is a schematic diagram of diopter adjustment according to an embodiment of this application;
FIG. 20 is an MTF curve graph at a diopter 0D according to an embodiment of this application;
FIG. 21 is an MTF curve graph at a diopter 6D according to an embodiment of this application;
FIG. 22 is an MTF curve graph at a diopter 0D according to an embodiment of this application;
FIG. 23 is an MTF curve graph at a diopter 6D according to an embodiment of this application;
FIG. 24 is an MTF curve graph at a diopter 0D according to an embodiment of this application;
FIG. 25 is an MTF curve graph at a diopter 6D according to an embodiment of this application;
FIG. 26 is an MTF curve graph at a diopter 0D according to an embodiment of this application;
FIG. 27 is an MTF curve graph at a diopter 6D according to an embodiment of this application;
FIG. 28 is an MTF curve graph at a diopter 0D according to an embodiment of this application;
FIG. 29 is an MTF curve graph at a diopter 6D according to an embodiment of this application;
FIG. 30 is a schematic diagram of a structure of another optical display device according to an embodiment of this application;
FIG. 31 is a schematic diagram of a structure of a second prism unit according to an embodiment of this application;
FIG. 32 is a partially enlarged diagram I of a second prism unit in FIG. 21;
FIG. 33 is an optical path diagram of another optical display device according to an embodiment of this application;
FIG. 34 is a chief ray optical path diagram according to an embodiment of this application;
FIG. 35 is a partially enlarged diagram at a portion A in FIG. 31;

FIG. 36 is a simulated optical path diagram of a second prism unit when β=0°, R=0 μm, and r=0 μm according to an embodiment of this application;

FIG. 37 is an overall forward simulated irradiance diagram (without threshold energy reduction) of a second prism unit when β=0°, R=0 μm, and r=0 μm according to an embodiment of this application;

FIG. 38 is an overall forward simulated irradiance diagram (after threshold energy reduction) of a second prism unit when β=0°, R=0 μm, and r=0 μm according to an embodiment of this application;

FIG. 39 is a simulated optical path diagram (a) of stray light and a partially enlarged diagram (b) at a portion B of a second prism unit when β=0°, R=0 μm, and r=0 μm according to an embodiment of this application;

FIG. 40 is an overall forward simulated irradiance diagram of stray light of a second prism unit when β=0°, R=0 μm, and r=0 μm according to an embodiment of this application;

FIG. 41 is a simulated optical path diagram of a second prism unit when β=0°, R=25 μm, and r=25 μm according to an embodiment of this application;

FIG. 42 is an overall forward simulated irradiance diagram (without threshold energy reduction) of a second prism unit when β=0°, R=25 μm, and r=25 μm according to an embodiment of this application;

FIG. 43 is an overall forward simulated irradiance diagram (after threshold energy reduction) of a second prism unit when β=0°, R=25 μm, and r=25 μm according to an embodiment of this application;

FIG. 44 is a forward simulated irradiance diagram (a) of stray light and a partially enlarged diagram (b) at a portion C of a second prism unit when β=0°, R=25 μm, and r=25 μm according to an embodiment of this application;

FIG. 45 is a forward simulated irradiance diagram of stray light smear of a second prism unit when β=0°, R=25 μm, and r=25 μm according to an embodiment of this application;

FIG. 46 is a simulated optical path diagram of a second prism unit when β=12°, R=5 μm, and r=5 μm according to an embodiment of this application;

FIG. 47 is an overall forward simulated irradiance diagram (without threshold energy reduction) of a second prism unit when β=12°, R=5 μm, and r=5 μm according to an embodiment of this application;

FIG. 48 is an overall forward simulated irradiance diagram (after threshold energy reduction) of a second prism unit when β=12°, R=5 μm, and r=5 μm according to an embodiment of this application;

FIG. 49 is a simulated optical path diagram (a) of stray light and a partially enlarged diagram (b) at a portion D of a second prism unit when β=12°, R=5 μm, and r=5 μm according to an embodiment of this application; and

FIG. 50 is a forward simulated irradiance diagram of stray light smear of a second prism unit when β=12°, R=5 μm, and r=5 μm according to an embodiment of this application.

Description of reference numerals in the accompanying drawings:
1: image source; 2: first prism unit; 201: first surface of the first prism unit; 202: second surface of the first prism unit; 203: third surface of the first prism unit; 204: fourth surface of the first prism unit; 3: second prism unit; 301: first surface of the second prism unit; 302: second surface of the second prism unit; 4: first lens unit; 5: first quarter-wave plate; 6: second lens unit; 601: first surface of the second lens unit; 602: second surface of the second lens unit; 7: third lens unit; 701: first surface of the third lens unit; 702: second surface of the third lens unit; 8: fourth lens unit; 9: first polarization unit; 91: first linear polarization plate; 92: polarization reflection plate; 93: second quarter-wave plate; 10: second polarization unit; 11: human eye; 12: third polarization unit; 13: fifth lens unit; 14: sixth lens unit; and 15: seventh lens unit.

## DESCRIPTION OF EMBODIMENTS

To enable a person skilled in the art to better understand the solutions of the present invention, the following further describes the present invention in detail with reference to the accompanying drawings and specific implementations. Clearly, the described embodiments are merely some rather than all of the embodiments of the present invention. Based on the embodiments in the present invention, all other embodiments obtained by a person of ordinary skill in the art without creative efforts fall within the scope of protection of the present invention.

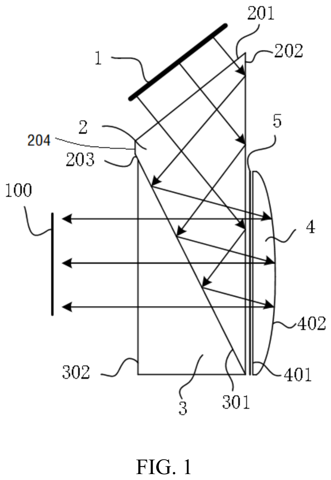

As shown in FIG. 1 to FIG. 7, in a specific embodiment of this application, an optical display device may include: an image source 1, a first prism unit 2, a second prism unit 3, and a first lens unit 4.

The image source 1 is disposed on a side of a first surface 201 of the first prism unit, and the first lens unit 4 is attached to a second surface 202 of the first prism unit; a first surface of the second prism unit 3 is attached to a third surface 203 of the first prism unit; the first surface 201 and the third surface 203 of the first prism unit are closer to an eye of a wearer than the second surface 202 of the first prism unit; and a first semi-transmissive and semi-reflective film is disposed on a surface on a side that is of the first lens unit 4 and that is away from the first prism unit 2.

Projected light output by the image source 1 is incident into the first prism unit 2 through the first surface 201 of the first prism unit, is incident into the first lens unit 4 after being sequentially reflected totally by the second surface 202 of the first prism unit, reflected by the third surface 203 of the first prism unit, and transmitted by the second surface 202 of the first prism unit, and is output and incident into the human eye 11 after being reflected by the first semi-transmissive and semi-reflective film and then sequentially transmitted by the second surface 202 and the third surface 203 of the first prism unit and the second prism unit 3.

Referring to FIG. 1, in an embodiment shown in FIG. 1, the projected light output by the image source 1 is first incident into the first prism unit 2 after passing through the first surface 201 of the first prism unit, and then is incident into the third surface 203 of the first prism unit after being reflected totally by the second surface 202 of the first prism unit. Because a polarizing film is disposed on the third surface 203 of the first prism unit, the projected light is partially reflected by the polarizing film, and projected light output after reflection is polarized light. The polarized light is transmitted to a side of the second surface 202 of the first prism unit again, is transmitted and output from the second surface 202 of the first prism unit, and passes through a first quarter-wave plate 5 for the first time, and then is incident into the first lens unit 4 through a first surface 401 of the first lens unit and is reflected by the semi-transmissive and semi-reflective film on a second surface 402 of the first lens unit, so that the polarized light passes through the first surface 401 of the first lens unit and the first quarter-wave plate 5 for the second time and is incident into the first prism unit 2. Because the polarized light passes through the first quarter-wave plate 5 twice, a polarization direction changes. When the polarized light is incident into the third surface 203 that is of the first prism unit 2 and on which the polarizing film is disposed, the polarized light can be directly transmitted. Therefore, the polarized light can be incident into the second prism unit 3 after being sequentially transmitted by the second surface 202 and the third surface 203 of the first prism unit, and can be output to an aperture stop after being transmitted by the second prism unit 3, where the aperture stop is at a position of the human eye 11, in other words, the light output after being transmitted by the second prism unit 3 can be incident into the human eye 11.

When light reflected by the polarizing film to the first semi-transmissive and semi-reflective film is reflected to the polarizing film again, the light needs to be transmitted by the polarizing film. Therefore, a device that can change a polarization state of light needs to be disposed between the polarizing film and the first semi-transmissive and semi-reflective film. When the light passes through the device twice, the polarization state changes from "can be reflected by the polarizing film" to "can be transmitted by the polarizing film". In this embodiment, the first quarter-wave plate 5 is selected to achieve the function. According to the foregoing principle, the first quarter-wave plate 5 needs to be disposed between the polarizing film and the first semi-transmissive and semi-reflective film. In actual application, the first quarter-wave plate 5 may be attached to the polarizing film or the first semi-transmissive and semi-reflective film, or disposed between the first lens unit 4 and the first prism unit 2 or on one of adjacent surfaces of the first lens unit 4 and the first prism unit 2.

In the embodiment shown in FIG. 1, to enable the projected light to be partially transmitted and partially reflected when being incident into the third surface 203 of the first prism unit for the first time, the polarizing film is disposed on the third surface 203 of the first prism unit, and the first quarter-wave plate 5 is disposed between the polarizing film and the first semi-transmissive and semi-reflective film. However, in actual application, the polarizing film may not be necessarily disposed on the third surface 203 of the first prism unit, and the first quarter-wave plate 5 may not be necessarily disposed between the polarizing film and the first semi-transmissive and semi-reflective film. In another optional embodiment of this application, a second semi-transmissive and semi-reflective film may be further disposed on the third surface 203 of the first prism unit. In this case, the projected light can be partially reflected and partially transmitted when passing through the third surface 203 of the first prism unit without disposing the first quarter-wave plate 5.

In addition, the third surface 203 of the first prism unit has a function of partially reflecting and partially transmitting incident light, and a ratio of reflected light to transmitted light depends on an angle of the incident light. Therefore, in actual application, it is feasible to dispose neither of the polarizing film and the second semi-transmissive and semi-reflective film on the third surface 203 of the first prism unit.

It can be learned from the embodiment shown in FIG. 1 that, because in this embodiment, both the first surface 201 and the third surface 203 of the first prism unit are located on the side that is of the second prism unit 3 and that is close to the human eye 11 of the wearer, the second surface 202 of the first prism unit is located on the side that is of the second prism unit 3 and that is away from the human eye 11 of the wearer, and the image source 1 outputs the projected light to the first surface 201 of the first prism unit, the image source 1 is also located on the side that is of the first prism unit 2 and that is close to the human eye 11. Compared with an image source 1 located on a side that is of a first prism unit 2 and that is away from a human eye 11, the image source 1 in this embodiment is easier to install, so that complexity of an installation structure of the image source 1 is reduced.

In addition, in this embodiment, the projected light is reflected only twice after being incident into the first prism unit 2, to avoid a problem that a volume of the first prism unit 2 is excessively large because the projected light is reflected for an excessive quantity of times while ensuring a sufficient optical path of the projected light. In addition, because the projected light is reflected in the first prism unit 2 only twice in this application, a degree of divergence of transmitting the projected light in the first prism unit 2 is not excessively large. Therefore, in this embodiment, an image source 1 that can output projected light with a larger area can be selected, in other words, projected light of an image with a larger area can be output, so that an image formed by the projected light output after being sequentially conducted by optical elements such as the first prism unit 2, the second prism unit 3, and the first lens unit 4 is large enough, and it is ensured that the image is little distorted due to divergence, thereby ensuring a display effect of the image. Therefore, in actual application, an area of a light-emitting surface of the projected light output by the image source 1 may be set to be not less than a specified area size.

In an embodiment, an included angle a between the second surface 202 and the third surface 203 of the first prism unit satisfies 15°<a<35°, an included angle b between the first surface 301 and a second surface 302 of the second prism unit satisfies 15°<b<25°, a-b≤10°, and the second surface 302 of the second prism unit is a surface on a side on which projected light is output.

Structures and shapes of the first prism unit 2 and the second prism unit 3 directly affect a space volume, an imaging effect, and the like of the entire optical display device.

For the first prism unit 2, neither of an excessively large included angle a and an excessively small included angle a between the second surface 202 and the third surface 203 of the first prism unit can satisfy a requirement for emitting the projected light after the projected light is reflected in the first prism unit 2 twice. If the included angle a is excessively small, the projected light output by the image source 1 is reflected back and forth in the first prism unit 2 a plurality of times, or a requirement for reflecting totally, on the second surface 202 of the first prism unit, the projected light output by the image source 1 cannot be satisfied. If the included angle a is excessively large, the projected light output by the image source 1 can be reflected in the first prism unit 2 only once before being emitted from the first prism unit 2, and a requirement for two times of reflection cannot be satisfied. Therefore, in this embodiment, the included angle a of the first prism unit 2 falls within an angle range, to ensure that the projected light output by the image source 1 can be reflected in the first prism unit 2 twice.

A main function of the second prism unit 3 is to compensate for an optical path difference generated after projected light output by the image source 1 at different light-emitting positions is repeatedly reflected in the first prism unit 2. If the included angle b between the first surface 301 and the second surface 302 of the second prism unit is excessively small, the optical path difference cannot be compensated for. If the included angle b is excessively large, the optical path difference may be overcompensated for, and an optical path difference in a reverse direction is additionally caused, resulting in relatively large image distortion and affecting actual imaging quality. Therefore, in this embodiment, to ensure a compensation effect on the projected light and ensure imaging quality of the projected light, the included angle b is set to satisfy 15°<b<25°, and a-b≤10°.

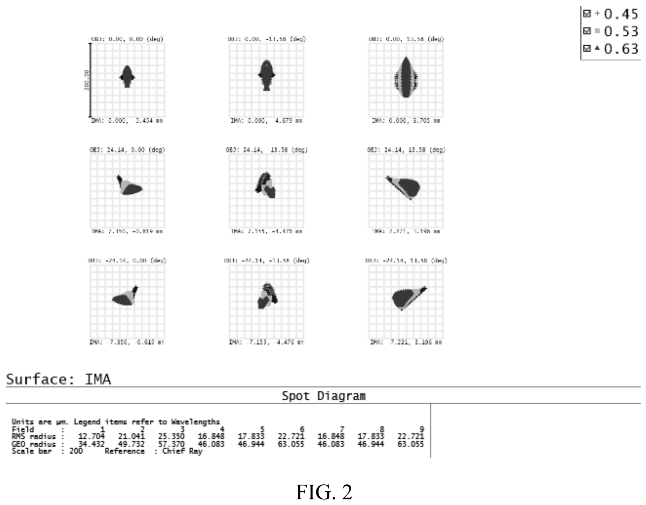

When a-b has different values, for specific test data, reference may be made to FIG. 2 to FIG. 4.

FIG. 2 is a spot diagram of imaging quality when a-b=6°. In FIG. 2, a field of view -13.58° corresponds to a width of 7.155 mm; a central field of view 0° corresponds to a width of 7.35 mm; a field of view 13.58° corresponds to a width of 7.221 mm; and distortion (7.221-7.155)/7.35 is approximately equal to 1%.

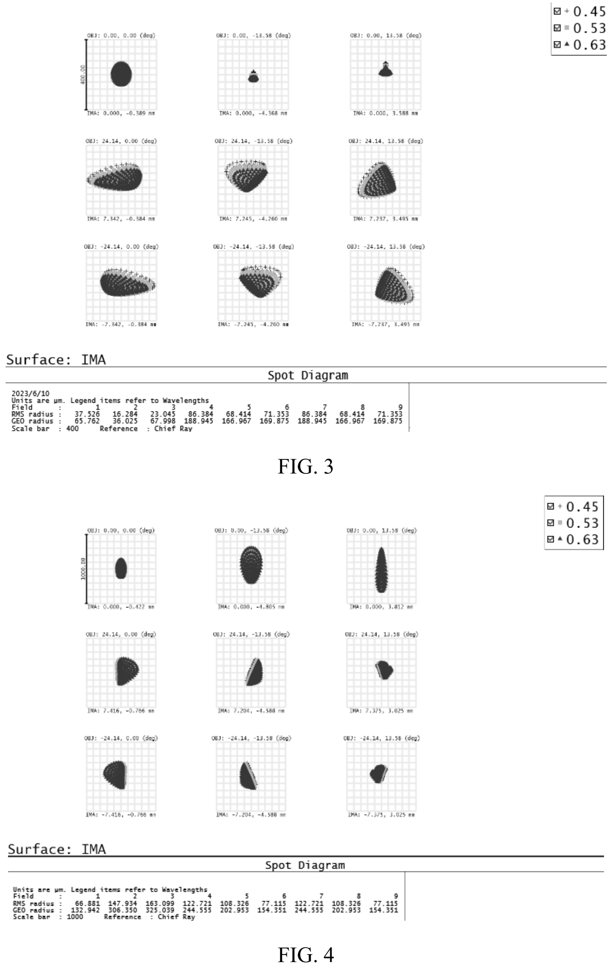

FIG. 3 is a spot diagram of imaging quality when a-b=0°. In FIG. 3, a field of view -13.58° corresponds to a width of 7.245 mm; a central field of view 0° corresponds to a width of 7.342 mm; a field of view 13.58° corresponds to a width of 7.237 mm; and distortion (7.245-7.237)/7.342 is approximately equal to 0.1%.

FIG. 4 is a spot diagram of imaging quality when a-b=10°. In FIG. 4, a field of view -13.58° corresponds to a width of 7.204 mm; a central field of view 0° corresponds to a width of 7.416 mm; a field of view 13.58° corresponds to a width of 7.375 mm; and distortion (7.375-7.204)/7.416 is approximately equal to 2.2%.

In conclusion, when a-b has different values, statistical results of the distortion are shown in the following Table 1:

**Table 1**

| Example | Value of a-b | Distortion |
|---------|-------------|------------|
| 1 | 0 | 0.1% |
| 2 | 6 | 1% |
| 3 | 10 | 2.2% |

It can be learned from Examples 1-3 that when a-b gradually increases from 0°, a module thickness imposes a relatively small limitation on image quality and distortion is relatively high. Although a module may be more easily thinner, image asymmetry increases (may become a trapezoidal shape or the like). When the image asymmetry reaches a specific degree, image quality is restricted in turn. Image quality (distortion) is substantially unacceptable once a-b is greater than 10°. It can be learned that a limitation of a-b≤10° can ensure a better display effect of the projection picture.

The first lens unit 4 in this embodiment can reflect the projected light, and can also perform aberration correction on the projected light.

In addition, it can be learned from the embodiments shown in FIG. 1 to FIG. 7 that there is a difference between optical paths obtained after projected light output by the image source 1 at different positions is reflected by two surfaces of the first prism unit 2. Therefore, in this embodiment, the second prism unit 3 is further attached to a side of the third surface 203 of the first prism unit, to adjust optical paths of projected light output at different positions, so that the optical paths of the projected light are basically the same, thereby reducing image distortion and ensuring a display effect of a projected image.

In each of the embodiments shown in FIG. 1 to FIG. 4, descriptions are provided by using an example in which the first surface 201, the second surface 202, and the third surface 203 of the first prism unit are planar surfaces and the first surface 301 and the second surface 302 of the second prism unit are also planar surfaces. However, in actual application, the first surface 201, the second surface 202, and the third surface 203 of the first prism unit are not necessarily planar surfaces, and may be curved surfaces with an aberration correction function. Similarly, the first surface 301 and the second surface 302 of the second prism unit may also be curved surfaces. Details are not described in this application again

In addition, to reduce a volume and a weight of an entire optical system and improve use safety without affecting an imaging effect, a fourth surface 204 of the first prism unit is further provided between the first surface 201 of the first prism unit and the third surface 203 of the first prism unit, and the fourth surface 204 of the first prism unit is parallel to the second surface 202 of the first prism unit, or the fourth surface 204 of the first prism unit is parallel to a second surface 302 of the second prism unit.

The existence of the fourth surface 204 of the first prism unit reduces thicknesses, volumes, and weights of the first prism unit 2 and the entire optical system, and does not affect a final optical display effect.

Second, the existence of the fourth surface 204 of the first prism unit avoids forming a sharp corner between the first surface 201 of the first prism unit and the third surface 203 of the first prism unit. It can be learned from the figure that the fourth surface 204 of the first prism unit is on a side close to the eye of the wearer. If the fourth surface 204 of the first prism unit does not exist, the sharp corner formed between the first surface 201 of the first prism unit and the third surface 203 of the first prism unit greatly endangers safety of the wearer.

Therefore, the existence of the fourth surface 204 of the first prism unit reduces the volume and the thickness of the entire optical system, ensuring lightening and thinning of the entire optical system, and also greatly improves wearing safety and comfort.

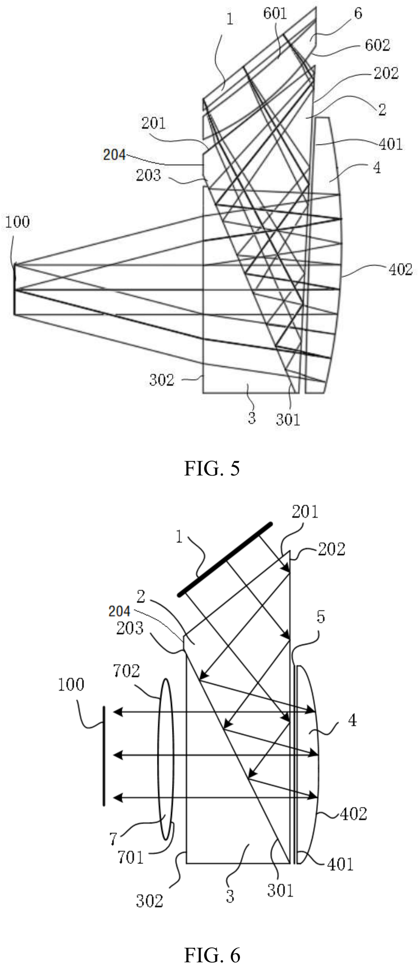

In addition, to further improve a display effect of displaying a projected image by the entire optical display device, as shown in FIG. 5, in another optional embodiment of this application, a second lens unit 6 may be further disposed between the image source 1 and the first surface 201 of the first prism unit. The second lens unit 6 can further eliminate aberration of the projected light.

Certainly, eliminating the aberration of the projected light is not limited to the foregoing implementation. As shown in FIG. 3, in another optional embodiment of this application, a third lens unit 7 may be further disposed on the side that is of the second prism unit 3 and on which the projected light is output, that is, a side close to the human eye 11.

In addition, as shown in FIG. 6, in actual application, the third lens unit 7 may be further disposed on the side of that is the second prism unit 3 and that is close to the human eye 11 while the second lens unit 6 is disposed between the image source 1 and the first prism unit 2, which can also implement the technical solution in this application.

Based on the foregoing descriptions, further considering that in an actual process of wearing and using the optical display device, the wearer may be near-sighted, and degrees of myopia of different wearers may be different, in another optional embodiment of this application, the following may be further included:

A relative distance between the image source 1 and the first surface 201 of the first prism unit is adjustable, and a change amount of the relative distance is less than 2.5 mm.

An imaging position of the projected light may be changed by changing positions of the image source 1 and the first surface 201 of the first prism unit, to accommodate wearers with different degrees of myopia for wearing and use. In other words, in this embodiment, a diopter of the entire optical display device may be changed by changing the relative distance between the image source 1 and the first surface 201 of the first prism unit.

In actual application, if a moving distance of the image source 1 relative to the first surface 201 of the first prism unit is excessively large, a boundary of the image source 1 on the side close to the human eye 11 is closer to the human eye 11 than the second surface 302 of the second prism unit. When the image source 1 operates, relatively large heat is generated, and wearing discomfort is caused when the image source 1 is close to the human eye 11. In addition, because the moving distance of the image source 1 is excessively large, a relatively large movable space needs to be reserved for moving of the image source 1, which causes a relatively large overall volume of the optical display device and is prone to cause wearing discomfort. In addition, image distortion and FOV reduction are severe. When the image source 1 moves to a range boundary, an edge of a display image may be incomplete and unclear, and an imaging effect can hardly be ensured. A maximum moving change amount of the image source 1 relative to the first surface 201 of the first prism unit may be equal to 2.5 mm, in other words, the moving change amount changes within a range of 0-2.5 mm, so that a diopter of the entire optical display device can be adjusted within a range of 0-6D, image distortion and FOV reduction can be reduced to some extent, and an image display effect can be improved.

In actual application, to ensure lightening and thinning of the entire optical system, and ensure integrity and a display effect of the display image, an included angle between a direction in which the image source 1 moves relative to the first prism unit 2 and an optical axis direction of the image source 1 is 0-15°.

In actual application, if the image source 1 is excessively large, when the image source 1 moves to a range endpoint, because of a limitation of an optical lens or the like, display content at a light-emitting surface edge of the image source 1 may be unable to normally enter the first prism unit 2 for light transmission, and consequently, an image finally entering the human eye is missing. Therefore, a moving direction of the image source 1 forms a specific included angle with the optical axis direction. To be specific, during moving, there is a moving component that is parallel to the light-emitting surface of the image source 1, to ensure that imaging light emitted by the image source 1 in an entire moving range can normally enter the first prism unit 2 for light transmission, and ensure that a final imaging picture is complete within a diopter adjustment range and the entire light-emitting surface of the image source 1 can be fully used.

However, the angle should not be excessively large, to ensure that when the image source 1 moves, a moving component parallel to the light-emitting surface of the image source 1 is relatively small, and a main moving component of the image source 1 is in the optical axis direction. If the angle is excessively large, that is, when the image source 1 moves, the moving component parallel to the light-emitting surface of the image source 1 is excessively large, to ensure that all imaging light emitted by the image source 1 can enter an incident surface of the first prism unit 2 in the entire diopter adjustment range, the incident surface of the first prism unit 2 needs to be quite large, and a volume of an entire apparatus is also quite large. Consequently, a volume of a used augmented reality device is also relatively large, making it difficult to satisfy a requirement for lightening and thinning.

In this embodiment, the included angle is preferably 7°, which can ensure integrity of a display image and ensure a display effect while ensuring lightening and thinning.

For the embodiment in which the second lens unit 6 is disposed between the image source 1 and the first surface 201 of the first prism unit, the diopter may also be changed by changing the distance of the image source 1 relative to the first prism unit 2. However, the diopter may alternatively be changed by moving the second lens unit 6 or synchronously moving the image source 1 and the second lens unit 6 relative to the first prism unit 2. This is not limited in this embodiment.

For the optical display device that includes the third lens unit 7, the diopter of the entire optical display device may also be changed by changing a distance of the third lens unit 7 relative to the second surface 302 of the second prism unit. Details are not described in this embodiment.

To further describe the optical display device in this application, the following describes specific structural parameters of the optical elements.

In a specific embodiment of this application, the following may be further included: The included angle a between the second surface 202 and the third surface 203 of the first prism unit satisfies $15° < a < 35°$, the included angle b between the first surface 301 and the second surface 302 of the second prism unit satisfies $15° < b < 25°$, $a-b \leq 10°$, and the second surface 302 of the second prism unit is a surface on a side on which projected light is output.

In addition, each of the first prism unit 2 and the second prism unit 3 may be a prism with a refractive index of 1.45-1.75 and an Abbe number of 18.0-60.0.

For the first lens unit 4, a focal length f1 may satisfy $10 \text{ mm} \leq f1 \leq 25 \text{ mm}$, a refractive index may be 1.45-1.90, an Abbe number may be 35.0-85.0, a curvature radius R11 of a first surface 401 may satisfy $R11 \geq 100 \text{ mm}$ or $R11 \leq -100 \text{ mm}$, and a curvature radius R12 of a second surface 402 may satisfy $40 \text{ mm} \leq R12 \leq 80 \text{ mm}$. The first surface 401 of the first lens unit is a surface on a side close to the first prism unit 2, and the second surface 402 of the first lens unit is a surface on a side away from the first prism unit 2.

In addition, a gap between the first surface 401 of the first lens unit and the second surface 202 of the first prism unit is 0.01-1.0 mm.

As described above, the second lens unit 6 may be further disposed between the image source 1 and the first surface 201 of the first prism unit in this application. For the second lens unit 6, specifically, a focal length f2 may satisfy $f2 \geq 50 \text{ mm}$ or $f2 \leq -50 \text{ mm}$, a refractive index may be 1.45-1.90, an Abbe number may be 35.0-85.0, and a curvature radius R21 of a first surface 601 and a curvature radius R22 of a second surface 602 may satisfy $|R21-R22| > 50 \text{ mm}$. The first surface 601 of the second lens unit is a surface on a side away from the first prism unit 2, and the second surface 602 of the second lens unit is a surface on a side close to the first prism unit 2. A gap between the first surface 601 of the second lens unit and the first surface 201 of the first prism unit is 0.05-3.0 mm.

For the embodiment in which the second lens unit 6 is disposed between the image source 1 and the first surface 201 of the first prism unit, the diopter may also be changed by changing the distance of the image source 1 relative to the first prism unit 2. The diopter may alternatively be changed by moving the second lens unit 6 or synchronously moving the image source 1 and the second lens unit 6 relative to the first prism unit 2. This is not limited in this embodiment.

As described above, the second lens unit 6 may also have aberration correction and refraction sharing functions. Adding the second lens unit 6 can improve imaging quality and reduce optical distortion.

In this embodiment, when positions of three optical elements such as the first prism unit 2, the second prism unit 3, and the first lens unit 4 remain fixed, if the second lens unit 6 is not provided or a position of the second lens unit 6 remains fixed, to change the diopter of the entire optical display device, the diopter can only be adaptively adjusted by moving the image source 1; or if a movable second lens unit 6 is provided, the diopter can be adaptively adjusted by moving the image source 1 and/or the second lens unit 6 with a relatively small volume.

Certainly, moving only one of the image source 1 and the second lens unit 6 and moving both the image source 1 and the second lens unit 6 cause different effects. When only the image source 1 or the second lens unit 6 is moved, a driving structure is simpler, and only a corresponding driving component needs to be configured. Correspondingly, image distortion and FOV reduction are relatively large, and consequently, an image edge may not be completely and clearly displayed.

When both the image source 1 and the second lens unit 6 are moved, higher relative stability during moving of the image source 1 and the second lens unit 6 is required, and higher stability and accuracy of a driving component are also required. The second lens unit 6 shares refraction, and an angle of light transmitted by the image source 1 through the second lens unit 6 remains consistent, so that image distortion and FOV reduction in the moving process can be reduced, and higher imaging quality in a diopter adjustment process is ensured.

For the embodiment of this application in which the third lens unit 7 is disposed on the side of the second surface 302 of the second prism unit, the third lens unit 7 may be a lens in which a focal length f3 satisfies f3≥50 mm or f3≤-50 mm, a refractive index is 1.45-1.90, an Abbe number is 35.0-85.0, a curvature radius R31 of a first surface 701 satisfies R31≥100 mm or R31≤-100 mm, and a curvature radius R32 of a second surface 702 satisfies R32≥100 mm or R32≤-100 mm. The first surface 701 of the third lens unit is a surface on a side close to the second prism unit 3, and the second surface 702 of the third lens unit is a surface on a side away from the second prism unit 3.

For the optical display device that includes the third lens unit 7, the diopter of the entire optical display device may also be changed by changing a distance of the third lens unit 7 relative to the second surface 302 of the second prism unit.

In each of the foregoing embodiments of moving the image source 1 and/or the second lens unit 6, only the diopter can be adjusted for the projected imaging light of the image source 1, and the diopter is not adjusted for external ambient light seen by the human eye 11.

For the optical display device on which the third lens unit 7 is disposed, not only the projected imaging light of the image source 1 enters the human eye 11 through the third lens unit 7, but also external ambient light needs to enter the human eye 11 through the third lens unit 7. Therefore, moving the third lens unit 7 can not only adjust the diopter for the projected light entering the human eye 11, but also adjust the diopter for the external ambient light, so that the wearer can clearly view both an image in an external environment and a projected image formed by the projected light output by the image source 1, thereby better implementing integration of virtual and real images, and avoiding eye fatigue and discomfort caused by frequent adjustment of a crystalline lens for switching between viewing the projected image and viewing the image in the external environment.

Table 2 shows a group of parameters corresponding to each optical element in the embodiment shown in FIG. 1.

**Table 2**

| Optical element | Curvature radius of a first surface | Curvature radius of a second surface | Curvature radius of a third surface | Refractive index | Abbe number |
|---|---|---|---|---|---|
| First prism unit 2 | Infinity | Infinity | -289.59 | 1.72 | 25.4 |
| Second prism unit 3 | Infinity | Infinity | -- | 1.72 | 29.5 |
| First lens unit 4 | 356.13 | -59.12 | -- | 1.72 | 81.6 |

Based on an optical display device formed in Table 2, a geometric point spread function of each field of view is approximately 50 μm. Maximum distortion of a projected image is approximately 14.0%. An MTF of each field of view is greater than 0.1 within 24 lp/mm. Relative luminance at an entire image plane is greater than 80%, and light distribution is uniform. It can be learned that the optical display device has relatively good imaging quality.

Table 3 shows a group of parameters corresponding to each optical element in the embodiment shown in FIG. 5.

**Table 3**

| Optical element | Curvature radius of a first surface | Curvature radius of a second surface | Curvature radius of a third surface | Refractive index | Abbe number |
|---|---|---|---|---|---|
| First prism unit 2 | Infinity | Infinity | Infinity | 1.72 | 29.5 |
| Second prism unit 3 | Infinity | Infinity | -- | 1.72 | 29.5 |
| First lens unit 4 | 610.15 | -51.73 | -- | 1.50 | 81.6 |
| Second lens unit 6 | -72.55 | -20.31 | -- | 1.52 | 58.7 |

Based on an optical display device formed in Table 3, a geometric point spread function of each field of view is less than 50 μm. Maximum distortion of a projected image is approximately 9.5%, and overall distortion is relatively small. An MTF of each field of view of an imaging system is greater than 0.1 within 30 lp/mm. Relative luminance at an entire image plane of the imaging system is greater than 80%, and light distribution is uniform.

Table 4 shows:

**Table 4**

| Optical element | Curvature radius of a first surface | Curvature radius of a second surface | Curvature radius of a third surface | Refractive index | Abbe number |
|---|---|---|---|---|---|
| First prism unit 2 | Infinity | Infinity | Infinity | 1.65 | 19.0 |
| Second prism unit 3 | Infinity | Infinity | -- | 1.65 | 19.0 |
| First lens unit 4 | -6501.77 | -65.17 | -- | 1.80 | 80.0 |
| Third lens unit 7 | -193.18 | -109.49 | -- | 1.80 | 63.2 |

Based on an optical display device formed in Table 4, a geometric point spread function of each field of view is less than 50 μm. Maximum distortion of a projected image is approximately 14.0%. An MTF of each field of view of an imaging system is greater than 0.1 within 30 lp/mm. Relative luminance at an entire image plane of the imaging system is greater than 80%, and light distribution is uniform.

In conclusion, in this application, a transmission optical path of the projected light can be repeatedly folded in the first prism unit 2 through cooperation between the first prism unit 2, the second prism unit 3, and the first lens unit 4, to provide a sufficient transmission optical path for the projected light. In addition, the projected light needs to be reflected in the first prism unit 2 only twice, to avoid a problem that a size of the first prism unit 2 is excessively large due to an excessive quantity of reflection times while ensuring a sufficient optical path of the projected light, thereby facilitating lightening of a structure of the entire display device. In addition, because the first surface 201 of the first prism unit is on a side close to the human eye 11 of the wearer, and the image source 1 outputs the projected light to the first surface 201 of the first prism unit, the image source 1 is located on a side that is of the first prism unit 2 and that is close to the head of the wearer, to facilitate installation of the image source 1 and simplifies an installation structure of the image source 1. The optical display device provided in this application has a simple structure, and a size of the entire display device is relatively small, to facilitate widespread application of the device.

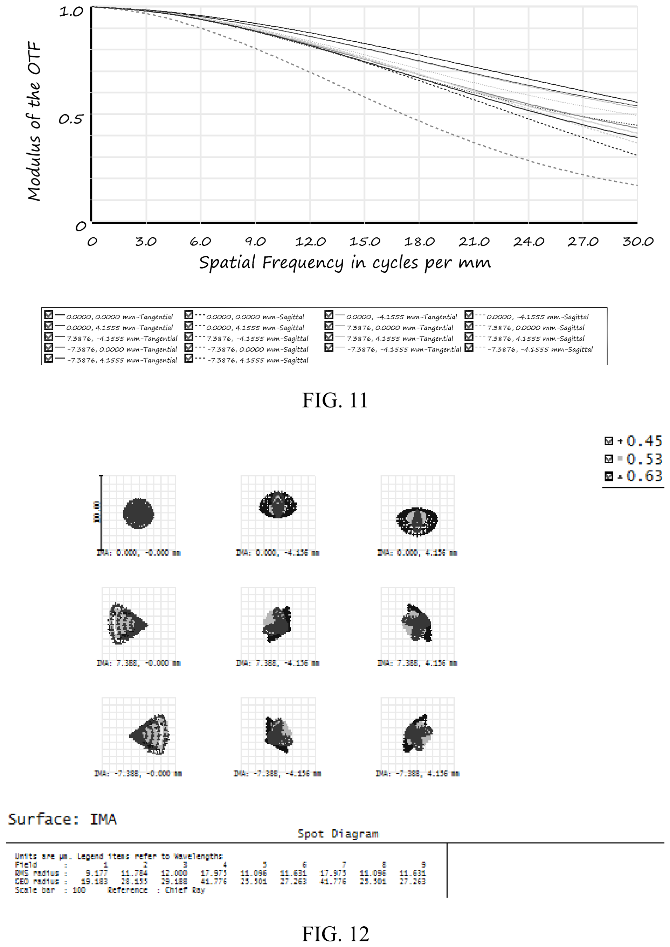

According to another implementation of the present disclosure, an embodiment of an optical display device is further disclosed. As shown in FIG. 5 to FIG. 11, the optical display device may include an image source 1, a first prism unit 2, a second prism unit 3, and a first lens unit 4.

The image source 1 is disposed on a side of a first surface 201 of the first prism unit, and the first lens unit 4 is attached to a second surface 202 of the first prism unit; a first surface of the second prism unit 3 is attached to a third surface 203 of the first prism unit; the first surface 201 and the third surface 203 of the first prism unit are closer to an eye of a wearer than the second surface 202 of the first prism unit; and a first semi-transmissive and semi-reflective film is disposed on a surface on a side that is of the first lens unit 4 and that is away from the first prism unit 2.

Projected light output by the image source 1 is incident into the first prism unit 2 through the first surface 201 of the first prism unit, is incident into the first lens unit 4 after being sequentially reflected totally by the second surface 202 of the first prism unit, reflected by the third surface 203 of the first prism unit, and transmitted by the second surface 202 of the first prism unit, and is output and incident into the human eye 11 after being reflected by the first semi-transmissive and semi-reflective film and then sequentially transmitted by the second surface 202 and the third surface 203 of the first prism unit and the second prism unit 3.

In addition, the optical display device provided in this embodiment further includes a film system unit. The film system unit is configured to fully or partially reflect light emitted by the image source 1 to the first lens unit 4, and configured to transmit light reflected by the first lens unit 4 back to the first prism unit 2.

The film system unit is disposed between the third surface 203 of the first prism unit and the first surface of the second prism unit 3.

The first surface 201 of the first prism unit is a spherical surface or an aspherical surface, and a surface of the first lens unit 4 is a free combination of a spherical surface, an aspherical surface, a free-form surface, a Fresnel surface, and a planar surface.

The image source 1 is movable relative to the first surface 201 of the first prism unit to implement diopter adjustment, and a focal length of the first surface 201 of the first prism unit is 25-200 mm.

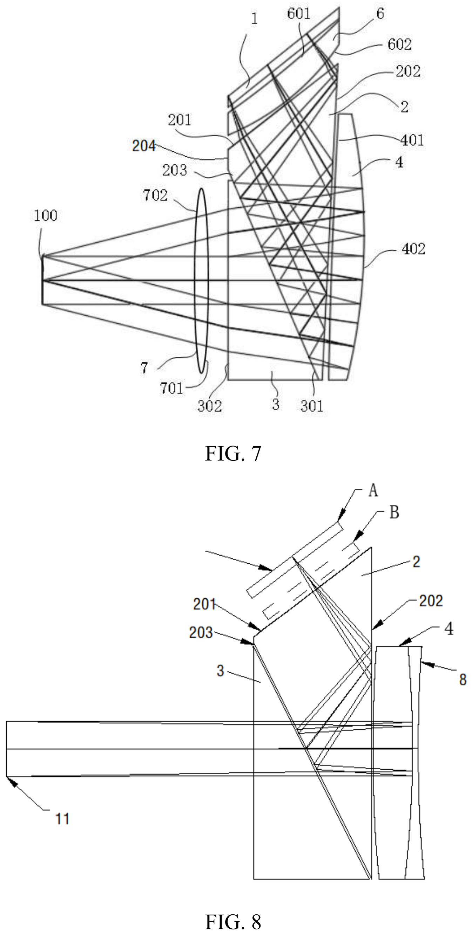

As shown in FIG. 8, a solid line box A represents the image source 1 at a position with a diopter 0D, and a dotted line box B represents the image source 1 at a position with a diopter -7D. The image source 1 may be one of an OLED display, an LCOS display, a Microled display, a DLP display, and an LBS display. The OLED display is preferred.

The second prism unit 3 is a prism that has an aberration correction function and optical path difference compensation for upper and lower fields of view. The prism may be made of a plastic material or a glass material with no limitation on quantity, and includes but is not limited to the following surface types: a spherical lens, an aspherical lens, a free-form lens, a Fresnel lens, a planar lens, and the like. The spherical lens is preferred.

The first prism unit 2 and the film system unit are further included. The first prism unit 2 may be made of a plastic material or a glass material. The film system unit is located between a third optical surface of the first prism unit 2 and a first surface of the second prism unit 3, may be attached to the first prism unit 2 or the second prism unit 3, or may be coated on the first prism unit 2 or the second prism unit 3. The film system unit causes light emitted by the image source 1 to be reflected (or partially reflected) when the light arrives at the third optical surface of the first prism unit 2 for the first time, and causes light reflected to the first prism unit 2 through the first lens unit 4 to be transmitted.

The first lens unit 4 includes a series of lenses that have functions of aberration correction and optical path reflection. The lens may be made of a glass material or a plastic material, and includes but is not limited to the following types: a spherical lens, an aspherical lens, a free-form lens, a Fresnel lens, a planar lens, and the like. The spherical lens is preferred. In addition, the first semi-transmissive and semi-reflective film is disposed on a side away from the first prism unit 2. The first semi-transmissive and semi-reflective film may be implemented in a film coating manner or a film attachment manner.

The diopter-adjustable near-eye display apparatus may further include an aperture stop, where the aperture stop is located between the second prism unit 3 and the human eye 11, or the aperture stop is at a position of the human eye 11.

A focal length range of the first surface 201 of the first prism unit is 25-200 mm, which can cooperate with moving of the image source 1 to implement diopter adjustment. For example, a gap between the image source 1 and the first surface 201 of the first prism unit is 0.25-3.0 mm, that is, when the image source 1 is gradually close to the first prism unit 2, the gap between the image source 1 and the first surface 201 of the first prism unit gradually decreases, and a diopter may be adjusted from 0D to -7D; or when the image source 1 is gradually away from the first prism unit 2, the gap between the image source 1 and the first surface 201 of the first prism unit gradually increases, and the diopter may be adjusted from -7D to 0D.

If the focal length of the first surface 201 of the first prism unit is not within the range, an imaging effect of a specific field of view may deteriorate in a focusing process, for example, resulting in non-uniformity of an image, reduced edge sharpness, or rectangular distortion of an image. In addition, a change in a field of view in a range of 0D to -7D may be relatively large (approximately 3°), causing a relatively large difference in definition and image size of an image seen by a user with a relatively large difference in visual acuity between two eyes. Therefore, it is difficult to implement binocular image fusion, and wearing and viewing experience is poor.

An included angle between the first surface 201 and the second surface of the first prism unit is preferably 15-35°. If the included angle is excessively small, the light emitted by the image source 1 is reflected back and forth in the first prism unit 2 a plurality of times, or a requirement for reflecting totally, on the first prism unit 2, the light emitted by the image source 1 cannot be satisfied. If the included angle is excessively large, the light emitted by the image source 1 can be reflected in the first prism unit 2 only once before being emitted, and a requirement for two times of reflection in the first prism unit 2 for optical path folding cannot be satisfied. Therefore, if the included angle is within the range, it can be ensured that light emitted by the image source 1 are reflected in the first prism unit 2 twice, which helps to obtain a compact and lightweight near-eye display apparatus. In addition, the first surface 201 of the first prism unit in embodiments is further preferably disposed obliquely toward a side of human eye 11.

During operation, light emitted by the image source 1 enters the first prism unit 2 through the first surface 201 of the first prism unit, undergoes the first reflection on the second surface 202 of the first prism unit, and is reflected to the third surface 203 of the first prism unit. The film system unit is disposed between the third surface 203 of the first prism unit and the second prism unit 3, so that the light can undergo the second reflection on the third surface of the first prism unit 2, and enters the first lens unit 4 after being transmitted by the second surface 202 of the first prism unit. The first semi-transmissive and semi-reflective film is disposed on the first lens unit 4, so that the light is reflected back to the first prism unit 2, and then is incident into the human eye 11 for imaging after being transmitted sequentially through the first prism unit 2 and the second prism unit 3. A distance between the image source 1 and the first surface 201 of the first prism unit is adjusted to implement diopter adjustment, that is, adjustment of a position of the image source 1, in combination with a surface type of the first surface 201 of the first prism unit, allows for proper setting of a focal length range of the first surface 201 of the first prism unit. This can implement a function of adjusting a virtual image distance (diopter), and maintain relatively high imaging quality and a relatively small change in a field of view within an adjustment range. For example, the virtual image distance adjustment range is 5000-142 mm, and the diopter is adjusted from 0D to -7D, and high imaging quality is maintained. Within a virtual image distance adjustment range from 0D to -7D, the change in the field of view can be controlled within 0.8°, to ensure good consistency between images respectively seen by the two eyes when there is a large diopter difference between the two eyes, thereby achieving a good binocular image fusion effect.

In an embodiment, a fourth lens unit 8 is further included, the fourth lens unit 8 is disposed close to the first semi-transmissive and semi-reflective film, and a focal length of the fourth lens unit 8 and a focal length of the first lens unit 4 have opposite values.

The fourth lens unit 8 includes a series of lenses that have an aberration correction function, to correct an aberration generated when the human eye 11 sees the outside through the first lens unit 4, so as to ensure that the aberration of seeing the outside by the human eye 11 is small enough. The lens constituting the fourth lens unit 8 may be made of a plastic material or a glass material. A quantity of lenses is not limited, and the lens includes but is not limited to the following surface types: a spherical lens, an aspherical lens, a free-form lens, a Fresnel lens, a planar lens, and the like. The spherical lens is preferred.

In an embodiment, a focal length of the first lens unit 4 is 10-25 mm, to help accommodate a large field of view and an image plane size, and control distortion.

In an embodiment, the film system unit includes at least one of a third semi-transmissive and semi-reflective film, a reflective polarization film, a quarter-wave plate, and an absorptive polarization film.

For example, the film system unit may be a reflective polarization film, or the film system unit may be a combination of a reflective polarization film and a quarter-wave plate, where the quarter-wave plate may be located between the reflective polarization film and the first prism unit 2, or the film system unit may be a semi-transmissive and semi-reflective film, or the like, and may be specifically adjusted based on an actual requirement.

Preferably, a transmittance-to-reflectance ratio of each semi-transmissive and semi-reflective film is 1:9-9:1. The semi-transmissive and semi-reflective film enables the light to be partially reflected and partially transmitted. The ratio of reflection to transmission of the semi-transmissive and semi-reflective film may be determined based on a combination of factors, such as an angle of the incident light, luminance of the image source 1, and luminance of an external environment.

In an embodiment, preferably, a gap between the image source 1 and the first surface 201 of the first prism unit is 0.25-3.0mm.

If a moving range of the image source 1 is insufficient, a problem that a final virtual image distance adjustment range (0D to -7D) is insufficient may be caused. Selecting the range for the gap between the image source 1 and the first surface 201 of the first prism unit facilitates obtaining a relatively large diopter adjustment range, to adapt to wider population.

If the distance is out of the range, distortion of an output image picture cannot be controlled, and an imaging requirement cannot be satisfied. In addition, a change in an FOV may also be relatively large, and a requirement for binocular image fusion in a diopter adjustment range cannot be satisfied.

In another embodiment, the optical display device further satisfies the following conditions:

$$R1 \leq -100 \text{ mm or } R1 \geq 100 \text{ mm;}$$

$$-40 \text{ mm} \leq R2 \leq -100 \text{ mm;}$$

and

$$R3 \leq -200 \text{ mm or } R3 \geq 18 \text{ mm.}$$

R1 represents a curvature radius of a lens surface that is of the first lens unit 4 and that is close to a fourth lens unit 8, R2 represents a curvature radius of a lens surface that is of the first lens unit 4 and that is away from the fourth lens unit 8, and R3 represents a curvature radius of the first surface 201 of the first prism unit.

Preferably, a formula for the aspherical surface is as follows:

$$z = \frac{CY^2}{1 + \sqrt{1 - (1 + k)C^2Y^2}} + \sum_{i=2}^{N} a_i Y^{2i}$$

z represents a sagittal height, Y represents a lens center height, k represents a conic coefficient, C represents a curvature, $a_i$ represents a $(2i)^{th}$ order aspherical coefficient, and N is a positive integer.

In the foregoing embodiment, any surface is of an even aspherical surface type, and satisfies the foregoing formula.

Detailed descriptions are provided below by using specific embodiments.

In the embodiments, the virtual image distance (diopter) is adjusted by adjusting the position of the image source 1 in combination with the surface type of the first surface 201 of the first prism unit in a prism total reflection architecture. The first surface 201 of the first prism unit is an aspherical surface, the first lens unit 4 is a biconvex aspherical lens, the fourth lens unit 8 is a biconcave spherical lens. The first prism unit 2 and the second prism unit 3 have a refractive index of 1.45-1.75 and an Abbe number of 18.0-60.0, and the first lens unit 4 has a refractive index of 1.45-1.90 and an Abbe number of 35.0-85.0. The focal length of the first surface 201 of the first prism unit is 170 mm, and the image source 1 is movable relative to the first surface 201 of the first prism unit, so that the gap between the image source 1 and the first surface 201 of the first prism unit can be 0.25-3.0 mm.

Aspherical parameters are shown in Table 5:

**Table 5**

| Lens surface | R | k | 4th order ($a_2$) | 6th order ($a_3$) | 8th order ($a_4$) | 10th order ($a_5$) | 12th order ($a_6$) |
|---|---|---|---|---|---|---|---|
| Len1_S1 | 121.258 | 20.875 | 8.904E-06 | -9.721E-09 | 1.509E-11 | -6.648E-14 | 4.967E-16 |
| Len1_S2 | -76.681 | 15.429 | 9.487E-07 | -1.952E-09 | -1.724E-11 | 1.0755E-13 | 7.325E-17 |
| P2_S3 | 92.176 | 83.964 | -8.063E-04 | 2.352E-05 | -1.074E-07 | -2.971E-09 | 2.369E-11 |

R represents a curvature radius with a unit of mm, Len1_S1 represents a lens surface that is of the first lens unit 4 and that is close to the fourth lens unit 8, Len1_S2 represents a lens surface that is of the first lens unit 4 and that is away from the fourth lens unit 8, and P2_S3 represents the first surface 201 of the first prism unit.

Diopter adjustment parameters are shown in Table 6:

**Table 6**

| Virtual image distance (mm) | Corresponding diopter | Gap (mm) between the image source 1 and P2_S3 |
|---|---|---|
| 5000 | 0D | 2.519 |
| 1000 | -1D | 2.159 |
| 500 | -2D | 1.866 |
| 333.33 | -3D | 1.566 |
| 250 | -4D | 1.266 |
| 200 | -5D | 0.959 |
| 166.67 | -6D | 0.659 |
| 142.86 | -7D | 0.284 |

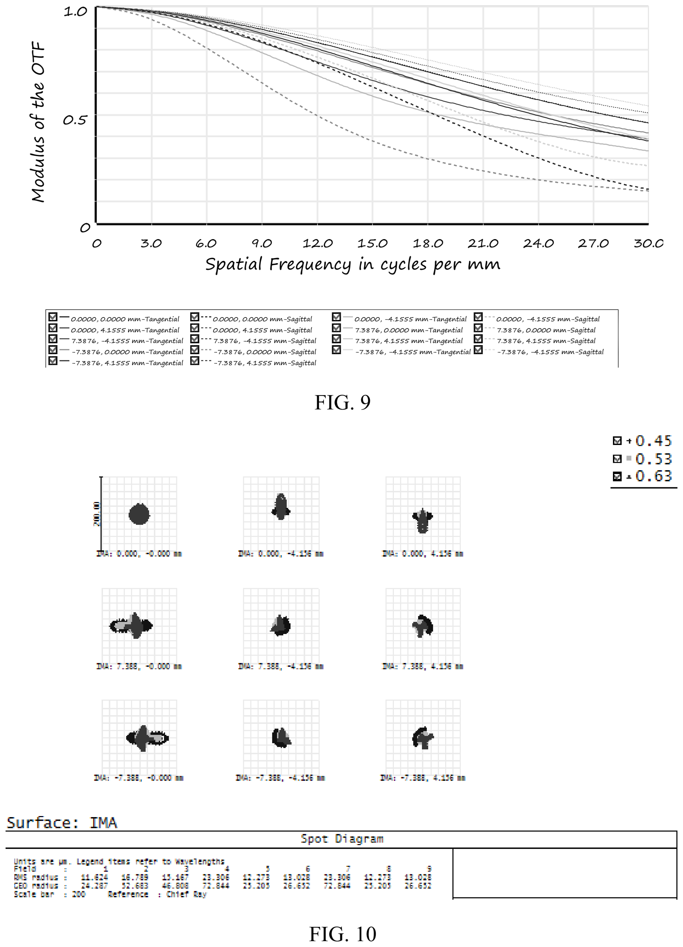

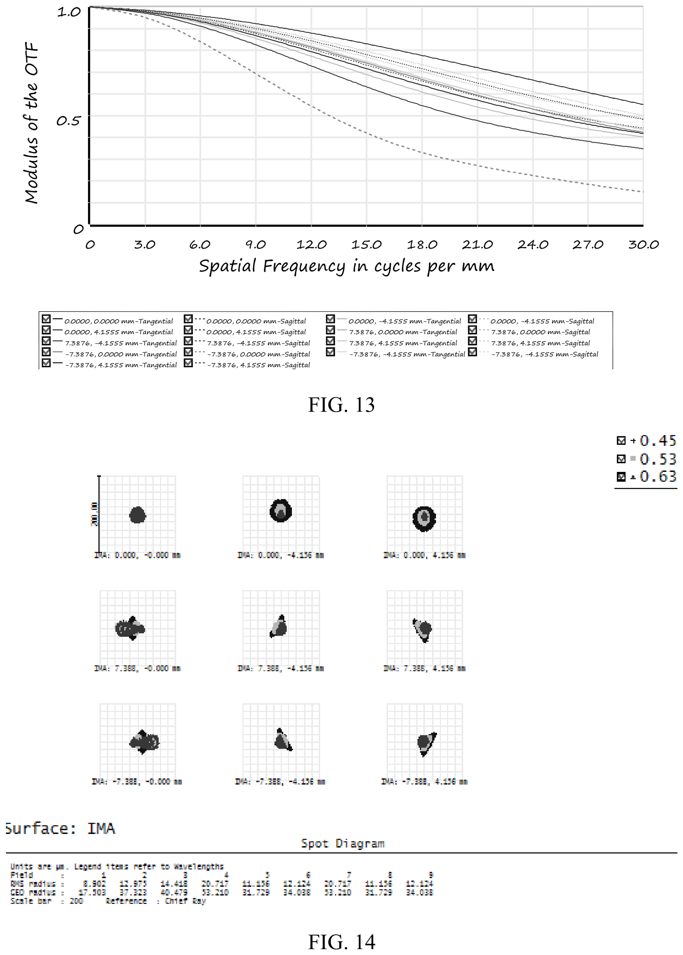

According to the foregoing data, as shown in FIG. 9 to FIG. 14, in the embodiments, when the near-eye display apparatus is at a diopter of 0D, -3D, and -7D, MTF values are all above 0.15 at 30 lp/mm, and have relatively high imaging quality. It can be learned from the spot diagrams that the near-eye display apparatus has high resolution and clear imaging. This indicates that imaging quality of the near-eye display apparatus is good in an adjustment process of 0D to -7D, and does not significantly decrease.

In the foregoing embodiments, diopter adjustment is implemented by adjusting the distance between the image source 1 and the first surface 201 of the first prism unit and without adding any accessory. To be specific, adjustment of a position of the image source 1, in combination with a surface type of the first surface 201 of the first prism unit, allows for proper setting of a focal length range of the first surface 201 of the first prism unit. This can implement a function of adjusting a virtual image distance (diopter), and maintain relatively high imaging quality and a relatively small change in field of view within an adjustment range. For example, a virtual image distance adjustment range is 5000-142 mm, and the diopter is adjusted within 0D to -7D, and high imaging quality is maintained. Within a virtual image distance adjustment range from 0D to -7D, the change in the field of view can be controlled within 0.8°, to ensure a good binocular image fusion effect within the adjustment range when there is a large diopter difference between the two eyes. In addition, the near-eye display apparatus may implement optical path folding, to further help implement compactness and lightening while ensuring a sufficient optical path for imaging light.

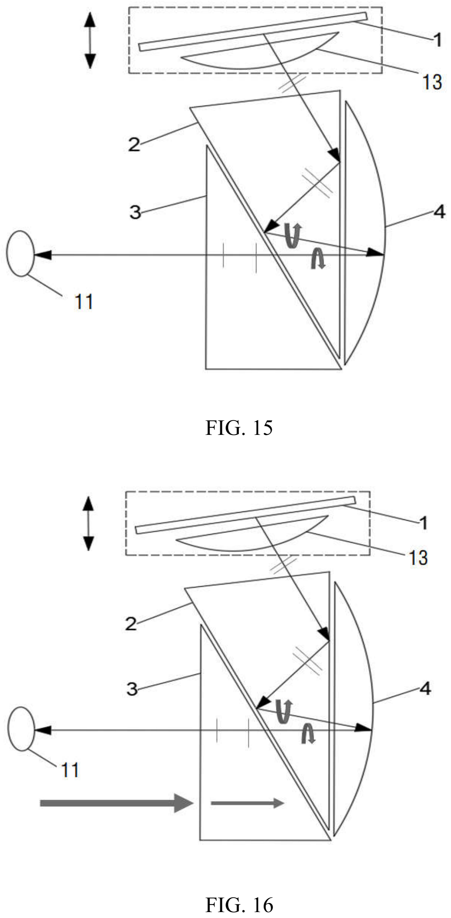

In an embodiment, as shown in FIG. 15 to FIG. 17, the optical display device may include an image source 1, a first prism unit 2, a second prism unit 3, and a first lens unit 4.

The image source 1 is disposed on a side of a first surface 201 of the first prism unit, and the first lens unit 4 is attached to a second surface 202 of the first prism unit; a first surface of the second prism unit 3 is attached to a third surface 203 of the first prism unit; the first surface 201 and the third surface 203 of the first prism unit are closer to an eye of a wearer than the second surface 202 of the first prism unit; and a first semi-transmissive and semi-reflective film is disposed on a surface on a side that is of the first lens unit 4 and that is away from the first prism unit 2.

Projected light output by the image source 1 is incident into the first prism unit 2 through the first surface 201 of the first prism unit, is incident into the first lens unit 4 after being sequentially reflected totally by the second surface 202 of the first prism unit, reflected by the third surface 203 of the first prism unit, and transmitted by the second surface 202 of the first prism unit, and is output and incident into the human eye 11 after being reflected by the first semi-transmissive and semi-reflective film and then sequentially transmitted by the second surface 202 and the third surface 203 of the first prism unit and the second prism unit 3.

In addition, a first polarization unit 9 is further included. The first polarization unit 9 is located between the first prism unit 2 and the second prism unit 3, and is configured to: reflect imaging light in a first polarization transmission direction to the first lens unit 4 and transmit imaging light in a second polarization transmission direction, the first polarization transmission direction and the second polarization transmission direction form 90°, and the first polarization transmission direction is the same as a polarization transmission direction of the image source 1; and the first semi-transmissive and semi-reflective film is configured to reflect the imaging light in the first polarization transmission direction, so that the light enters the human eye 11 sequentially through the first prism unit 2 and the second prism unit 3, and configured to transmit real-scene light, so that the light enters the human eye 11 sequentially through the first prism unit 2 and the second prism unit 3.

A second surface 302 of the second prism unit is further attached to a second polarization unit 10, where the second polarization unit 10 is configured to: transmit light parallel to a third polarization transmission direction and reflect light perpendicular to the third polarization transmission direction, and the third polarization transmission direction is the same as the second polarization transmission direction.

The image source 1 is configured to emit imaging light, for example, one of an OLED display, an LCOS display, a Microled display, a DLP display, or an LBS display. The OLED display is preferred. In addition, the image source 1 includes but is not limited to the foregoing components. The first prism unit 2 and the second prism unit 3 may be in any shape. A triangular prism or a quadrangle prism is preferred.

The first lens unit 4 is a lens group that has functions of aberration correction and optical path reflection. The lens group may be made of a glass material or a plastic material, and includes but is not limited to the following types: a spherical lens, an aspherical lens, a free-form lens, a Fresnel lens, a planar lens, and the like. The spherical lens is preferred. The semi-transmissive and semi-reflective film may be implemented in a film coating manner or a film attachment manner.

The first prism unit 2 is configured to reflect the imaging light to the first polarization unit 9, and a principle of total air reflection is used.

The first polarization unit 9 is configured to: reflect imaging light in a first polarization transmission direction and transmit imaging light in a second polarization transmission direction. For example, the first polarization transmission direction is 45°, and the second polarization transmission direction is -45°. The imaging light reflected by the first polarization unit 9 is then reflected by the semi-transmissive and semi-reflective film on the first lens unit 4 and then transmitted through the first prism unit 2 to arrive at the first polarization unit 9, and enters the human eye 11 after being converted by the first polarization unit 9.

In the conventional technology, a lens close to the side of the human eye 11 inevitably reflects light, leading to cheek reflection (as shown in FIG. 16, horizontally thick rightward arrow indicates external stray light entering a second prism, and a thin arrow indicates filtered external stray light), thereby causing stray light and a double image. The optical module adds a second polarization unit 10 to the human eye side, where the second polarization unit 10 transmits all light parallel to the third polarization transmission direction, and reflects all light perpendicular to the third polarization transmission direction. In this way, 50% of external stray light is first blocked, that is, all light perpendicular to the third polarization transmission direction is reflected. In addition, 50% of external stray light perpendicular to the third polarization transmission direction is fully transmitted, but energy is far less than that of the imaging light emitted by the image source 1, so that the stray light is perfectly masked. In this way, there is no problem such as stray light and a double image that occur in the image, which avoids blur, glare, eye fatigue, and discomfort caused by interference and light pollution caused by cheek reflection, and does not affect user perception and cognition on a virtual image, thereby improving user experience and comfort. In addition, the optical module further folds an optical path a plurality of times (three times of reflection), to increase a field of view and help implement lightening and thinning.

Preferably, the first polarization unit 9 includes a first linear polarization plate 91, a polarization reflection plate 92, and a second quarter-wave plate 93 that are sequentially disposed in a direction from the second prism unit 3 to the first prism unit 2.

The first linear polarization plate 91 has a function of screening a light vibration direction, and mainly allows only light in a specific direction to pass through based on a polarization state of light, and blocks light in another direction. For example, in the embodiments, -45° linearly polarized light can be transmitted, and 45° linearly polarized light cannot be transmitted.

The polarization reflection plate 92 has a capability of selectively reflecting or transmitting light in a specific polarization direction. A polarization reflection characteristic of the polarization reflection plate is implemented by alternately stacking a plurality of layers of materials. In actual application, reflectivity of the film layer at different polarization states may be controlled by adjusting a thickness and composition of the film layer, thereby implementing precise control of light.

The second quarter-wave plate 93 is configured to change a polarization state of the polarized light, and mainly converts the linearly polarized light into circularly polarized light, or converts circularly polarized light into linearly polarized light. A quarter-wave plate is usually used in combination with another polarization element (such as a line polarization plate and the polarization reflection plate 92), so that complex optical control and adjustment can be implemented.

In another embodiment, a third polarization unit 12 is further disposed on the image source 1, and the third polarization unit 12 is configured to convert imaging light into 45° linearly polarized light.

The third polarization unit 12 is located on a light-emitting side of the image source 1, may be attached to the image source 1, and is configured to convert imaging light into 45° linearly polarized light, so that the first polarization unit 9 can reflect the imaging light.

Preferably, the second polarization unit 10 includes a second linear polarization plate, and the third polarization unit 12 includes a third linear polarization plate.

The second polarization unit 10 uses the second linear polarization plate to transmit light parallel to a third polarization transmission direction, and reflect light perpendicular to the third polarization transmission direction. The third polarization unit 12 uses the third linear polarization plate to convert imaging light. For example, the third linear polarization plate is a 45° linear polarization plate and emits 45° linearly polarized light.

In an embodiment, the 45° linearly polarized light undergoes first reflection on a side that is of the first prism unit 2 and that is close to the first lens unit 4 to form first light, the first light undergoes second reflection on the first polarization unit 9 to form second light, the second light undergoes third reflection on the first semi-transmissive and semi-reflective film to form third light, and the third light is converted by the first polarization unit 9 into fourth light and then transmitted through the second polarization unit 10 to enter the human eye 11, the first light is 45° linearly polarized light, the second light is left-handed circularly polarized light, the third light is right-handed circularly polarized light, the fourth light is -45° linearly polarized light, and the second polarization unit 10 is configured to: transmit -45° linearly polarized light and reflect 45° linearly polarized light. It is easily understood that a type and a direction of specific light may be further adjusted based on an actual requirement, to satisfy actual application.

Preferably, the first lens unit 4 is a curved lens, a side close to the first prism unit 2 is a planar surface, and a side away from the first prism unit 2 is a convex surface. The curved lens is a lens that has functions of aberration correction and optical path reflection. The lens may be made of a glass material or a plastic material. It is easily understood that a quantity of lenses and a lens surface type of the first lens unit 4 may be further adjusted based on an actual requirement.

In an embodiment, the image source 1 is movable relative to the first prism unit 2. Moving the image source 1 can change a virtual image distance of a final output virtual image, to accommodate people with different vision for viewing and use.

In an embodiment, a fifth lens unit 13 is further included, the fifth lens unit 13 is disposed between the image source 1 and the first prism unit 2, and the fifth lens unit 13 includes at least one lens.

A focal length of the fifth lens unit 13 is preferably 5-50 mm, to help improve imaging quality. Because the fifth lens unit 13 with a positive focal length is added, and imaging light is constrained and converged before entering the first prism unit 2, an included angle and a moving amount that are required in diopter adjustment are both less than those in the solution in which only the image source 1 moves.

Preferably, the fifth lens unit 13 and the image source 1 can be moved synchronously relative to the first prism unit 2 to perform diopter adjustment.

Specifically, to achieve integrity and excellent imaging quality of a final image, it is possible to make a direction in which the fifth lens unit 13 and the image source 1 move synchronously form a specific included angle with an optical axis direction of the image source 1. To be specific, during moving, there is a moving component that is parallel to the light-emitting surface of the image source 1, to ensure that imaging light emitted by the image source 1 in an entire moving range can normally enter the first prism unit 2 for light transmission, and ensure that a final imaging picture is complete within a diopter adjustment range and the entire light-emitting surface of the image source 1 can be fully used, thereby implementing diopter adjustment from 0D to 6D.

In addition, the image source 1 and the fifth lens unit 13 move synchronously. This moving manner can ensure that during the moving, an angle formed after light emitted from a same position of the image source 1 is transmitted through the fifth lens unit 13 remains consistent. To be specific, in a case of different diopters, a degree of divergence of light emitted by the fifth lens unit 13 remains consistent, which can ensure that a final imaging FOV remains consistent and is not greatly reduced.

A working principle of the foregoing embodiment is as follows:

Working principle:

The image source 1 emits imaging light, and converts the imaging light into 45° linearly polarized light (a polarization transmission direction is perpendicular into a paper plane) through the third polarization unit 12. After being transmitted through the fifth lens unit 13, the 45° linearly polarized light undergoes first reflection on a side that is of the first prism unit 2 and that is close to the first lens unit 4, the 45° linearly polarized light after the first reflection undergoes second reflection on the first polarization unit 9 to form a left-handed circularly polarized light, the left-handed circularly polarized light undergoes third reflection on the semi-transmissive and semi-reflective film to form right-handed circularly polarized light, and the right-handed circularly polarized light is converted by the first polarization unit 9 into -45° linearly polarized light again via the second quarter-wave plate 93 and then is transmitted through the second polarization unit 10 to enter the human eye 11. The first polarization unit 9 is configured to: transmit -45° linearly polarized light, reflect 45° linearly polarized light, and implement direct conversion between linearly polarized light and circularly polarized light; and can convert a polarization state of the circularly polarized light in combination with an evaporated semi-transmissive and semi-reflective film.

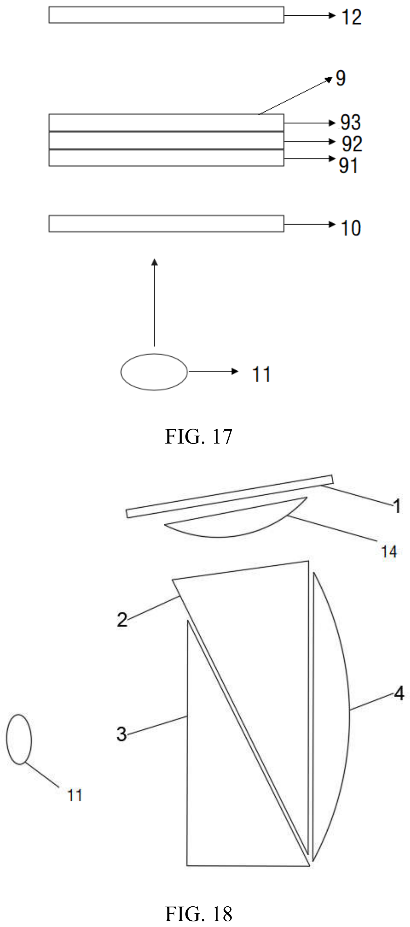

The second polarization unit 10 is configured to: transmit -45° linearly polarized light and reflect 45° linearly polarized light, so that light used for imaging can be effectively incident into the human eye 11. In addition, due to light selectivity of the second polarization unit 10, 50% of external stray light can be directly filtered out, and the remaining 50% of external stray light is coupled to a position in which energy of the imaging system is strongest, that is, imaging light emitted by the image source 1, so that perfect masking has little impact on user experience. FIG. 17 shows composition of polarization units. In the figure, for ease of understanding only, relative positions of the polarization units are not strictly set based on an actual correspondence.

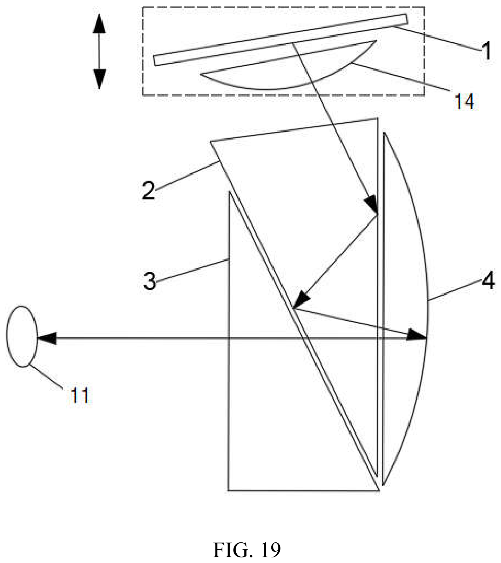

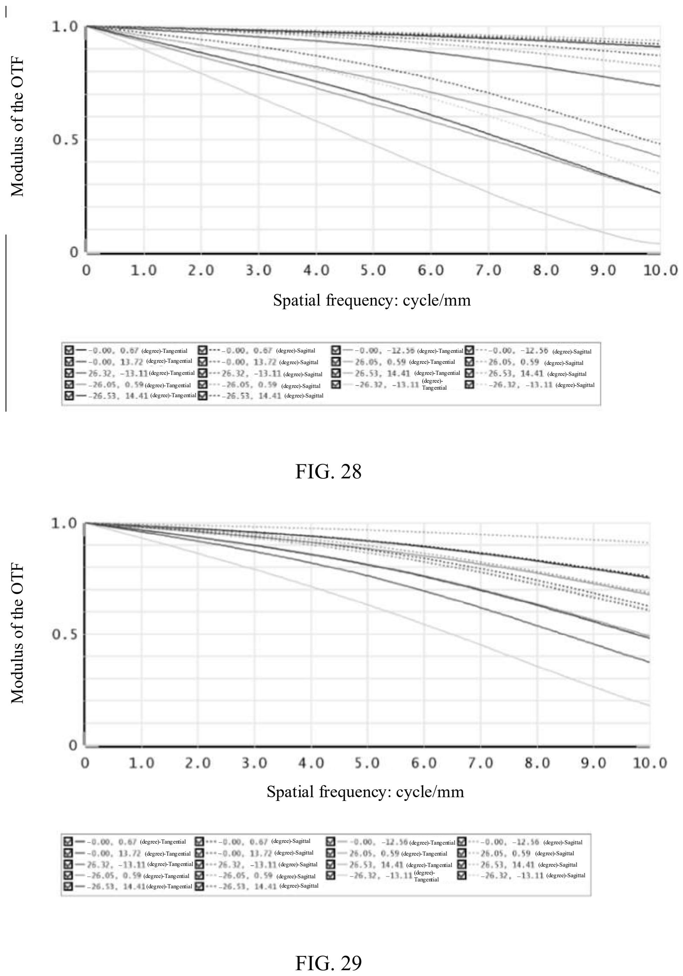

In an embodiment, as shown in FIG. 18 to FIG. 29, the optical display device may include an image source 1, a first prism unit 2, a second prism unit 3, and a first lens unit 4.

The image source 1 is disposed on a side of a first surface 201 of the first prism unit, and the first lens unit 4 is attached to a second surface 202 of the first prism unit; a first surface of the second prism unit 3 is attached to a third surface 203 of the first prism unit; the first surface 201 and the third surface 203 of the first prism unit are closer to an eye of a wearer than the second surface 202 of the first prism unit; and a first semi-transmissive and semi-reflective film is disposed on a surface on a side that is of the first lens unit 4 and that is away from the first prism unit 2.

Projected light output by the image source 1 is incident into the first prism unit 2 through the first surface 201 of the first prism unit, is incident into the first lens unit 4 after being sequentially reflected totally by the second surface 202 of the first prism unit, reflected by the third surface 203 of the first prism unit, and transmitted by the second surface 202 of the first prism unit, and is output and incident into the human eye 11 after being reflected by the first semi-transmissive and semi-reflective film and then sequentially transmitted by the second surface 202 and the third surface 203 of the first prism unit and the second prism unit 3.

In addition, a polarization conversion unit is further included in this embodiment.

The image source 1 is provided with a linear polarization film on a light-emitting side.

A film system unit is further included, and the film system unit includes a polarization reflection unit and is attached to the third surface 203 of the first prism unit.

The polarization conversion unit is disposed between the first prism unit 2 and the first lens unit 4, or is disposed between the polarization reflection unit and the first prism unit 2.

A thickness of the linear polarization film is 60-250 nm, a thickness of the film system unit is 90-280 nm, a thickness of the polarization conversion unit is 30-100 nm, and a thickness of the semi-transmissive and semi-reflective film is 50-300 nm.

Imaging light emitted by the image source 1 is converted by the linear polarization film into linearly polarized light, and the linearly polarized light enters the first prism unit 2 and undergoes total reflection, and then arrives at the film system unit, and is reflected by the film system unit to the first lens unit 4, and then is reflected by the first semi-transmissive and semi-reflective film on the first lens unit 4 back to the first prism unit 2, and is transmitted sequentially through the film system unit and the second prism unit 3 to arrive at the human eye 11 for imaging.

The image source 1 is configured to provide an image picture. The first prism unit 2 may be made of a plastic material or a glass material. The film system unit may be attached to the first prism unit 2 or coated on the first prism unit 2. The film system unit implements functions of light polarization and reflection. The second prism unit 3 includes a second prism and is disposed close to the film system unit. For example, the second prism unit 3 is located between the first prism unit 2 and the human eye 11. The polarization conversion unit may be located between the first prism unit 2 and the first lens unit 4, or may be located between the polarization reflection unit and the first prism unit 2, and may be disposed based on an actual requirement.

The first lens unit 4 is a lens group that has functions of aberration correction and optical path reflection. The lens group may be made of a glass material or a plastic material, and includes but is not limited to the following types: a spherical lens, an aspherical lens, a free-form lens, a Fresnel lens, a planar lens, and the like. The spherical lens is preferred. For example, the first lens unit 4 is a curved lens, and a first semi-transmissive and semi-reflective film is disposed on an inner side (a side close to the first prism unit 2) of the curved lens. The semi-transmissive and semi-reflective film may be implemented in a film coating manner or a film attachment manner.

In addition, properly setting thicknesses of the linear polarization film, the film system unit, the polarization conversion unit, and the semi-transmissive and semi-reflective film can not only ensure transmissive and reflective effects, but also ensure feasibility of a film material process, thereby well balancing imaging quality and reliability. Details are as follows:

(1) An excessively thin linear polarization film may encounter problems such as unstable optical performance, a poor polarization effect, and a formation failure. In addition, the excessively thin linear polarization film is easily affected by an external environment, such as mechanical damage or chemical corrosion, thereby reducing durability of the excessively thin linear polarization film. However, an excessively thick linear polarization film increases reflectivity, increases a loss of light, and also affects a polarization effect of the excessively thick linear polarization film. As a result, optical performance of the excessively thick linear polarization film deteriorates, and there is a risk of a ghost image.

(2) The polarization reflection unit of the film system unit is a thin film material that reflects light by using a polarization characteristic. If the material of the polarization reflection unit is excessively thin, the following problems are caused: 1. It is difficult to form the polarization reflection unit, and the polarization reflection unit is more fragile and easy to deform, thereby affecting the polarization effect. 2. The durability decreases: An excessively thin material of the polarization reflection unit is more prone to damage because the material is relatively fragile and is prone to wear or scratch. If the material of the polarization reflection unit is excessively thick, optical performance deteriorates: Transmittance and a polarization rate decrease, thereby affecting an application effect of the polarization reflection unit in an optical component, and easily forming a ghost image.

(3) The polarization conversion unit (such as a quarter-wave plate) is an optical component, configured to: adjust a polarization state of light and change a phase of light. An excessively thin polarization conversion unit cannot be formed and is easily cracked. However, an excessively thick polarization conversion unit causes an optical path difference to change. The thickness of the polarization conversion unit is designed based on a wavelength. If the polarization conversion unit is excessively thick, a change of the optical path difference exceeds a design value, thereby affecting a capability of the polarization conversion unit to adjust a polarization state and a phase of light.

(4) When the semi-transmissive and semi-reflective film uses an evaporation manner, an excessively thin semi-transmissive and semi-reflective film cannot be formed through evaporation and cannot ensure thickness uniformity. However, an excessively thick semi-transmissive and semi-reflective film poses a risk of film layer detachment. An excessively thin or excessively thick semi-transmissive and semi-reflective film hardly ensures an imaging effect and stability.

The optical display device performs reflection three times, and performs optical path folding a plurality of times, to increase a field of view FOV and achieve lightening and thinning. Specifically, the first reflection is total air reflection (that is, there is an air gap between the first prism unit 2 and the first lens unit 4, and a refractive index of air is less than that of the first prism unit 2 and that of the first lens unit 4. Therefore, imaging light can be totally reflected on a wall surface that is of the first prism unit 2 and that is close to the first lens unit 4). The second reflection is reflection performed when linearly polarized light converted by the linear polarization film arrives at the film system unit. The third reflection is reflection performed through the semi-transmissive and semi-reflective film. For example, the FOV increases from 48° in a conventional Birdbath solution to 60° or above, and a thickness is reduced by half on the basis of 18-20 mm in the conventional Birdbath solution.

In an embodiment, the polarization conversion unit is a quarter-wave plate 5, and an included angle between a reflection axis of the film system unit and a slow axis of the polarization conversion unit is 45°±1°.

To ensure an imaging effect, there is a specific angle relationship between the film system unit and the polarization conversion unit. The slow axis of the polarization conversion unit needs to be attached to the reflection axis of the film system unit at an angle of 45°, with a tolerance of ±1°. This can ensure that the linearly polarized light is changed to standard circularly polarization light.

In another embodiment, the film system unit further includes a polarization absorption unit, the polarization absorption unit is a polarization absorption film and is located between the polarization reflection unit and the second prism unit 3, and an absorption axis of the polarization absorption unit is parallel to a reflection axis of the polarization reflection unit.

The reflection axis of the polarization reflection unit (for example, a polarization reflection film) and the absorption axis of the polarization absorption unit (for example, a polarization absorption film) need to be parallel to each other, thereby helping eliminate a double image. To be specific, the polarization conversion unit, the polarization reflection unit, and the polarization absorption unit are sequentially disposed in a direction close to the human eye 11.

In an embodiment, the image source 1 is further movable relative to the first prism unit 2, and a moving distance is less than 5 mm.

Moving the image source 1 can change a distance of a final virtual image, to satisfy viewing requirements of people with different vision.

Preferably, an included angle between a direction in which the image source 1 moves relative to the first prism unit

2 and an optical axis direction of the image source 1 is 0-15°.

In actual application, if the image source 1 is excessively large, when the image source 1 moves to a range endpoint, because of a limitation of an optical lens or the like, display content at a light-emitting surface edge of the image source 1 may be unable to normally enter the first prism unit 2 for light transmission, and consequently, an image finally entering the human eye is missing. Therefore, a moving direction of the image source 1 forms a specific included angle with the optical axis direction. To be specific, during moving, there is a moving component that is parallel to the light-emitting surface of the image source 1, to ensure that imaging light emitted by the image source 1 in an entire moving range can normally enter the first prism unit 2 for light transmission, and ensure that a final imaging picture is complete within a diopter adjustment range and the entire light-emitting surface of the image source 1 can be fully used. However, the angle should not be excessively large, to ensure that when the image source 1 moves, a moving component parallel to the light-emitting surface of the image source 1 is relatively small, and a main moving component of the image source 1 is in the optical axis direction. If the angle is excessively large, that is, when the image source 1 moves, the moving component parallel to the light-emitting surface of the image source 1 is excessively large, to ensure that all imaging light emitted by the image source 1 can enter an incident surface of the first prism unit 2 in the entire diopter adjustment range, the incident surface of the first prism unit 2 needs to be quite large, and a volume of an entire apparatus is also quite large. Consequently, a volume of a used augmented reality device is also relatively large, making it difficult to satisfy a requirement for lightening and thinning.

In this embodiment, the included angle is preferably 7°, which can ensure integrity of a display image and ensure a display effect while ensuring lightening and thinning.

In another embodiment, a sixth lens unit 14 is further included, the sixth lens unit 14 is located on a light-emitting side of the image source 1, and linearly polarized light enters the first prism unit 2 through the sixth lens unit 14.

A focal length of the sixth lens unit 14 is 5-50mm, to help improve imaging quality.

The image source 1 and the sixth lens unit 14 are further movable synchronously relative to the first prism unit 2, and a moving distance is less than 4 mm, to implement diopter adjustment from 0D to 6D.

An included angle between a direction in which the image source 1 and the sixth lens unit 14 move synchronously relative to the first prism unit 2 and an optical axis direction of the image source 1 is 0-10°, and an optical axis direction of the image source 1 is a direction perpendicular to a light-emitting surface of a screen of the image source 1.

In actual application, when the image source 1 and the sixth lens unit 14 move synchronously to a range endpoint, because of a limitation of an optical lens or the like, display content at a light-emitting surface edge of the image source 1 may be unable to normally enter the first prism unit 2 for light transmission, and consequently, an image finally entering the human eye is missing. Therefore, a direction in which the image source 1 and the sixth lens unit 14 move synchronously forms a specific included angle with the optical axis direction of the image source 1. To be specific, during moving, there is a moving component that is parallel to the light-emitting surface of the image source 1, to ensure that imaging light emitted by the image source 1 in an entire moving range can normally enter the first prism unit 2 for light transmission, and ensure that a final imaging picture is complete within a diopter adjustment range and the entire light-emitting surface of the image source 1 can be fully used. However, the angle should not be excessively large, to ensure that when the image source 1 moves, a moving component parallel to the light-emitting surface of the image source 1 is relatively small, and a main moving component of the image source 1 is in the optical axis direction. If the angle is excessively large, that is, when the image source 1 moves, the moving component parallel to the light-emitting surface of the image source 1 is excessively large, to ensure that all imaging light emitted by the image source 1 can enter an incident surface of the first prism unit 2 in the entire diopter adjustment range, the incident surface of the first prism unit 2 needs to be quite large, and a volume of an entire apparatus is also quite large. Consequently, a volume of a used augmented reality device is also relatively large, making it difficult to satisfy a requirement for lightening and thinning.

Compared with the foregoing solution in which only the image source 1 moves, because the sixth lens unit 14 with a positive focal length is added, and imaging light is constrained and converged before entering the first prism unit 2, an included angle and a moving amount that are required are both less than those in the solution in which only the image source 1 moves. In addition, the image source 1 and the sixth lens unit 14 move synchronously. This moving manner can ensure that during the moving, an angle formed after light emitted from a same position of the image source 1 is transmitted through the sixth lens unit 14 remains consistent. To be specific, in a case of different diopters, a degree of divergence of light emitted by the sixth lens unit 14 remains consistent, which can ensure that a final imaging FOV remains consistent and is not greatly reduced.

In an embodiment, a polarizer is further disposed on a side that is of the second prism unit 3 and that is close to the human eye 11, and a thickness of the polarizer is 60-250 nm.

When there is no sixth lens unit 14, design compatibility is quite high, which facilitates mass production. If the sixth lens unit 14 is provided, imaging quality may be further improved. The sixth lens unit 14 may be in a form of a lens group. To reduce rainbow patterns generated by the sixth lens unit 14, a polarization absorption film may be attached to a near-eye surface of the second prism unit 3, which may also reduce rainbow patterns. A principle thereof is that linearly polarized light in an imaging direction is used to weaken stray light by half without affecting imaging, because the stray light has directions of parallel imaging linearly polarized light and vertical linearly polarized light.

For example, a polarizer may be attached to a near-eye surface of the second prism unit 3, and a thickness of the polarizer is 60-250 nm. If the thickness is excessively small, a thin film cannot be formed through stacking to ensure an effect. If the thickness is excessively large, light is reflected inside the film, causing a ghost image. Therefore, 60-250 nm can ensure an effect and does not cause other negative effects, thereby eliminating external stray light.

According to one or more embodiments of the present invention, each lens unit includes at least one lens. Preferably, a lens surface type of each lens is a free combination of a spherical surface, an aspherical surface, a free-form surface, a Fresnel surface, and a planar surface. In an embodiment, the first lens unit 4 is a curved lens.

In an embodiment, the aspherical surface satisfies the following formula:

$$z = \frac{CY^2}{1 + \sqrt{1 - (1+k)C^2Y^2}} + \sum_{i=2}^{N} a_i Y^{2i}$$

z represents a sagittal height, Y represents a lens center height, k represents a conic coefficient, C represents a curvature, $a_i$ represents an $i^{th}$ aspherical coefficient, and N is a positive integer.

In the foregoing embodiment, the image source 1 may be one of an OLED display, an LCOS display, a Microled display, a DLP display, and an LBS display. The image source 1 includes but is not limited to the foregoing components. The OLED display is preferred.

A working principle of the foregoing embodiment is as follows: Imaging light emitted by the image source 1 is converted by a linear polarization film into 45° linearly polarized light, which then passes through the sixth lens unit 14, and then is transmitted and reflected to the first prism unit 2. A film system unit with an optical path modulation function is attached to a side that is of the first prism unit 2 and that is close to the second prism unit 3. The 45° linearly polarized light first undergoes total reflection on the first prism unit 2 and arrives at the film system unit, and then the film system unit reflects the 45° linearly polarized light. Through transmission of -45° linearly polarized light, the light is reflected to an outer side surface of the first lens unit 4. A semi-transmissive and semi-reflective film is disposed on the first lens unit 4 to reflect the light back to the first prism unit 2. In this case, an angle of the linearly polarized light is changed to -45°, and the linearly polarized light may be transmitted sequentially through the film system unit and the second prism unit 3 to finally arrive at the human eye 11 (eye) for imaging, as shown in FIG. 15. FIG. 16 is a schematic diagram of an optical path direction and diopter adjustment (synchronous movement of the image source 1 and the sixth lens unit 14).

Detailed descriptions are provided below by using specific embodiments. In the tables, OBJ represents an object plane, IMG represents an image plane, Stop represents an aperture stop, and Eye relief represents an exit pupil distance. Among surface serial numbers, S2 and S3 each represent a lens surface that is of the second prism unit 3 and that is close to the human eye 11; S4, S5, S12, and S13 each represent a lens surface that is of the first prism unit 2 and that is close to the second prism unit 3; S6, S7, S11, S14, and S15 each represent a lens surface that is of the first prism unit 2 and that is close to the first lens unit 4; S8 and S10 each represent a lens surface that is of the first lens unit 4 and that is close to the first prism unit 2; S9 represents a lens surface that is of the first lens unit 4 and that is away from the first prism unit 2; S16 and S17 each represent a lens surface that is of the first prism unit 2 and that is close to the second lens unit 6; S18 and S19 each represent a light-emitting surface of the sixth lens unit 14; and S20 represents a light incident surface of the sixth lens unit 14. A light-emitting side of the image source 1 is provided with flat glass (with a surface serial number S21), and a standard surface is a spherical surface.

According to one or more embodiments of the present invention, the device includes an image source 1, a first prism unit 2, a second prism unit 3, a first lens unit 4, and a sixth lens unit 14. A polarization conversion unit is disposed between the first prism unit 2 and the first lens unit 4, and the image source 1 and the sixth lens unit 14 are further movable synchronously to implement diopter adjustment. Thicknesses of a linear polarization film, a film system unit, and the polarization conversion unit are respectively 120 nm, 200 nm, and 60 nm. A thickness of a semi-transmissive and semi-reflective film is 100 nm, a polarizer is disposed on a side that is of the second prism unit 3 and that is close to the human eye 11, and a thickness of the polarizer is 120 nm. In this embodiment, a thickness of a film is preferably an intermediate value, which well balances imaging quality and reliability.

**Table 7: Optical parameters at positions with a diopter 0D in an embodiment**

| Surface serial number | Surface type | Curvature radius (mm) | Thickness (distance) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |

(continued)

| Surface serial number | Surface type | Curvature radius (mm) | Thickness (distance) (mm) | Name | Tilt |
|---|---|---|---|---|---|
| S3 | Standard surface | Infinity | 4 | Second prism unit 3 | |
| S4 | Cross section | | 0 | -- | -15° |
| S5 | Standard surface | Infinity | 2.5 | First prism unit 2 | |
| S6 | Cross section | | 0 | | 22° |
| S7 | Standard surface | Infinity | 0.1 | | |
| S8 | Standard surface | Infinity | 2 | First lens unit 4 | |
| S9 | Standard surface | -45.2 | -2 | First lens unit 4 | |
| S10 | Standard surface | Infinity | -0.1 | | |
| S11 | Standard surface | Infinity | 0 | First prism unit 2 | |
| S12 | Cross section | | -2.5 | | -22° |
| S13 | Standard surface | Infinity | 2.5 | First prism unit 2 | |
| S14 | Cross section | | 0 | | 22° |
| S15 | Standard surface | Infinity | -1 | First prism unit 2 | |
| S16 | Cross section | | 0 | | 45° |
| S17 | Standard surface | | -1 | | |
| S18 | Cross section | | 0 | | -3° |
| S19 | Standard surface | -45.2 | -1.5 | Sixth lens unit 14 | |
| S20 | Standard surface | 162.5 | -1 | | |
| S21 | Standard surface | Infinity | -0.7 | Flat glass | |
| IMG | | Infinity | | Image source 1 | |

**Table 8: Optical parameters at positions with a diopter 6D in an embodiment**

| Surface serial number | Surface type | Curvature radius (mm) | Thickness (distance) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 4 | Second prism unit 3 | |
| S4 | Cross section | | 0 | -- | -15° |
| S5 | Standard surface | Infinity | 2.5 | First prism unit 2 | |
| S6 | Cross section | | 0 | | 22° |
| S7 | Standard surface | Infinity | 0.1 | | |
| S8 | Standard surface | Infinity | 2 | First lens unit 4 | |
| S9 | Standard surface | -45.2 | -2 | First lens unit 4 | |
| S10 | Standard surface | Infinity | -0.1 | | |
| S11 | Standard surface | Infinity | 0 | First prism unit 2 | |
| S12 | Cross section | | -2.5 | | -22° |

(continued)

| Surface serial number | Surface type | Curvature radius (mm) | Thickness (distance) (mm) | Name | Tilt |
|---|---|---|---|---|---|
| S13 | Standard surface | Infinity | 2.5 | First prism unit 2 | |
| S14 | Cross section | | 0 | | 22° |
| S15 | Standard surface | Infinity | -1 | First prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Sixth lens unit 14 | |
| S20 | Standard surface | 162.5 | -0.1 | | |
| S21 | Standard surface | Infinity | -0.7 | Flat glass | |
| IMG | | Infinity | | Image source 1 | |

According to the optical parameters in Table 7 and Table 8, in this embodiment, a field of view FOV of the optical display device may reach 60° and a thickness may reach 9.4 mm.

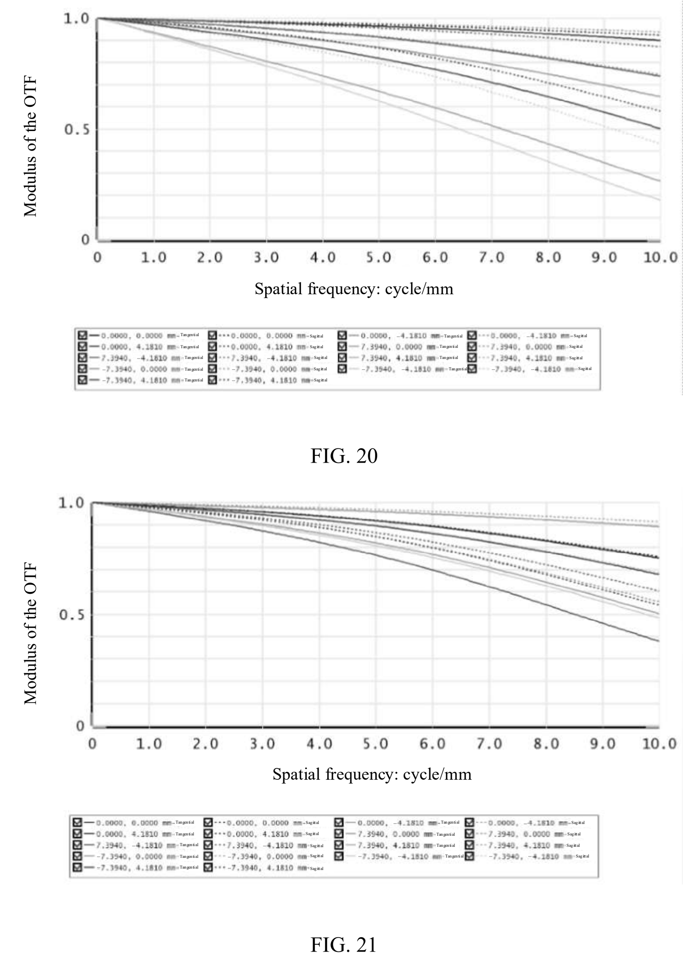

FIG. 20 and FIG. 21 are corresponding MTF curve graphs respectively in cases of adjustment at a diopter 0D and a diopter 6D. In the figures, an MTF is greater than 0.1 at 10 lp/mm because the device belongs to a visual optical system. Based on angular resolution of the human eye 11, the MTF indicator can ensure that the human eye 11 receives a quite clear and sharp image, thereby effectively ensuring wearing experience.

According to one or more embodiments of the present invention, the device includes an image source 1, a first prism unit 2, a second prism unit 3, a first lens unit 4, and a sixth lens unit 14. A polarization conversion unit is disposed between the first prism unit 2 and the first lens unit 4, and the image source 1 and the sixth lens unit 14 are further movable synchronously to implement diopter adjustment. Thicknesses of a linear polarization film, a film system unit, and the polarization conversion unit are respectively 60 nm, 90 nm, and 30 nm. A thickness of a semi-transmissive and semi-reflective film is 50 nm, a polarizer is disposed on a side that is of the second prism unit 3 and that is close to the human eye 11, and a thickness of the polarizer is 60 nm. In this embodiment, the thickness of the film adopts a thinnest combination manner, and is applicable to an optical system that has an extremely high requirement for thinning, which poses a great challenge to process difficulty. In addition, raw material costs for thinning the linear polarization film, the film system unit, and the polarization conversion unit are relatively high, though an imaging effect is similar to that in the foregoing embodiment. A smallest thickness of an evaporated semi-transmissive and semi-reflective film is 50 nm. Otherwise, there is a risk of uneven film coating, which affects an imaging effect.

**Table 9: Optical parameters at positions with a diopter 0D in an embodiment**

| Surface serial number | Surface type | Curvature radius (mm) | Thickness (distance) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 3.8 | Second prism unit 3 | |
| S4 | Cross section | | 0 | -- | -15° |
| S5 | Standard surface | Infinity | 2.6 | First prism unit 2 | |
| S6 | Cross section | | 0 | | 22° |
| S7 | Standard surface | Infinity | 0.2 | | |
| S8 | Standard surface | Infinity | 2 | First lens unit 4 | |
| S9 | Standard surface | -44.3 | -2 | First lens unit 4 | |
| S10 | Standard surface | Infinity | -0.1 | | |

(continued)

| Surface serial number | Surface type | Curvature radius (mm) | Thickness (distance) (mm) | Name | Tilt |
|---|---|---|---|---|---|
| S11 | Standard surface | Infinity | 0 | First prism unit 2 | |
| S12 | Cross section | | -2.5 | | -22° |
| S13 | Standard surface | Infinity | 2.5 | First prism unit 2 | |
| S14 | Cross section | | 0 | | 22° |
| S15 | Standard surface | Infinity | -1 | First prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Sixth lens unit 14 | |
| S20 | Standard surface | 162.5 | -1 | | |
| S21 | Standard surface | Infinity | -0.7 | Flat glass | |
| IMG | | Infinity | | Image source 1 | |

**Table 10: Optical parameters at positions with a diopter 6D in an embodiment**

| Surface serial number | Surface type | Curvature radius (mm) | Thickness (distance) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 3.8 | Second prism unit 3 | |
| S4 | Cross section | | 0 | -- | -15° |
| S5 | Standard surface | Infinity | 2.6 | First prism unit 2 | |
| S6 | Cross section | | 0 | | 22° |
| S7 | Standard surface | Infinity | 0.2 | | |
| S8 | Standard surface | Infinity | 2 | First lens unit 4 | |
| S9 | Standard surface | -44.3 | -2 | First lens unit 4 | |
| S10 | Standard surface | Infinity | -0.1 | | |
| S11 | Standard surface | Infinity | 0 | First prism unit 2 | |
| S12 | Cross section | | -2.5 | | -22° |
| S13 | Standard surface | Infinity | 2.5 | First prism unit 2 | |
| S14 | Cross section | | 0 | | 22° |
| S15 | Standard surface | Infinity | -1 | First prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Sixth lens unit 14 | |
| S20 | Standard surface | 162.5 | -0.1 | | |
| S21 | Standard surface | Infinity | -0.7 | Flat glass | |
| IMG | | Infinity | | Image source 1 | |

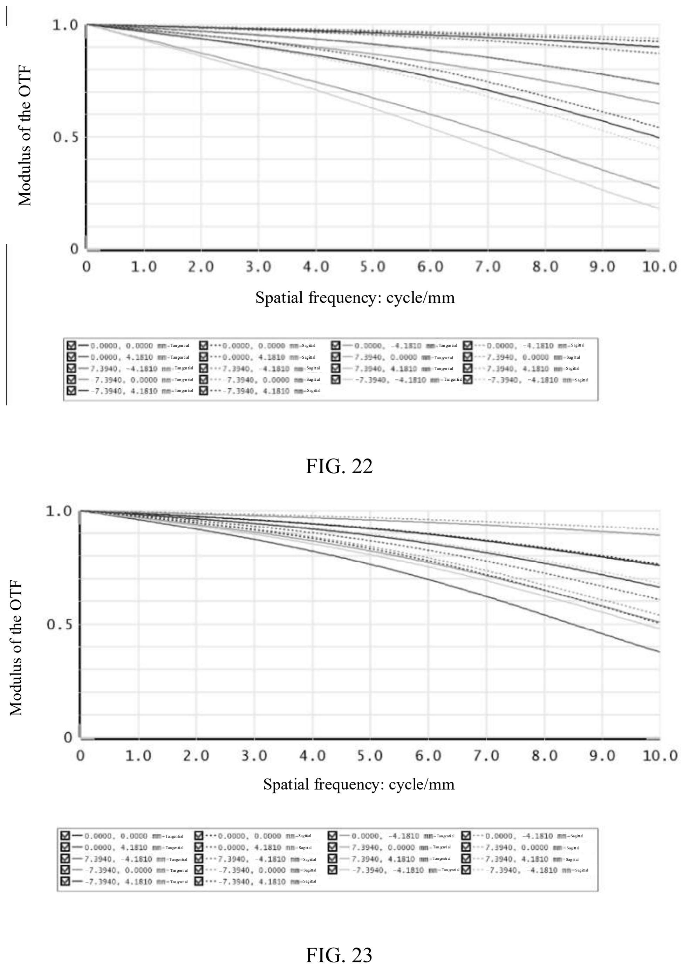

According to the optical parameters in Table 9 and Table 10, in this embodiment, a field of view FOV of the optical display device may reach 60° and a thickness may reach 9.4 mm. FIG. 22 and FIG. 23 are corresponding MTF curve graphs respectively in cases of adjustment at a diopter 0D and a diopter 6D. In the figures, an MTF is greater than 0.1 at 10 lp/mm because the device belongs to a visual optical system. Based on angular resolution of the human eye 11, the MTF indicator can ensure that the human eye 11 receives a quite clear and sharp image, thereby effectively ensuring wearing experience.

According to one or more embodiments of the present invention, the device includes an image source 1, a first prism unit 2, a second prism unit 3, a first lens unit 4, and a sixth lens unit 14. A polarization conversion unit is disposed between the first prism unit 2 and the first lens unit 4, and the image source 1 and the sixth lens unit 14 are further movable synchronously to implement diopter adjustment. Thicknesses of a linear polarization film, a film system unit, and the polarization conversion unit are respectively 250 nm, 280 nm, and 100 nm. A thickness of a semi-transmissive and semi-reflective film is 300 nm, a polarizer is disposed on a side that is of the second prism unit 3 and that is close to the human eye 11, and a thickness of the polarizer is 250 nm. In this embodiment, a maximum value is taken for the thickness of the film, and a relatively large quantity of raw material models may be selected for the linear polarization film, the film system unit, and the polarization conversion unit. However, a relatively thick film is usually launched earlier with ordinary performance. In particular, conversion efficiency of polarization light is slightly poor. An upper limit of a thickness of a semi-transmissive and semi-reflective film is 300 nm because there is a risk of film detachment when the thickness exceeds this value, which affects an imaging effect.

**Table 11: Optical parameters at positions with a diopter 0D in an embodiment**

| Surface serial number | Surface type | Curvature radius (mm) | Thickness (distance) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 3.9 | Second prism unit 3 | |
| S4 | Cross section | | 0 | -- | -15° |
| S5 | Standard surface | Infinity | 2.6 | First prism unit 2 | |
| S6 | Cross section | | 0 | | 22° |
| S7 | Standard surface | Infinity | 0.1 | | |
| S8 | Standard surface | Infinity | 2 | First lens unit 4 | |
| S9 | Standard surface | -45.2 | -2 | First lens unit 4 | |
| S10 | Standard surface | Infinity | -0.1 | | |
| S11 | Standard surface | Infinity | 0 | First prism unit 2 | |
| S12 | Cross section | | -2.4 | | -22° |
| S13 | Standard surface | Infinity | 2.4 | First prism unit 2 | |
| S14 | Cross section | | 0 | | 22° |
| S15 | Standard surface | Infinity | -1.1 | First prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Sixth lens unit 14 | |
| S20 | Standard surface | 162.5 | -1 | | |
| S21 | Standard surface | Infinity | -0.7 | Flat glass | |
| IMG | | Infinity | | Image source 1 | |

**Table 12: Optical parameters at positions with a diopter 6D in an embodiment**

| Surface serial number | Surface type | Curvature radius (mm) | Thickness (distance) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 3.9 | Second prism unit 3 | |
| S4 | Cross section | | 0 | -- | -15° |
| S5 | Standard surface | Infinity | 2.6 | First prism unit 2 | |
| S6 | Cross section | | 0 | | 22° |
| S7 | Standard surface | Infinity | 0.1 | | |
| S8 | Standard surface | Infinity | 2 | First lens unit 4 | |
| S9 | Standard surface | -45.2 | -2 | First lens unit 4 | |
| S10 | Standard surface | Infinity | -0.1 | | |
| S11 | Standard surface | Infinity | 0 | First prism unit 2 | |
| S12 | Cross section | | -2.4 | | -22° |
| S13 | Standard surface | Infinity | 2.4 | First prism unit 2 | |
| S14 | Cross section | | 0 | | 22° |
| S15 | Standard surface | Infinity | -1.1 | First prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Sixth lens unit 14 | |
| S20 | Standard surface | 162.5 | -0.1 | | |
| S21 | Standard surface | Infinity | -0.7 | Flat glass | |
| IMG | | Infinity | | Image source 1 | |

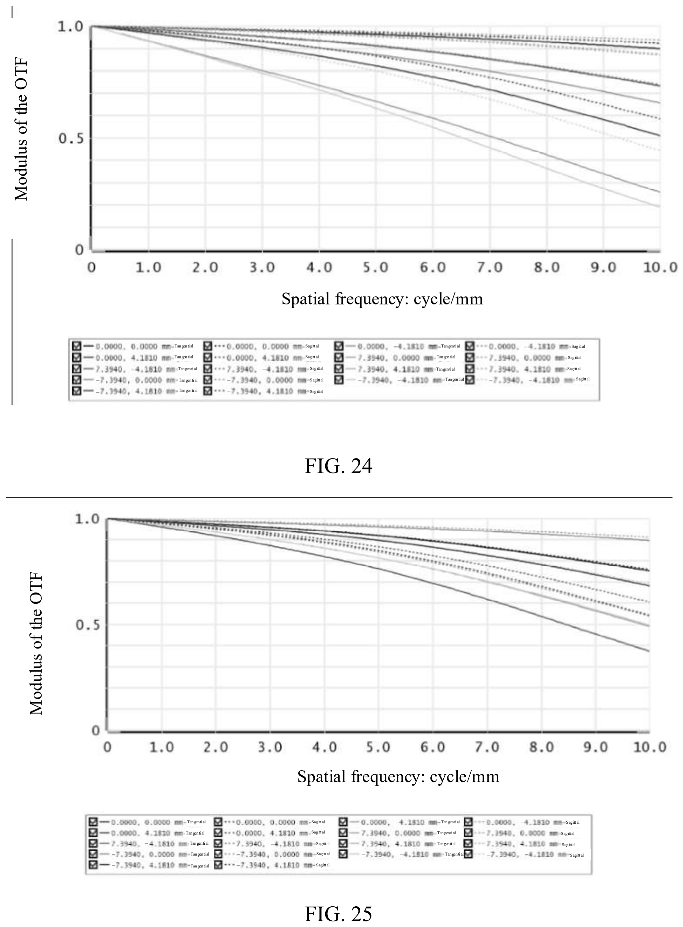

According to the optical parameters in Table 11 and Table 12, in this embodiment, a field of view FOV of a lightweight head-mounted display apparatus with a large field of view may reach 60° and a thickness may reach 9.4 mm. FIG. 24 and FIG. 25 are corresponding MTF curve graphs respectively in cases of adjustment at a diopter 0D and a diopter 6D. In the figures, an MTF is greater than 0.1 at 10 lp/mm because the device belongs to a visual optical system. Based on angular resolution of the human eye 11, the MTF indicator can ensure that the human eye 11 receives a quite clear and sharp image, thereby effectively ensuring wearing experience.

According to one or more embodiments of the present invention, the device includes an image source 1, a first prism unit 2, a second prism unit 3, a first lens unit 4, and a sixth lens unit 14. A polarization conversion unit is disposed between the first prism unit 2 and the first lens unit 4, and the image source 1 and the sixth lens unit 14 are further movable synchronously to implement diopter adjustment. Thicknesses of a linear polarization film, a film system unit, and the polarization conversion unit are respectively 100 nm, 180 nm, and 80 nm. A thickness of a semi-transmissive and semi-reflective film is 100 nm, a polarizer is disposed on a side that is of the second prism unit 3 and that is close to the human eye 11, and a thickness of the polarizer is 100 nm. In this embodiment, the thickness of the film is preferably the foregoing value, so that a main surface is compatible with a small FOV (that is, less than 60°).

**Table 13: Optical parameters at positions with a diopter 0D in an embodiment**

| Surface serial number | Surface type | Curvature radius (mm) | Thickness (distance) (mm) | Name | Tilt |
|---|---|---|---|---|---|
| Surface serial number | Surface type | Curvature radius (mm) | Thickness (distance) (mm) | Name | Tilt |
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 4 | Second prism unit 3 | |
| S4 | Cross section | | 0 | -- | -15° |
| S5 | Standard surface | Infinity | 2.5 | First prism unit 2 | |
| S6 | Cross section | | 0 | | 22° |
| S7 | Standard surface | Infinity | 0.1 | | |
| S8 | Standard surface | Infinity | 2.1 | First lens unit 4 | |
| S9 | Standard surface | -43.6 | -2.1 | First lens unit 4 | |
| S10 | Standard surface | Infinity | -0.1 | | |
| S11 | Standard surface | Infinity | 0 | First prism unit 2 | |
| S12 | Cross section | | -2.4 | | -22° |
| S13 | Standard surface | Infinity | 2.4 | First prism unit 2 | |
| S14 | Cross section | | 0 | | 22° |
| S15 | Standard surface | Infinity | -1 | First prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Sixth lens unit 14 | |
| S20 | Standard surface | 162.5 | -1 | | |
| S21 | Standard surface | Infinity | -0.7 | Flat glass | |
| IMG | | Infinity | | Image source 1 | |

**Table 14: Optical parameters at positions with a diopter 6D in an embodiment**

| Surface serial number | Surface type | Curvature radius (mm) | Thickness (distance) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 4 | Second prism unit 3 | |
| S4 | Cross section | | 0 | -- | -15° |
| S5 | Standard surface | Infinity | 2.5 | First prism unit 2 | |
| S6 | Cross section | | 0 | | 22° |
| S7 | Standard surface | Infinity | 0.1 | | |

(continued)

| Surface serial number | Surface type | Curvature radius (mm) | Thickness (distance) (mm) | Name | Tilt |
|---|---|---|---|---|---|
| S8 | Standard surface | Infinity | 2.1 | First lens unit 4 | |
| S9 | Standard surface | -43.6 | -2.1 | First lens unit 4 | |
| S10 | Standard surface | Infinity | -0.1 | | |
| S11 | Standard surface | Infinity | 0 | First prism unit 2 | |
| S12 | Cross section | | -2.4 | | -22° |
| S13 | Standard surface | Infinity | 2.4 | First prism unit 2 | |
| S14 | Cross section | | 0 | | 22° |
| S15 | Standard surface | Infinity | -1 | First prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Sixth lens unit 14 | |
| S20 | Standard surface | 162.5 | -1 | | |
| S21 | Standard surface | Infinity | -0.7 | Flat glass | |
| IMG | | Infinity | | Image source 1 | |

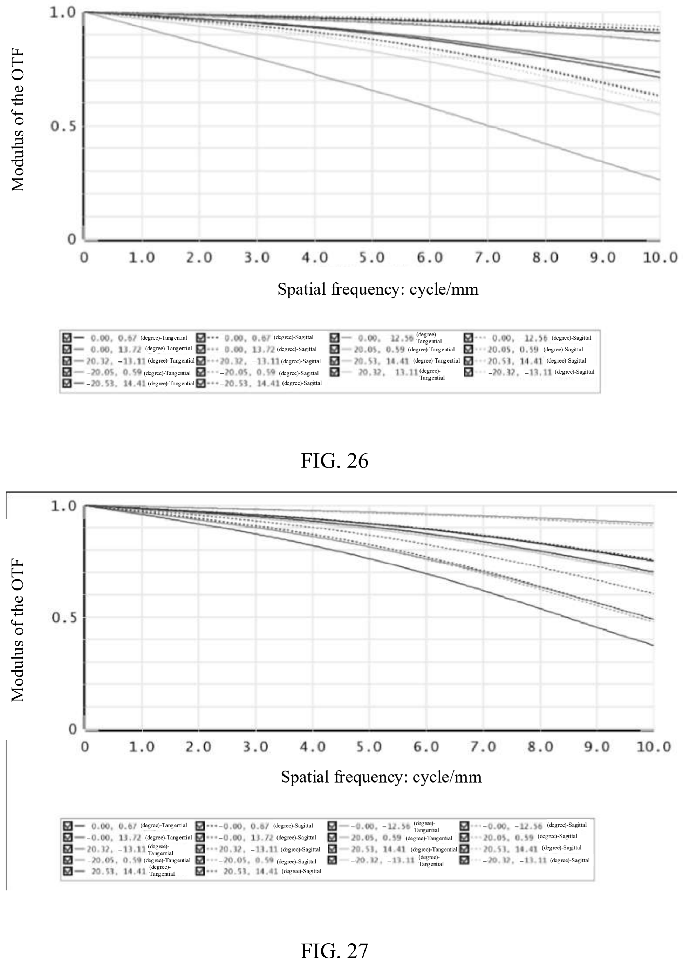

According to the optical parameters in Table 13 and Table 14, in this embodiment, a field of view FOV of a lightweight head-mounted display apparatus with a large field of view may reach 57° and a thickness may reach 9.4 mm. FIG. 26 and FIG. 27 are corresponding MTF curve graphs respectively in cases of adjustment at a diopter 0D and a diopter 6D. In the figures, an MTF is greater than 0.1 at 10 lp/mm because the device belongs to a visual optical system. Based on angular resolution of the human eye 11, the MTF indicator can ensure that the human eye 11 receives a quite clear and sharp image, thereby effectively ensuring wearing experience.

According to one or more embodiments of the present invention, the device includes an image source 1, a first prism unit 2, a second prism unit 3, a first lens unit 4, and a second lens unit 6. A polarization conversion unit is disposed between the first prism unit 2 and the first lens unit 4, and the image source 1 and the second lens unit 6 are further movable synchronously in an optical axis direction to implement diopter adjustment. Thicknesses of a linear polarization film, a film system unit, and the polarization conversion unit are respectively 115 nm, 195 nm, and 60 nm. A thickness of a semi-transmissive and semi-reflective film is 100 nm, a polarizer is disposed on a side that is of the second prism unit 3 and that is close to the human eye 11, and a thickness of the polarizer is 115 nm. In this embodiment, the thickness of the film is preferably the foregoing value, so that a main surface is compatible with a large FOV (that is, above 60°).

**Table 15: Optical parameters at positions with a diopter 0D in an embodiment**

| Surface serial number | Surface type | Curvature radius (mm) | Thickness (distance) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 4 | Second prism unit 3 | |
| S4 | Cross section | | 0 | -- | -15° |
| S5 | Standard surface | Infinity | 2.2 | First prism unit 2 | |
| S6 | Cross section | | 0 | | 22° |
| S7 | Standard surface | Infinity | 0.1 | | |
| S8 | Standard surface | Infinity | 2.3 | First lens unit 4 | |

(continued)

| Surface serial number | Surface type | Curvature radius (mm) | Thickness (distance) (mm) | Name | Tilt |
|---|---|---|---|---|---|
| S9 | Standard surface | -46.7 | -2.3 | First lens unit 4 | |
| S10 | Standard surface | Infinity | -0.1 | | |
| S11 | Standard surface | Infinity | 0 | First prism unit 2 | |
| S12 | Cross section | | -2.4 | | -22° |
| S13 | Standard surface | Infinity | 2.4 | First prism unit 2 | |
| S14 | Cross section | | 0 | | 22° |
| S15 | Standard surface | Infinity | -1.1 | First prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Sixth lens unit 14 | |
| S20 | Standard surface | 162.5 | -1 | | |
| S21 | Standard surface | Infinity | -0.7 | Flat glass | |
| IMG | | Infinity | | Image source 1 | |

**Table 16: Optical parameters at positions with a diopter 0D in an embodiment**

| Surface serial number | Surface type | Curvature radius (mm) | Thickness (distance) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 4 | Second prism unit 3 | |
| S4 | Cross section | | 0 | -- | -15° |
| S5 | Standard surface | Infinity | 2.2 | First prism unit 2 | |
| S6 | Cross section | | 0 | | 22° |
| S7 | Standard surface | Infinity | 0.1 | | |
| S8 | Standard surface | Infinity | 2.3 | First lens unit 4 | |
| S9 | Standard surface | -46.7 | -2.3 | First lens unit 4 | |
| S10 | Standard surface | Infinity | -0.1 | | |
| S11 | Standard surface | Infinity | 0 | First prism unit 2 | |
| S12 | Cross section | | -2.4 | | -22° |
| S13 | Standard surface | Infinity | 2.4 | First prism unit 2 | |
| S14 | Cross section | | 0 | | 22° |
| S15 | Standard surface | Infinity | -1.1 | First prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Sixth lens unit 14 | |
| S20 | Standard surface | 162.5 | -0.1 | | |

(continued)

| Surface serial number | Surface type | Curvature radius (mm) | Thickness (distance) (mm) | Name | Tilt |
|---|---|---|---|---|---|
| S21 | Standard surface | Infinity | -0.7 | Flat glass | |
| IMG | | Infinity | | Image source 1 | |

According to the optical parameters in Table 15 and Table 16, in this embodiment, a field of view FOV of a lightweight head-mounted display apparatus with a large field of view may reach 65° and a thickness may reach 9.4 mm. FIG. 25 and FIG. 26 are corresponding MTF curve graphs respectively in cases of adjustment at a diopter 0D and a diopter 6D. In the figures, an MTF is greater than 0.1 at 10 lp/mm because the device belongs to a visual optical system. Based on angular resolution of the human eye 11, the MTF indicator can ensure that the human eye 11 receives a quite clear and sharp image, thereby effectively ensuring wearing experience.

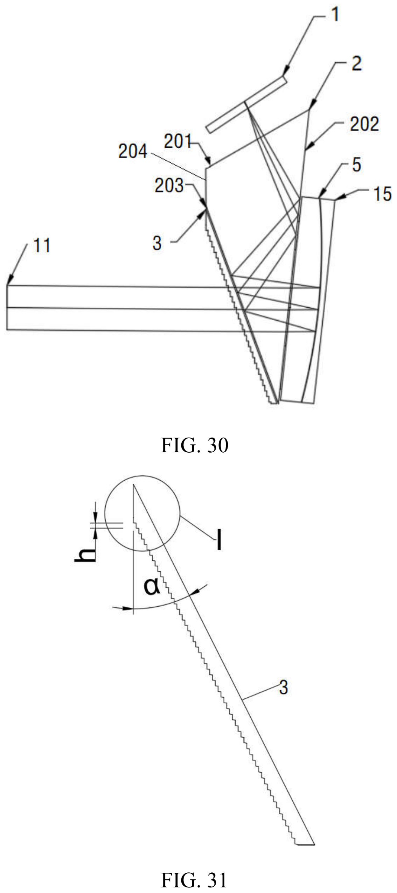

According to one or more embodiments of the present invention, as shown in FIG. 30 to FIG. 32, the optical display device may include an image source 1, a first prism unit 2, a second prism unit 3, and a first lens unit 4.

The image source 1 is disposed on a side of a first surface 201 of the first prism unit, and the first lens unit 4 is attached to a second surface 202 of the first prism unit; a first surface of the second prism unit 3 is attached to a third surface 203 of the first prism unit; the first surface 201 and the third surface 203 of the first prism unit are closer to an eye of a wearer than the second surface 202 of the first prism unit; and a first semi-transmissive and semi-reflective film is disposed on a surface on a side that is of the first lens unit 4 and that is away from the first prism unit 2.

Projected light output by the image source 1 is incident into the first prism unit 2 through the first surface 201 of the first prism unit, is incident into the first lens unit 4 after being sequentially reflected totally by the second surface 202 of the first prism unit, reflected by the third surface 203 of the first prism unit, and transmitted by the second surface 202 of the first prism unit, and is output and incident into the human eye 11 after being reflected by the first semi-transmissive and semi-reflective film and then sequentially transmitted by the second surface 202 and the third surface 203 of the first prism unit and the second prism unit 3.

In addition, a seventh lens unit 15 is further included in this embodiment, the seventh lens unit 15 is disposed on a side that is of the first lens unit 4 and that is away from the human eye 11 of the wearer, and a focal length of the seventh lens unit 15 and a focal length of the first lens unit 4 have opposite values.

The second prism unit 3 includes at least one Fresnel lens.

A film system unit is further included, and the film system unit is located between the first prism unit 2 and the second prism unit 3.

In this embodiment, imaging light emitted by the image source 1 enters the first prism unit 2 through the first surface 201 of the first prism unit, enters the first lens unit 4 after being sequentially reflected by the second surface 202 of the first prism unit for the first time, reflected by the third surface 203 of the first prism unit for the second time, and transmitted by the second surface 202 of the first prism unit, and is incident into the human eye 11 after being reflected by the first semi-transmissive and semi-reflective film for the third time and then sequentially transmitted by the first prism unit 2 and the second prism unit 3.

As shown in FIG. 30, an implementation principle of the near-eye display apparatus is that imaging light emitted by the image source 1 enters the first prism unit 2 through the first surface 201 of the first prism unit, undergoes first reflection on the second surface 202 of the first prism unit, and is reflected to the third surface 203 of the first prism unit. The film system unit is disposed between the third surface 203 of the first prism unit and the second prism unit 3, so that the imaging light can undergo second reflection on the third surface 203 of the first prism unit, and enters the first lens unit 4 after being transmitted by the second surface 202 of the first prism unit. The first semi-transmissive and semi-reflective film is disposed on the first lens unit 4, so that the imaging light is reflected back to the first prism unit 2, and then is incident into the human eye 11 after being sequentially transmitted by the first prism unit 2 and the second prism unit 3.

The image source 1 may be one of an OLED display, an LCOS display, a Microled display, a DLP display, and an LBS display. The OLED display is preferred. The lightweight near-eye display apparatus may further include an aperture stop, where the aperture stop is located between the second prism unit 3 and the human eye 11, or the aperture stop is at a position of the human eye 11.

The first prism unit 2 may be made of a plastic material or a glass material. The film system unit is located between a third surface 203 of the first prism unit and the second prism unit 3, may be attached to the first prism unit 2 or the second prism unit 3, or may be coated on the first prism unit 2 or the second prism unit 3. The film system unit causes imaging light emitted by the image source 1 to be reflected (or partially reflected) when the imaging light arrives at the third surface 203 of the first prism unit for the first time, and causes light reflected to the first prism unit 2 through the first lens unit 4 to be transmitted.

The first lens unit 4 includes a series of lenses that have functions of aberration correction and optical path reflection. The lens may be made of a glass material or a plastic material, and includes but is not limited to the following types: a spherical lens, an aspherical lens, a free-form lens, a Fresnel lens, a planar lens, and the like. The spherical lens is preferred. In addition, the first semi-transmissive and semi-reflective film is disposed on a side away from the first prism unit 2. The first semi-transmissive and semi-reflective film may be implemented in a film coating manner or a film attachment manner.

The seventh lens unit 15 may include a series of lenses that have an aberration correction function, and a focal length of the seventh lens unit 15 and a focal length of the first lens unit 4 have opposite values, to correct an aberration generated when the human eye 11 sees the outside through the first lens unit 4, so as to ensure that the aberration of seeing the outside by the human eye 11 is small enough. The seventh lens unit 15 may be made of a plastic material or a glass material. A quantity of lenses is not limited, and the lens includes but is not limited to the following types: a spherical lens, an aspherical lens, a free-form lens, a Fresnel lens, a planar lens, and the like. The spherical lens is preferred.

The second prism unit 3 is a series of prisms that have an aberration correction function and optical path difference compensation for upper and lower fields of view, where at least one lens is a Fresnel lens. The prism may be made of a plastic material or a glass material with no limitation on quantity, and includes but is not limited to the following surface types: a spherical lens, an aspherical lens, a free-form lens, a Fresnel lens, a planar lens, and the like. The aspherical lens is preferred. For example, the second prism unit 3 includes a Fresnel lens, and a Fresnel surface faces the human eye 11.

According to one or more embodiments of the present invention, the film system unit includes at least one of a fourth semi-transmissive and semi-reflective film, a reflective polarization film, a quarter-wave plate, and an absorptive polarization film.

For example, the film system unit may be a reflective polarization film, or the film system unit may be a combination of a reflective polarization film and a quarter-wave plate, where the quarter-wave plate may be located between the reflective polarization film and the first prism unit 2, or the film system unit may be a semi-transmissive and semi-reflective film, or the like, and may be specifically adjusted based on an actual requirement.

In an embodiment, a transmittance-to-reflectance ratio of each semi-transmissive and semi-reflective film is 1:9-9:1. The semi-transmissive and semi-reflective film enables the light to be partially reflected and partially transmitted. The ratio of reflection to transmission of the semi-transmissive and semi-reflective film may be determined based on an angle of the incident light.

In an embodiment, an air gap between the first prism unit 2 and the first lens unit 4 is 0.01-1 mm.

In an embodiment, the second prism unit 3 includes a Fresnel lens, an included angle between a line connecting tooth bottoms of two adjacent teeth of the Fresnel lens and a corresponding tooth width direction is 15-35°, a tooth width of the Fresnel lens is greater than or equal to 0.1 mm, a draft angle of a tooth of the Fresnel lens is 60-120°, and each of the Fresnel lens and the first prism unit 2 has a refractive index of 1.45-1.75 and an Abbe number of 18.0-60.0.

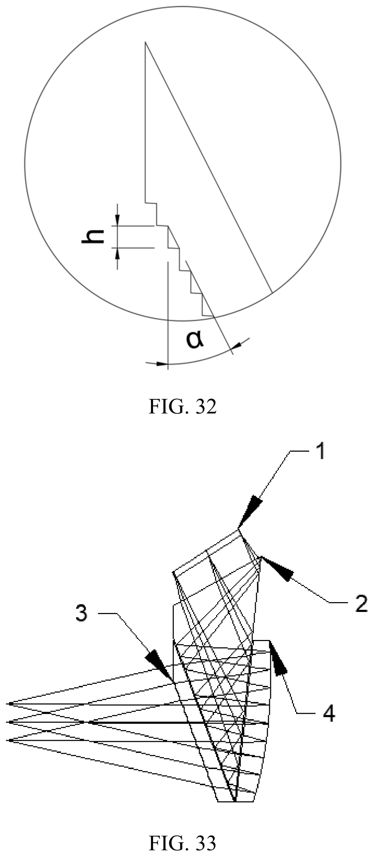

As shown in FIG. 31 and FIG. 32, the second prism unit 3 includes a Fresnel lens. The Fresnel lens is disposed obliquely, one side is a smooth surface, and the other side is engraved with concentric circles in ascending order (that is, a Fresnel surface). The smooth surface is parallel to the third surface 203 of the first prism unit, and the Fresnel surface faces the human eye 11. An included angle between a line connecting tooth bottoms of two adjacent teeth of the Fresnel lens and a corresponding tooth width direction is the same as an included angle between the second surface 202 and the third surface of the first prism unit, and a material selection range is also the same as that of a first prism, so that chief ray deflection caused by the first prism can be better corrected. A tooth width greater than 0.1 mm can reduce a risk of stray light and a decrease in transmittance that are caused by an excessively small tooth width. A draft angle of 60-120° can better match chief ray angles at different fields of view, reduce a risk of stray light, and improve imaging quality.

For example, in this embodiment, an included angle $\alpha$ between a line connecting tooth bottoms of two adjacent teeth of the Fresnel lens and a corresponding tooth width direction is 27°, and each of the Fresnel lens and the first prism has a refractive index of 1.72 and an Abbe number of 29.5. A tooth width h is 0.25 mm, a direction of the tooth width h is the corresponding tooth width direction, and a draft angle of a tooth is 93°. A tooth width and a draft angle of each tooth may vary, or may be adjusted based on an actual requirement.

The imaging light emitted by the image source 1 of the optical display device is reflected twice after being incident into the first prism unit 2, to implement optical path folding. On the basis of ensuring a sufficient optical path of the imaging light, this avoids a problem that an overall volume of a near-eye display apparatus increases because a volume of the first prism unit 2 is excessively large due to too many times of reflection, and is also conducive to lightening and thinning. The second prism unit 3 is designed as a Fresnel lens entirely or partially, to further reduce an overall weight of the near-eye display apparatus while ensuring that an optical path and performance remain unchanged, and also make a bottom of the near-eye display apparatus thinner. In addition, aberration correction is performed through the seventh lens unit 15, and a focal length of the seventh lens unit 15 and a focal length of the first lens unit 4 have opposite values, to correct an aberration generated when the human eye 11 sees the outside through the first lens unit 4, so as to ensure that the aberration of seeing the outside by the human eye 11 is small enough. Compared with that in the conventional technology, the apparatus reduces the overall weight by approximately 20% and significantly decreases a bottom thickness while ensuring that an imaging optical path is completely equivalent. For example, in this application, the overall weight of the near-eye display apparatus is approximately 6.5 g, and the thickness is approximately 3.8 mm. Before weight reduction, the weight is approximately 8 g and the thickness is approximately 8.7 mm. The apparatus is closer to a form of glasses, thereby improving user comfort, experience, and aesthetics.

According to one or more embodiments of the present invention, as shown in FIG. 33 to FIG. 35, the optical display device may include an image source 1, a first prism unit 2, a second prism unit 3, and a first lens unit 4.

The image source 1 is disposed on a side of a first surface 201 of the first prism unit, and the first lens unit 4 is attached to a second surface 202 of the first prism unit; a first surface of the second prism unit 3 is attached to a third surface 203 of the first prism unit; the first surface 201 and the third surface 203 of the first prism unit are closer to an eye of a wearer than the second surface 202 of the first prism unit; and a first semi-transmissive and semi-reflective film is disposed on a surface on a side that is of the first lens unit 4 and that is away from the first prism unit 2.

Projected light output by the image source 1 is incident into the first prism unit 2 through the first surface 201 of the first prism unit, is incident into the first lens unit 4 after being sequentially reflected totally by the second surface 202 of the first prism unit, reflected by the third surface 203 of the first prism unit, and transmitted by the second surface 202 of the first prism unit, and is output and incident into the human eye 11 after being reflected by the first semi-transmissive and semi-reflective film and then sequentially transmitted by the second surface 202 and the third surface 203 of the first prism unit and the second prism unit 3.

In addition, this embodiment further includes a film system unit, and the film system unit is disposed between the first prism unit 2 and the second prism unit 3.

The second prism unit 3 is a Fresnel lens, and is disposed close to the third surface 203 of the first prism unit, and a Fresnel surface of the Fresnel lens is disposed on a side adjacent to the human eye 11 of the wearer, and satisfies the following conditions:

$$\sin(\beta) * n > \sin(\max(aor)) \text{ or } \sin(\beta) * n < \sin(\min(aor));$$

$$r/pitch < 0.05;$$

and

$$R/pitch < 0.05.$$

In the formula, $\beta$ represents a draft angle of each tooth, aor represents an included angle range between a normal of an aperture stop and lines respectively connecting any point on the aperture stop with a tooth tip and a tooth bottom of the draft angle of each tooth, max(aor) represents a maximum value of aor, min(aor) represents a minimum value of aor, n represents a material refractive index of the Fresnel lens, pitch represents a tooth width of each tooth, r represents a chamfer radius of a tooth bottom of each tooth, and R represents a chamfer radius of a tooth tip of each tooth.

As shown in FIG. 30, an implementation principle of the near-eye display apparatus is that imaging light emitted by the image source 1 enters the first prism unit 2 through the first surface 201 of the first prism unit. Because an angle at which some light is emitted is larger than an angle at which the some light is totally reflected, the light is totally reflected on a surface on a side that is of the first prism unit 2 and that is away from the human eye 11, that is, undergoes first reflection on the second surface 202 of the first prism unit, and the imaging light is reflected to the third surface 203 of the first prism unit. The film system unit is disposed between the third surface 203 of the first prism unit and the second prism unit 3, so that the imaging light can undergo second reflection on the third surface 203 of the first prism unit, and then enters the first lens unit 4 after being transmitted by the second surface 202 of the first prism unit. The first semi-transmissive and semi-reflective film is disposed on the first lens unit 4, so that the imaging light is reflected back to the first prism unit 2, and then enters the human eye 11 for imaging after being sequentially transmitted by the first prism unit 2 and the second prism unit 3 to arrive at an aperture stop. The aperture stop in the near-eye display apparatus is at a position of the human eye 11, or is located between the second prism unit 3 and the human eye 11.

The image source 1 may be one of an OLED display, an LCOS display, a Microled display, a DLP display, and an LBS display. The OLED display is preferred.

The first prism unit 2 may be a plastic material or a glass material, and the film system unit is located between the third surface 203 of the first prism unit and the second prism unit 3, may be attached to the first prism or the second prism unit 3, or may be coated on the first prism or the second prism unit 3. The film system unit is to cause imaging light emitted by the image source 1 to be reflected (or partially reflected) when the imaging light arrives at the third surface 203 of the first prism unit for the first time, and causes light reflected to the first prism unit 2 through the first lens unit 4 to be transmitted.

The second prism unit 3 is a Fresnel lens, and may be made of a plastic material or a glass material, and a Fresnel surface faces the human eye 11. Adjusting a draft angle β of the Fresnel lens and minimizing values of chamfers r and R reduce a risk of stray light of the Fresnel lens, to optimize stray light for the near-eye display apparatus.

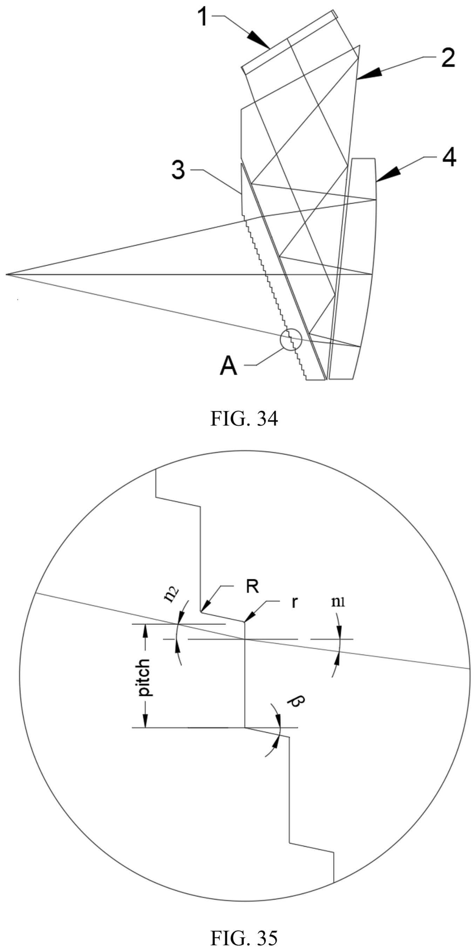

As shown in FIG. 35, all teeth of the Fresnel lens may be the same or different, and draft angles β, pitch, r, and R of all the teeth when the foregoing range is satisfied may have a same value or different values. In the figure, n1 represents an incident angle on a Fresnel surface of the Fresnel lens, and n2 represents an emergent angle on the Fresnel surface of the Fresnel lens, which are determined based on a material refractive index n of the Fresnel lens. β and aor are in units of °, and pitch, r, and R are in units of mm.

The first lens unit 4 includes a series of lenses that have functions of aberration correction and optical path reflection. The lens may be made of a glass material or a plastic material, and includes but is not limited to the following types: a spherical lens, an aspherical lens, a free-form lens, a Fresnel lens, a planar lens, and the like. The spherical lens is preferred. In addition, the first semi-transmissive and semi-reflective film is disposed on a side away from the first prism unit 2. The first semi-transmissive and semi-reflective film may be implemented in a film coating manner or a film attachment manner, and may have a transmittance-to-reflectance ratio of 1:9-9:1, to enable the light to be partially reflected and partially transmitted. The ratio of reflection to transmission of the semi-transmissive and semi-reflective film may be determined based on an angle of the incident light.

The optical display device includes an image source 1, a prism unit, and a lens unit. The second prism unit 3 is a Fresnel lens to adjust values of a draft angle β, pitch, r, and R of each tooth on the Fresnel lens, so that generated total reflection stray light is adjusted to fall outside a field of view, to reduce smear and a risk of stray light, thereby optimizing stray light for the near-eye display apparatus. Compared with an ordinary prism in the conventional technology, the Fresnel lens can further an overall weight and also make a bottom of the apparatus thinner while ensuring an imaging optical path and improving a display effect. In addition, in a prism total reflection architecture, imaging light emitted by a display chip is incident into an imaging prism unit and then is reflected a plurality of times to implement optical path folding. Therefore, On the basis of ensuring a sufficient optical path of the imaging light, this avoids a problem that an overall volume of the near-eye display apparatus increases because a volume of the imaging prism unit is excessively large, and is further conducive to overall lightening and thinning, thereby improving user comfort, experience, and aesthetic.

In an embodiment, the film system unit includes at least one of a fifth semi-transmissive and semi-reflective film, a reflective polarization film, a quarter-wave plate, and an absorptive polarization film.

Alternatively, the film system unit is a semi-transmissive and semi-reflective film or the like, and may be specifically adjusted based on an actual requirement. The semi-transmissive and semi-reflective film may have a transmittance-to-reflectance ratio of 1:9-9: 1, to enable the light to be partially reflected and partially transmitted. The ratio of reflection to transmission of the semi-transmissive and semi-reflective film may be determined based on an angle of the incident light.

In an embodiment, an air gap between the first prism unit 2 and the first lens unit 4 is 0.01-1.0 mm.

It can be ensured that an air layer required for total reflection is formed while an overall thickness of the apparatus is reduced. That is, if the air gap is less than 0.01 mm, it cannot be ensured that there is still an air layer at a specific tolerance, or when the air gap is greater than 1.0 mm, the overall thickness of the apparatus increases, which is not conducive to lightening and thinning.

In an embodiment, the first lens unit 4 is a curved lens, a curvature radius R11 of a first surface of the first lens unit 4 satisfies R11≥150 mm or R11≤- 150 mm, and a curvature radius R12 of a second surface of the first lens unit 4 satisfies 40 mm≤R12≤75 mm; the first surface 201 of the first prism unit is a curved surface, and a curvature radius R13 satisfies R13≥22 mm or R13≤- 100 mm; the first surface of the first lens unit 4 is a surface on a side close to the first prism unit 2; and the second surface of the first lens unit 4 is a surface on a side away from the first prism unit 2.

Preferably, the first lens unit 4 has a refractive index of 1.50-1.90 and an Abbe number of 38.0-85.0. It should be noted that, in this embodiment, any surface of each lens is of an even aspherical surface type, and satisfies the following formula for the aspherical surface:

$$z = \frac{CY^2}{1 + \sqrt{1 - (1 + k)C^2 Y^2}} + \sum_{i=2}^{N} a_i Y^{2i}$$

z represents a sagittal height, Y represents a lens center height, k represents a conic coefficient, C represents a curvature, $a_i$ represents a $(2i)^{th}$ order aspherical coefficient, and N is a positive integer.

Preferably, each of the first prism unit 2 and the second prism unit 3 has a refractive index of 1.45-1.75 and an Abbe number of 18.0-60.0. A smaller Abbe number indicates a smaller color difference.

In an embodiment, an eighth lens unit is further included, the eighth lens unit is disposed close to the first semi-transmissive and semi-reflective film, and a focal length of the eighth lens unit and a focal length of the first lens unit (4) have opposite values.

The eighth lens unit includes a series of lenses that have an aberration correction function, and the focal length of the eighth lens unit and the focal length of the first lens unit 4 have opposite values, to correct an aberration generated when the human eye 11 sees the outside through the first lens unit 4, so as to ensure that the aberration of seeing the outside by the human eye 11 is small enough. The lens in the eighth lens unit may be made of a plastic material or a glass material. A quantity of lenses is not limited, and each lens includes but is not limited to the following types: a spherical lens, an aspherical lens, a free-form lens, a Fresnel lens, a planar lens, and the like. The spherical lens is preferred. It should be noted that, when a lens in the eighth lens unit and the first lens unit 4 is an aspherical lens, a lens surface of the lens satisfies an even aspherical surface formula.

In an embodiment, a focal length of the first lens unit 4 is 10-25 mm.

It can be ensured that the device has a proper optical path, to prevent the image source 1 from sinking and interfering with the surface of the first prism unit 2, and also avoid a problem that the apparatus is too large and becomes useless because an optical path is too long. Preferably, the focal length of the first lens unit 4 is 11-23 mm.

In an embodiment, the image source 1 further moves relative to the first prism unit 2 to perform diopter adjustment.

An imaging position of the imaging light may be changed by changing a distance between the image source 1 and the first surface 201 of the first prism unit, to implement diopter adjustment, so as to accommodate wearers with different degrees of myopia for use.

Detailed descriptions are provided below by using specific embodiments for ease of understanding.

Parameters of each optical element in this embodiment are shown in the following Table 17.

**Table 17**

| Surface Serial number | Surface type | Curvature radius (mm) | Thickness (mm) | Refractive index | Abbe number | Tilt angle (°) | Optical propagation Type |
|---|---|---|---|---|---|---|---|
| S0 | Object plane | Infinity | -2500.00 | | | | Reflection |
| S1 | Aperture stop | Infinity | 18.00 | - | - | | Refraction |
| S2 | Fresnel surface | - | 3.74 | 1.73 | 28.3 | | Refraction |
| S3 | Spherical surface | Infinity | 0.12 | | | -22.96 | Refraction |
| S4 | Spherical surface | Infinity | 4.44 | 1.73 | 28.3 | - | Refraction |
| S5 | Spherical surface | Infinity | 0.20 | | | 26.22 | Refraction |
| S6 | Spherical surface | 210.34 | 2.48 | 1.66 | 81.6 | | Refraction |
| S7 | Spherical surface | -58.83 | -2.48 | 1.66 | 81.6 | | Reflection |
| S8 | Spherical surface | 210.34 | -0.20 | | | | Refraction |
| S9 | Spherical surface | Infinity | -4.44 | 1.73 | 28.3 | -26.22 | Refraction |
| S10 | Spherical surface | Infinity | 4.44 | 1.73 | 28.3 | 26.22 | Reflection |
| S11 | Spherical surface | Infinity | -14.31 | 1.73 | 28.3 | 54.58 | Reflection |
| S12 | Spherical surface | Infinity | -2.56 | | | | Refraction |
| S13 | Spherical surface | Infinity | -0.70 | 1.52 | 64.2 | -2.26 | Refraction |
| S14 | Image plane | Infinity | 0.00 | | | | Refraction |

In Table 17, the surface serial number S0 represents an object plane, the surface serial number S1 represents an aperture stop, the surface serial number S2 represents a Fresnel surface of a Fresnel lens, the surface serial number S3 represents a planar surface that is of the Fresnel lens and that is close to the first prism unit 2, the surface serial numbers S4 and S10 represent the third surface 203 of the first prism unit, the surface serial numbers S5, S9, and S11 represent the second surface 202 of the first prism unit, the surface serial numbers S6 and S8 represent a lens surface that is of the first lens unit 4 and that is close to the first prism unit 2, the surface serial number S7 represents a lens surface that is of the first lens unit 4 and that is away from the first prism unit 2, "-" for the curvature radius indicates that a bending direction is opposite to that of the surface S6 or the surface S8, the surface serial number S12 represents the first surface 201 of the first prism unit, the surface serial number S13 represents a surface that is of the image source 1 and that is close to the first prism unit 2, and the surface serial number S14 represents a surface that is of the image source 1 and that is away from the first prism unit 2. In addition, a tooth width pitch of the second prism unit 3 is 0.25 mm.

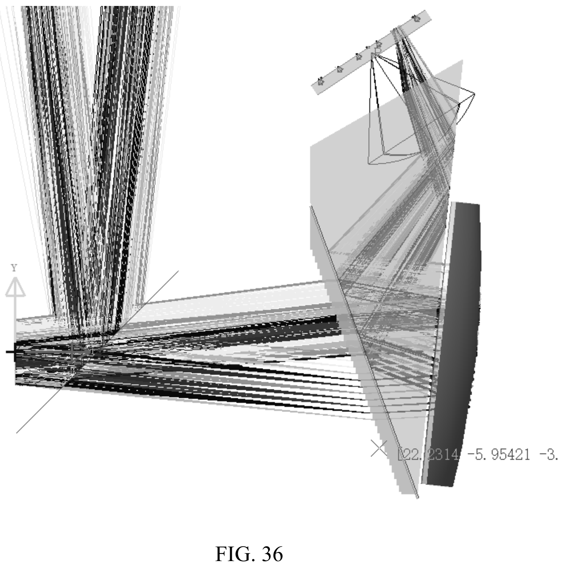

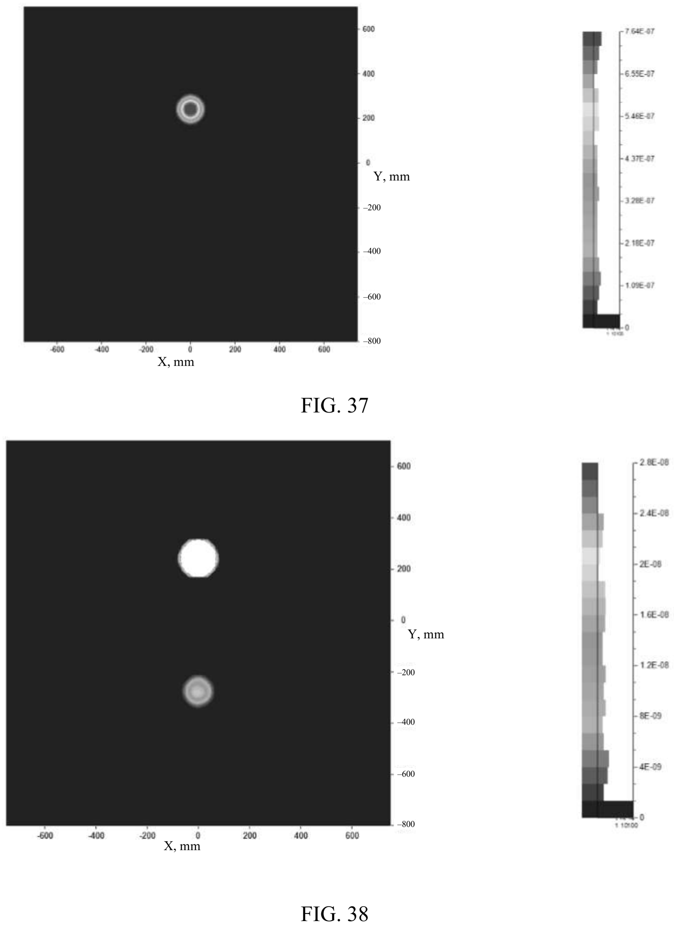

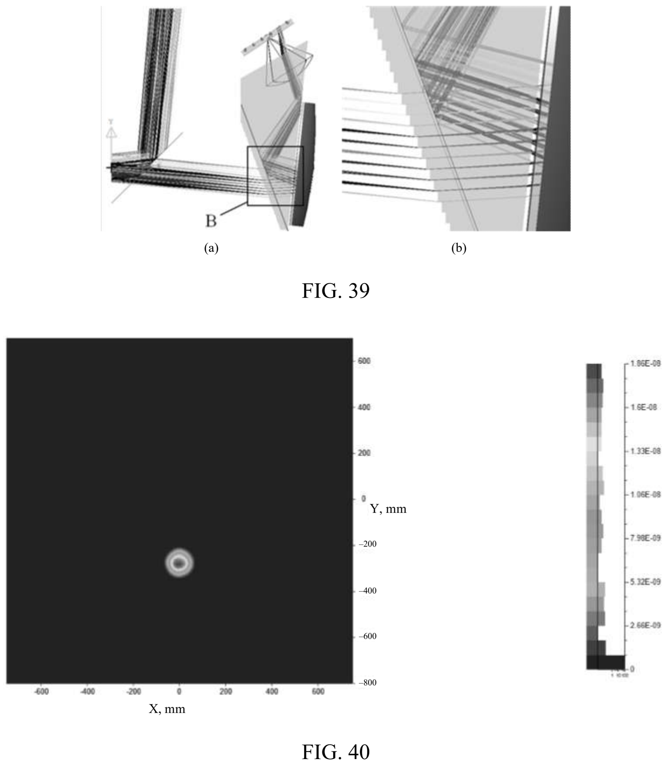

As shown in FIG. 36 to FIG. 38, a very obvious double image phenomenon occurs when the second prism unit 3 is an ideal Fresnel lens ($\beta=0°$, R=0 $\mu$m, and r=0 $\mu$m). After threshold energy reduction, a double image similar to a pixel in shape can be seen in a picture, specifically, as shown in a bright spot appearing at the bottom of FIG. 35 (imaging from an invalid optical path, interfering with a normal picture). Threshold energy reduction refers to reducing a magnitude of brightness. As shown in FIG. 39 and FIG. 40, FIG. 39 is a simulated optical path diagram of stray light of a near-eye display apparatus when $\beta=0°$, R=0 $\mu$m, and r=0 $\mu$m. It can be learned from FIG. 40 that a double image comes from total reflection of light at a sagittal height of a Fresnel lens, and energy of the double image is approximately 1/40 of a pixel.

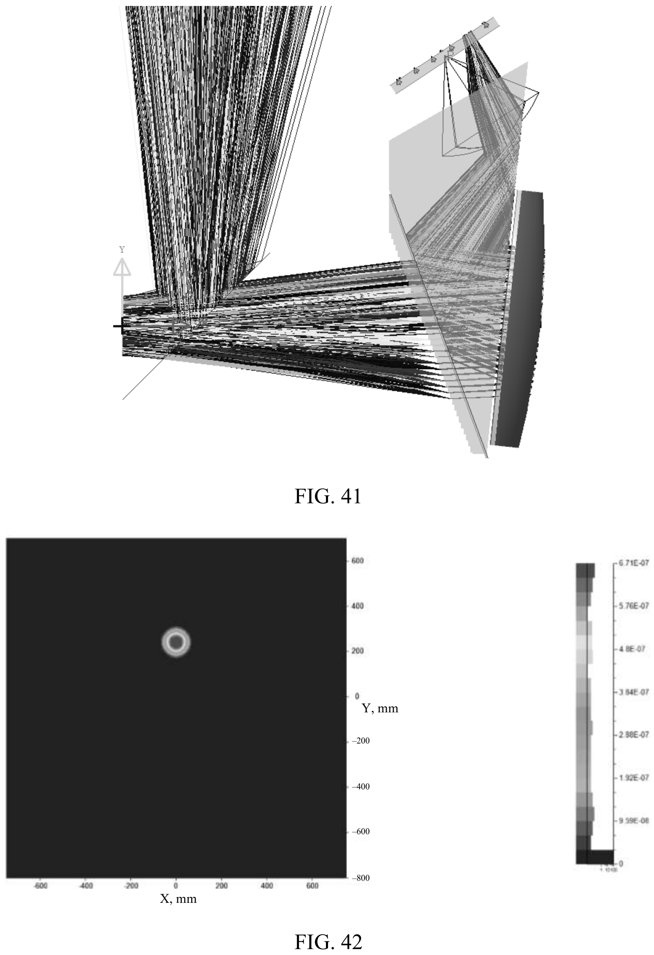

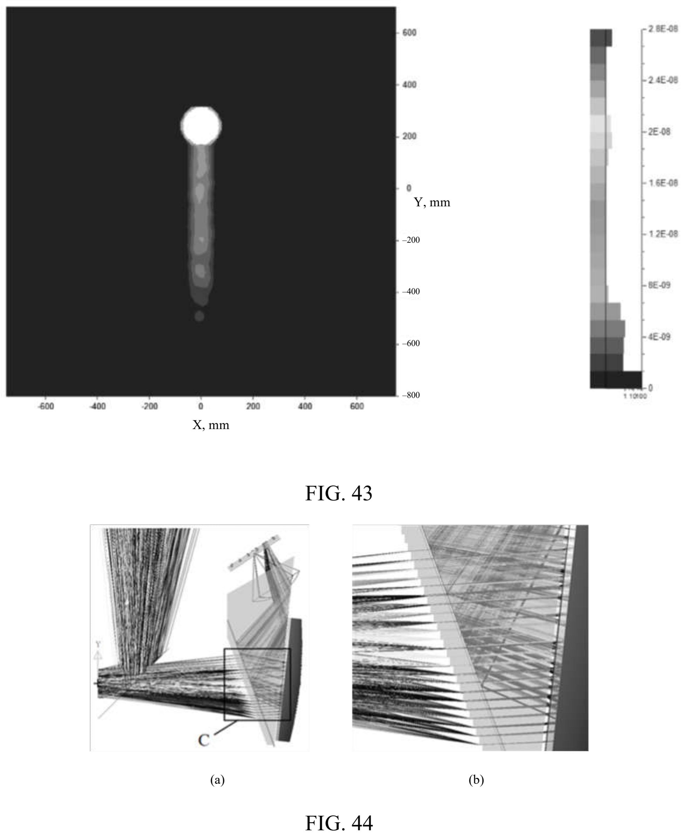

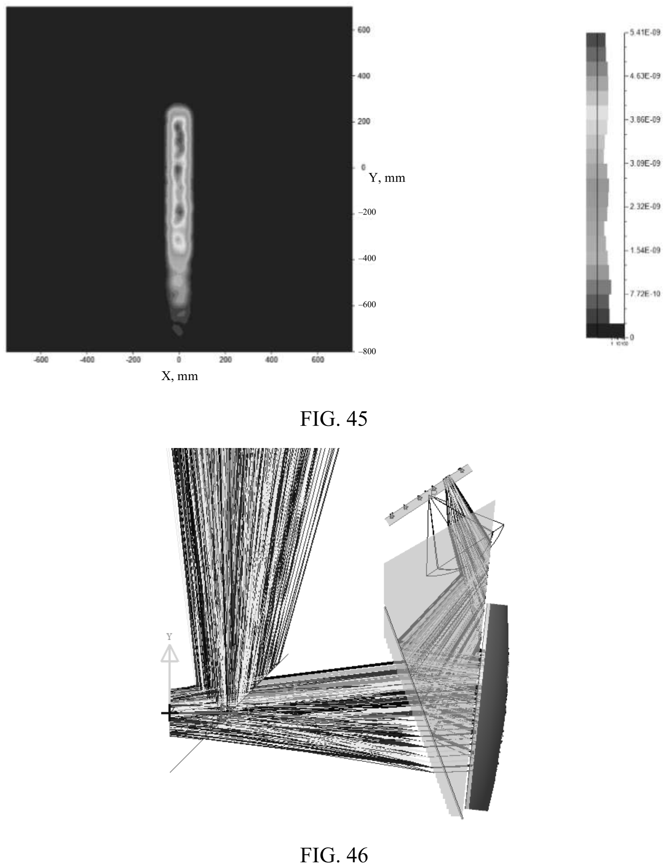

As shown in FIG. 41 to FIG. 45, when the second prism unit 3 is an ordinary Fresnel lens, chamfers ($\beta=0°$, R=25 $\mu$m, and r=25 $\mu$m) appear during actual processing of the ordinary Fresnel lens, resulting in a smearing phenomenon, that is, a ghost image is generated. FIG. 42 is an overall forward simulated irradiance diagram of a near-eye display apparatus when $\beta=0°$, R=25 $\mu$m, and r=25 $\mu$m. However, because imaging irradiance is many times greater than irradiance of a ghost image generated by stray light, in FIG. 43, the ghost image irradiance is more visible through threshold energy reduction. FIG. 44 is a simulated optical path diagram of stray light of a near-eye display apparatus when $\beta=0°$, R=25 $\mu$m, and r=25 $\mu$m. It can be learned from FIG. 45 that smear comes from refraction of light at a chamfer of a Fresnel lens, and energy of the smear is approximately 1/125 of a pixel.

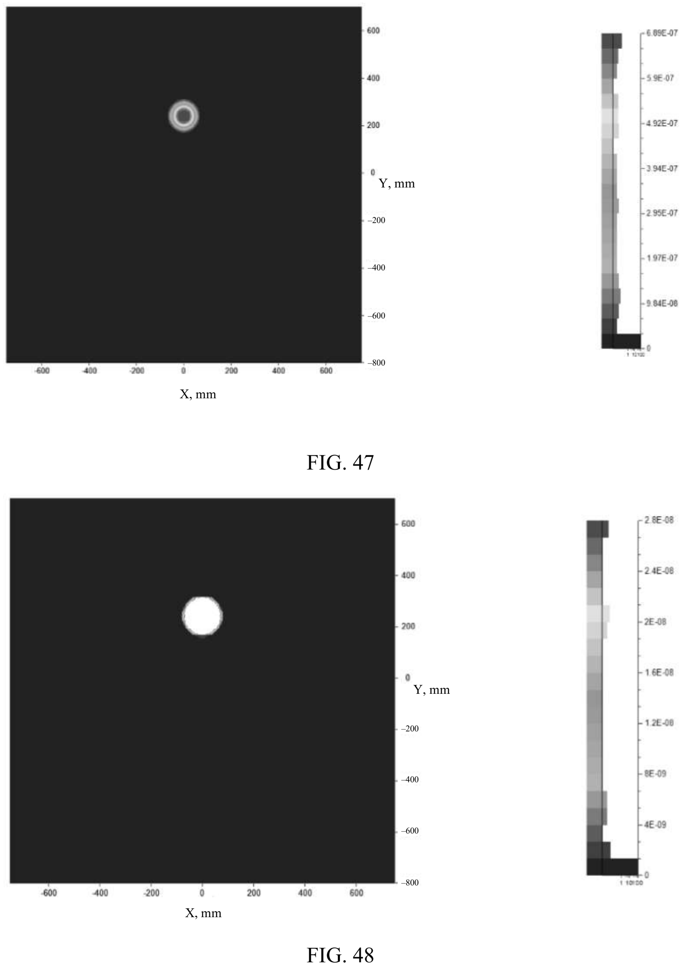

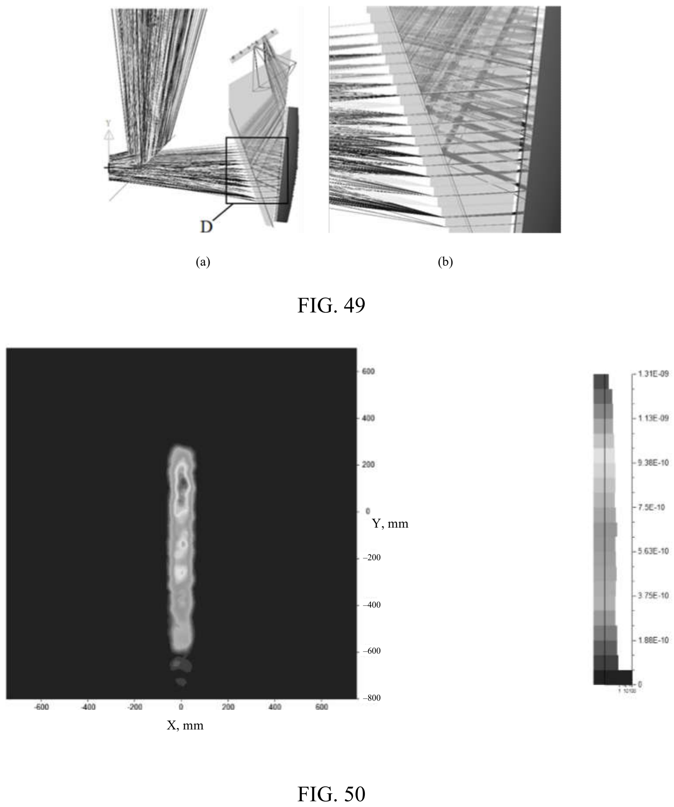

As shown in FIG. 46 to FIG. 50, values of a draft angle $\beta$, r, and R of a second prism are adjusted. For example, in this embodiment, $\beta=12°$, R=5 $\mu$m, and r=5 $\mu$m. FIG. 46 is a simulated optical path diagram of a near-eye display apparatus when $\beta=12°$, R=5 $\mu$m, and r=5 $\mu$m. FIG. 47 shows overall forward simulated irradiance when $\beta=12°$, R=5 $\mu$m, and r=5 $\mu$m. However, because imaging irradiance is many times greater than irradiance of a ghost image generated by stray light, in FIG. 48, the ghost image irradiance is more visible through threshold energy reduction. FIG. 49 is a simulated optical path diagram of stray light of a near-eye display apparatus when $\beta=12°$, R=5 $\mu$m, and r=5 $\mu$m. It can be learned from FIG. 50 that smear disappears, energy of the smear changes to 1/540 of a pixel, and stray light is significantly improved.

It should be noted that relational terms such as first and second in this specification are merely used to distinguish one entity or operation from another entity or operation without necessarily requiring or implying any such actual relationship or order between such entities or operations Moreover, the terms "include", "contain", or any other variant thereof are intended to cover a non-exclusive inclusion, such that elements inherent to a process, a method, an article, or a device with a series of elements are included. Without more constraints, an element preceded by "includes a ..." does not preclude the existence of additional identical elements in the process, method, article, or device that includes the element. In addition, a part in the foregoing technical solutions provided in the embodiments of this application whose implementation principle is consistent with that of corresponding technical solutions in the existing technology is not described in detail to avoid repetitions.

Specific examples are used in this specification to describe the principle and implementations of the present invention. The foregoing embodiments are merely used to help understand the method and the core idea of the present invention. It should be noted that a person of ordinary skill in the art may further make some improvements and polishing to the present invention without departing from the principle of the present invention, and the improvements and polishing fall within the protection scope of the claims of the present invention.

**Claims**

1. An optical display device, comprising an image source (1), a first prism unit (2), a second prism unit (3), and a first lens unit (4), wherein

   the image source (1) is disposed on a side of a first surface (201) of the first prism unit, and the first lens unit (4) is attached to a second surface (202) of the first prism unit; a first surface (301) of the second prism unit is attached to a third surface (203) of the first prism unit; the first surface (201) and the third surface of the first prism unit are closer to an eye of a wearer than the second surface (202) of the first prism unit; and a first semi-transmissive and semi-reflective film is disposed on a surface on a side that is of the first lens unit (4) and that is away from the first prism unit (2); and
   projected light output by the image source (1) is incident into the first prism unit (2) through the first surface (201) of the first prism unit, is incident into the first lens unit (4) after being sequentially reflected totally by the second surface (202) of the first prism unit, reflected by the third surface (203) of the first prism unit, and transmitted by the second surface (202) of the first prism unit, and then is output and incident into the human eye (11) after being reflected by the first semi-transmissive and semi-reflective film and then sequentially transmitted by the second surface (202) and the third surface of the first prism unit and the second prism unit (3).

2. The optical display device according to claim 1, wherein an included angle a between the second surface (202) and the third surface of the first prism unit satisfies 15°<a<35°, an included angle b between the first surface and a second surface of the second prism unit (3) satisfies 15°<b<25°, a-b≤10°, and the second surface (302) of the second prism unit is a surface on a side on which projected light is output.

3. The optical display device according to claim 1, wherein a polarizing film is disposed on the third surface (203) of the first prism unit, and a first quarter-wave plate (5) is disposed between the first lens unit (4) and the polarizing film; or a second semi-transmissive and semi-reflective film is disposed on the third surface (203) of the first prism unit.

4. The optical display device according to claim 1, wherein a fourth surface (204) of the first prism unit is further provided between the first surface (201) of the first prism unit and the third surface (203) of the first prism unit, and the fourth surface (204) of the first prism unit is parallel to the second surface (202) of the first prism unit, or the fourth surface (204) of the first prism unit is parallel to a second surface (302) of the second prism unit.

5. The optical display device according to claim 1, wherein each of the first prism unit (2) and the second prism unit (3) is a prism with a refractive index of 1.45-1.75 and an Abbe number of 18.0-60.0;

a focal length f1 of the first lens unit (4) satisfies 10 mm≤f1≤25 mm, a refractive index of the first lens unit (4) is 1.45-1.90, an Abbe number of the first lens unit (4) is 35.0-85.0, a curvature radius R11 of a first surface of the first lens unit (4) satisfies R11≥100 mm or R11≤-100 mm, and a curvature radius R12 of a second surface of the first lens unit (4) satisfies 40 mm≤R12≤80 mm, wherein the first surface of the first lens unit (4) is a surface on a side close to the first prism unit (2), and the second surface of the first lens unit (4) is a surface on a side away from the first prism unit (2); and
a gap between the first surface of the first lens unit (4) and the second surface (202) of the first prism unit is 0.01-1.0 mm.

6. The optical display device according to claim 1, wherein the image source (1) is movable relative to the first prism unit (2), and a moving distance is less than 2.5 mm.

7. The optical display device according to claim 6, wherein an included angle between a direction in which the image source (1) moves relative to the first prism unit (2) and an optical axis direction of the image source (1) is 0-15°.

8. The optical display device according to any one of claims 1 to 7, wherein a second lens unit (6) is further disposed between the image source (1) and the first surface (201) of the first prism unit.

9. The optical display device according to claim 8, wherein the second lens unit (6) and the image source (1) are movable synchronously relative to the first prism unit (2) to perform diopter adjustment.

10. The optical display device according to claim 8, wherein a focal length f2 of the second lens unit (6) satisfies f2≥50 mm or f2≤-50 mm, a refractive index of the second lens unit (6) is 1.45-1.90, an Abbe number of the second lens unit (6) is 35.0-85.0, and a curvature radius R21 of a first surface and a curvature radius R22 of a second surface of the second lens unit (6) satisfy |R21-R22|>50 mm, wherein the first surface (601) of the second lens unit is a surface on a side away from the first prism unit (2), and the second surface (602) of the second lens unit is a surface on a side close to the first prism unit (2); and
a gap between the first surface (601) of the second lens unit and the first surface (201) of the first prism unit is 0.05-3.00 mm.

11. The optical display device according to any one of claims 1 to 5, wherein a third lens unit (7) is further disposed on a side of the second surface (302) of the second prism unit, and the second surface (302) of the second prism unit is a surface on which projected light is transmitted and output from the second prism unit (3).

12. The optical display device according to claim 11, wherein a focal length f3 of the third lens unit (7) satisfies f3≥50 mm or f3≤-50 mm, a refractive index of the third lens unit (7) is 1.45-1.90, an Abbe number of the third lens unit (7) is 35.0-85.0, a curvature radius R31 of a first surface of the third lens unit (7) satisfies R31≥100 mm or R31≤-100 mm, and a curvature radius R32 of a second surface of the third lens unit (7) satisfies R32≥100 mm or R32≤-100 mm, wherein the first surface (701) of the third lens unit is a surface on a side close to the second prism unit (3), and the second surface

(702) of the third lens unit is a surface on a side away from the second prism unit (3).

13. The optical display device according to claim 11, wherein the third lens unit (7) is movable relative to the second prism unit (3) in an optical axis direction, to implement diopter adjustment.

14. The optical display device according to claim 1, further comprising a film system unit, wherein the film system unit is configured to fully or partially reflect light emitted by the image source (1) to the first lens unit (4), and configured to transmit light reflected by the first lens unit (4) back to the first prism unit (2); and
the film system unit is disposed between the third surface (203) of the first prism unit and the first surface (301) of the second prism unit.

15. The optical display device according to claim 14, wherein the first surface (201) of the first prism unit is a spherical surface or an aspherical surface, and a surface of the first lens unit (4) is a free combination of a spherical surface, an aspherical surface, a free-form surface, a Fresnel surface, and a planar surface.

16. The optical display device according to claim 15, wherein the image source (1) is movable relative to the first surface (201) of the first prism unit to implement diopter adjustment, and a focal length of the first surface (201) of the first prism unit is 25-200 mm.

17. The optical display device according to claim 14, further comprising a fourth lens unit (8), wherein the fourth lens unit (8) is disposed close to the first semi-transmissive and semi-reflective film, and a focal length of the fourth lens unit (8) and a focal length of the first lens unit (4) have opposite values.

18. The optical display device according to claim 17, wherein the focal length of the first lens unit (4) is 10-25 mm.

19. The optical display device according to claim 14, wherein the film system unit comprises at least one of a third semi-transmissive and semi-reflective film, a reflective polarization film, a quarter-wave plate, and an absorptive polarization film.

20. The optical display device according to claim 19, wherein a transmittance-to-reflectance ratio of each semi-transmissive and semi-reflective film is 1:9-9:1.

21. The optical display device according to claim 14, wherein a gap between the image source (1) and the first surface (201) of the first prism unit is 0.25-3.0 mm.

22. The optical display device according to claim 15, wherein the optical display device further satisfies the following conditions:

$$R1 \leq -100 \text{ mm or } R1 \geq 100 \text{ mm};$$

$$-40 \text{ mm} \leq R2 \leq -100 \text{ mm};$$

and

$$R3 \leq -200 \text{ mm or } R3 \geq 18 \text{ mm},$$

wherein
R1 represents a curvature radius of a lens surface that is of the first lens unit (4) and that is close to a fourth lens unit (8), R2 represents a curvature radius of a lens surface that is of the first lens unit (4) and that is away from the fourth lens unit (8), and R3 represents a curvature radius of the first surface (201) of the first prism unit.

23. The optical display device according to claim 22, wherein a formula for the aspherical surface is as follows:

$$z = \frac{CY^2}{1 + \sqrt{1 - (1+k)C^2Y^2}} + \sum_{i=2}^{N} a_i Y^{2i}$$

wherein z represents a sagittal height, Y represents a lens center height, k represents a conic coefficient, C represents a curvature, $a_i$ represents a $(2i)^{th}$ order aspherical coefficient, and N is a positive integer.

24. The optical display device according to claim 23, wherein the optical display device further satisfies the following conditions:

| Lens surface | R | k | $a_2$ | $a_3$ | $a_4$ | $a_5$ | $a_6$ |
|---|---|---|---|---|---|---|---|
| Len1_S1 | 121.258 | 20.875 | 8.904E-06 | -9.721E-09 | 1.509E-11 | -6.648E-14 | 4.967E-16 |
| Len1_S2 | -76.681 | 15.429 | 9.487E-07 | -1.952E-09 | -1.724E-11 | 1.0755E-13 | 7.325E-17 |
| P2_S3 | 92.176 | 83.964 | -8.063E-04 | 2.352E-05 | -1.074E-07 | -2.971E-09 | 2.369E-11 |

wherein R represents a curvature radius with a unit of mm, Len1_S1 represents a lens surface that is of the first lens unit (4) and that is close to the fourth lens unit (8), Len1_S2 represents a lens surface that is of the first lens unit (4) and that is away from the fourth lens unit (8), and P2_S3 represents the first surface (201) of the first prism unit.

25. The optical display device according to claim 1, further comprising a first polarization unit (9), wherein the first polarization unit (9) is located between the first prism unit (2) and the second prism unit (3), and is configured to: reflect imaging light in a first polarization transmission direction to the first lens unit (4) and transmit imaging light in a second polarization transmission direction, the first polarization transmission direction and the second polarization transmission direction form 90°, and the first polarization transmission direction is the same as a polarization transmission direction of the image source (1); and the first semi-transmissive and semi-reflective film is configured to reflect the imaging light in the first polarization transmission direction, so that the light enters the human eye (11) sequentially through the first prism unit (2) and the second prism unit (3), and configured to transmit real-scene light, so that the light enters the human eye (11) sequentially through the first prism unit (2) and the second prism unit (3); and a second surface (302) of the second prism unit is further attached to a second polarization unit (10), wherein the second polarization unit (10) is configured to: transmit light parallel to a third polarization transmission direction and reflect light perpendicular to the third polarization transmission direction, and the third polarization transmission direction is the same as the second polarization transmission direction.

26. The optical display device according to claim 25, wherein the first polarization unit (9) comprises a first linear polarization plate (91), a polarization reflection plate (92), and a second quarter-wave plate (93) that are sequentially disposed in a direction from the second prism unit (3) to the first prism unit (2).

27. The optical display device according to claim 25, wherein a third polarization unit (12) is further disposed on the image source (1), and the third polarization unit (12) is configured to convert imaging light into 45° linearly polarized light.

28. The optical display device according to claim 27, wherein the second polarization unit (10) comprises a second linear polarization plate, and the third polarization unit (12) comprises a third linear polarization plate.

29. The optical display device according to claim 27, wherein the 45° linearly polarized light undergoes first reflection on the second surface (202) of the first prism unit to form first light, the first light undergoes second reflection on the first polarization unit (9) to form second light, the second light undergoes third reflection on the first semi-transmissive and semi-reflective film to form third light, and the third light is converted by the first polarization unit (9) into fourth light and then transmitted through the second polarization unit (10) to enter the human eye (11), the first light is 45° linearly polarized light, the second light is left-handed circularly polarized light, the third light is right-handed circularly polarized light, the fourth light is -45° linearly polarized light, and the second polarization unit (10) is configured to: transmit -45° linearly polarized light and reflect 45° linearly polarized light.

30. The optical display device according to claim 25, further comprising a fifth lens unit (13), wherein the fifth lens unit (13) is disposed between the image source (1) and the first prism unit (2), and the fifth lens unit (13) comprises at least one lens.

31. The optical display device according to claim 30, wherein the fifth lens unit (13) and the image source (1) are movable synchronously relative to the first prism unit (2) to perform diopter adjustment.

32. The optical display device according to claim 1, further comprising a polarization conversion unit, wherein

the image source (1) is provided with a linear polarization film on a light-emitting side; and
further comprising a film system unit, wherein the film system unit comprises a polarization reflection unit and is attached to the third surface (203) of the first prism unit;
the polarization conversion unit is disposed between the first prism unit (2) and the first lens unit (4), or is disposed between the polarization reflection unit and the first prism unit (2);
a thickness of the linear polarization film is 60-250 nm, a thickness of the film system unit is 90-280 nm, a thickness of the polarization conversion unit is 30-100 nm, and a thickness of the semi-transmissive and semi-reflective film is 50-300 nm; and
imaging light emitted by the image source (1) is converted by the linear polarization film into linearly polarized light, and the linearly polarized light enters the first prism unit (2) and undergoes total reflection, and then arrives at the film system unit, and is reflected by the film system unit to the first lens unit (4), and then is reflected by the first semi-transmissive and semi-reflective film on the first lens unit (4) back to the first prism unit (2), and is transmitted sequentially through the film system unit and the second prism unit (3) to arrive at the human eye (11) for imaging.

33. The optical display device according to claim 32, wherein the polarization conversion unit is a quarter-wave plate (5), and an included angle between a reflection axis of the film system unit and a slow axis of the polarization conversion unit is $45°\pm1°$.

34. The optical display device according to claim 33, wherein the polarization reflection unit is a polarization reflection film.

35. The optical display device according to claim 32, wherein the film system unit further comprises a polarization absorption unit, the polarization absorption unit is a polarization absorption film and is located between the polarization reflection unit and the second prism unit (3), and an absorption axis of the polarization absorption unit is parallel to a reflection axis of the polarization reflection unit.

36. The optical display device according to claim 32, wherein the image source (1) is further movable relative to the first prism unit (2), and a moving distance is less than 5 mm.

37. The optical display device according to claim 36, wherein an included angle between a direction in which the image source (1) moves relative to the first prism unit (2) and an optical axis direction of the image source (1) is 0-15°.

38. The optical display device according to claim 32, further comprising a sixth lens unit (14), wherein the sixth lens unit (14) is located on the light-emitting side of the image source (1), and the linearly polarized light enters the first prism unit (2) through the sixth lens unit (14).

39. The optical display device according to claim 38, wherein a focal length of the sixth lens unit (14) is 5-50 mm.

40. The optical display device according to claim 38, wherein the image source (1) and the sixth lens unit (14) are further movable synchronously relative to the first prism unit (2), and a moving distance is less than 4 mm.

41. The optical display device according to claim 40, wherein an included angle between a direction in which the image source (1) and the sixth lens unit (14) move synchronously relative to the first prism unit (2) and an optical axis direction of the image source (1) is 0-10°.

42. The optical display device according to claim 38, wherein a polarizer is further disposed on a side that is of the second prism unit and that is close to the human eye (11), and a thickness of the polarizer is 60-250 nm.

43. The optical display device according to claim 38, wherein each lens unit comprises at least one lens.

44. The optical display device according to claim 43, wherein a lens surface type of each lens is a free combination of a spherical surface, an aspherical surface, a free-form surface, a Fresnel surface, and a planar surface.

45. The optical display device according to claim 43, wherein the first lens unit is a curved lens.

46. The optical display device according to claim 44, wherein the aspherical surface satisfies the following formula:

$$z = \frac{CY^2}{1 + \sqrt{1 - (1+k)C^2Y^2}} + \sum_{i=2}^{N} a_i\, Y^{2i}$$

wherein z represents a sagittal height, Y represents a lens center height, k represents a conic coefficient, C represents a curvature, $a_i$ represents an $i^{th}$ aspherical coefficient, and N is a positive integer.

47. The optical display device according to claim 1, further comprising: a seventh lens unit (15), wherein the seventh lens unit (15) is disposed on a side that is of the first lens unit (4) and that is away from the human eye (11) of the wearer, and a focal length of the seventh lens unit (15) and a focal length of the first lens unit (4) have opposite values, wherein

the second prism unit (3) comprises at least one Fresnel lens; and
a film system unit, wherein the film system unit is located between the first prism unit (2) and the second prism unit (3).

48. The optical display device according to claim 47, wherein the film system unit comprises at least one of a fourth semi-transmissive and semi-reflective film, a reflective polarization film, a quarter-wave plate (5), and an absorptive polarization film.

49. The optical display device according to claim 48, wherein a transmittance-to-reflectance ratio of each semi-transmissive and semi-reflective film is 1:9-9:1.

50. The optical display device according to claim 47, wherein an air gap between the first prism unit (2) and the first lens unit (4) is 0.01-1 mm.

51. The optical display device according to claim 47, wherein the second prism unit (3) comprises a Fresnel lens, an included angle between a line connecting tooth bottoms of two adjacent teeth of the Fresnel lens and a corresponding tooth width direction is 15-35°, a tooth width of the Fresnel lens is greater than or equal to 0.1 mm, a draft angle of a tooth of the Fresnel lens is 60-120°, and each of the Fresnel lens and the first prism unit (2) has a refractive index of 1.45-1.75 and an Abbe number of 18.0-60.0.

52. The optical display device according to claim 1, further comprising a film system unit, wherein the film system unit is disposed between the first prism unit (2) and the second prism unit (3); and

the second prism unit (3) is a Fresnel lens, and is disposed close to the third surface (203) of the first prism unit, and a Fresnel surface of the Fresnel lens is disposed on a side adjacent to the human eye (11) of the wearer, and satisfies the following conditions:

$$\sin(\beta) * n > \sin(\max(aor)) \text{ or } \sin(\beta) * n < \sin(\min(aor));$$

$$r/pitch < 0.05;$$

and

$$R/pitch < 0.05,$$

wherein
in the formula, β represents a draft angle of each tooth, aor represents an included angle range between a normal of an aperture stop and lines respectively connecting any point on the aperture stop with a tooth tip and a tooth bottom of the draft angle of each tooth, max(aor) represents a maximum value of aor, min(aor) represents a minimum value of aor, n represents a material refractive index of the Fresnel lens, pitch represents a tooth width of each tooth, r represents a chamfer radius of a tooth bottom of each tooth, and R represents a chamfer radius of a tooth tip of each tooth.

53. The optical display device according to claim 52, wherein a value range of pitch of a Fresnel surface of the second prism unit (3) is 0.15-0.6 mm, and each of value ranges of r and R is 0.05-0.02 mm.

54. The optical display device according to claim 52, wherein the film system unit comprises at least one of a fifth semi-transmissive and semi-reflective film, a reflective polarization film, a quarter-wave plate (5), and an absorptive polarization film.

55. The optical display device according to claim 52, wherein an air gap between the first prism unit (2) and the first lens unit (4) is 0.01-1.0 mm.

56. The optical display device according to claim 52, wherein the first lens unit (4) is a curved lens, a curvature radius R11 of a first surface of the first lens unit (4) satisfies R11≥150 mm or R11≤- 150 mm, and a curvature radius R12 of a second surface of the first lens unit (4) satisfies 40 mm≤R12≤75 mm; the first surface (201) of the first prism unit is a curved surface, and a curvature radius R13 satisfies R13≥22 mm or R13≤- 100 mm; the first surface of the first lens unit (4) is a surface on a side close to the first prism unit (2); and the second surface of the first lens unit (4) is a surface on a side away from the first prism unit (2).

57. The optical display device according to claim 52, further comprising an eighth lens unit, wherein the eighth lens unit is disposed close to the first semi-transmissive and semi-reflective film, and a focal length of the eighth lens unit and a focal length of the first lens unit (4) have opposite values.

58. The optical display device according to claim 57, wherein the focal length of the first lens unit (4) is 10-25mm.

59. The optical display device according to claims 25 and 52, wherein the image source (1) is further movable relative to the first prism unit (2) to perform diopter adjustment.

FIG. 1

Surface: IMA

Spot Diagram

Units are μm. Legend items refer to Wavelengths
Field      :      1       2       3       4       5       6       7       8       9
RMS radius :  12.704  21.041  25.350  16.848  17.833  22.721  16.848  17.833  22.721
GEO radius :  34.432  49.732  57.370  46.083  46.944  63.055  46.083  46.944  63.055
Scale bar  : 200      Reference  : Chief Ray

FIG. 2

FIG. 3

FIG. 4

FIG. 5

FIG. 6

FIG. 7

FIG. 8

FIG. 9

FIG. 10

| | | | |
|---|---|---|---|
| ☑ —0.0000, 0.0000 mm-Tangential | ☑ ---0.0000, 0.0000 mm-Sagittal | ☑ —0.0000, -4.1555 mm-Tangential | ☑ ---0.0000, -4.1555 mm-Sagittal |
| ☑ —0.0000, 4.1555 mm-Tangential | ☑ ---0.0000, 4.1555 mm-Sagittal | ☑ —7.3876, 0.0000 mm-Tangential | ☑ ---7.3876, 0.0000 mm-Sagittal |
| ☑ —7.3876, -4.1555 mm-Tangential | ☑ ---7.3876, -4.1555 mm-Sagittal | ☑ —7.3876, 4.1555 mm-Tangential | ☑ ---7.3876, 4.1555 mm-Sagittal |
| ☑ —-7.3876, 0.0000 mm-Tangential | ☑ ----7.3876, 0.0000 mm-Sagittal | ☑ —-7.3876, -4.1555 mm-Tangential | ☑ ----7.3876, -4.1555 mm-Sagittal |
| ☑ —-7.3876, 4.1555 mm-Tangential | ☑ ----7.3876, 4.1555 mm-Sagittal | | |

FIG. 11

FIG. 12

**FIG. 13**

**FIG. 14**

FIG. 15

FIG. 16

FIG. 17

FIG. 18

FIG. 19

FIG. 20

FIG. 21

FIG. 22

FIG. 23

FIG. 24

FIG. 25

☑ — 0.00, 0.67 (degree)-Tangential  ☑ ••• 0.00, 0.67 (degree)-Sagittal  ☑ — 0.00, −12.56 (degree)-Tangential  ☑ ••• 0.00, −12.56 (degree)-Sagittal
☑ — 0.00, 13.72 (degree)-Tangential  ☑ ••• 0.00, 13.72 (degree)-Sagittal  ☑ — 20.05, 0.59 (degree)-Tangential  ☑ ••• 20.05, 0.59 (degree)-Sagittal
☑ — 20.32, −13.11 (degree)-Tangential  ☑ ••• 20.32, −13.11 (degree)-Sagittal  ☑ — 20.53, 14.41 (degree)-Tangential  ☑ ••• 20.53, 14.41 (degree)-Sagittal
☑ — 20.05, 0.59 (degree)-Tangential  ☑ ••• 20.05, 0.59 (degree)-Sagittal  ☑ — 20.32, −13.11 (degree)-Tangential  ☑ ••• 20.32, −13.11 (degree)-Sagittal
☑ — 20.53, 14.41 (degree)-Tangential  ☑ ••• 20.53, 14.41 (degree)-Sagittal

FIG. 26

☑ — 0.00, 0.67 (degree)-Tangential  ☑ ••• 0.00, 0.67 (degree)-Sagittal  ☑ — 0.00, −12.56 (degree)-Tangential  ☑ ••• 0.00, −12.56 (degree)-Sagittal
☑ — 0.00, 13.72 (degree)-Tangential  ☑ ••• 0.00, 13.72 (degree)-Sagittal  ☑ — 20.05, 0.59 (degree)-Tangential  ☑ ••• 20.05, 0.59 (degree)-Sagittal
☑ — 20.32, −13.11 (degree)-Tangential  ☑ ••• 20.32, −13.11 (degree)-Sagittal  ☑ — 20.53, 14.41 (degree)-Tangential  ☑ ••• 20.53, 14.41 (degree)-Sagittal
☑ — 20.05, 0.59 (degree)-Tangential  ☑ ••• 20.05, 0.59 (degree)-Sagittal  ☑ — 20.32, −13.11 (degree)-Tangential  ☑ ••• 20.32, −13.11 (degree)-Sagittal
☑ — 20.53, 14.41 (degree)-Tangential  ☑ ••• 20.53, 14.41 (degree)-Sagittal

FIG. 27

FIG. 28

FIG. 29

FIG. 30

FIG. 31

FIG. 32

FIG. 33

FIG. 34

FIG. 35

FIG. 36

FIG. 37

FIG. 38

(a)

(b)

FIG. 39

FIG. 40

FIG. 41

FIG. 42

FIG. 43

(a)

(b)

FIG. 44

FIG. 45

FIG. 46

FIG. 47

FIG. 48

(a)

(b)

FIG. 49

FIG. 50

## INTERNATIONAL SEARCH REPORT

| International application No. |
| --- |
| **PCT/CN2024/074002** |

**A. CLASSIFICATION OF SUBJECT MATTER**

G02B27/01(2006.01)i; G02B17/08(2006.01)i

According to International Patent Classification (IPC) or to both national classification and IPC

**B. FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS, CNTXT, VEN, ENTXTC: 头戴显示, 近眼显示, 虚拟现实, 增强现实, 透射, 反射, 半透, 半反, 透返, 波片, 偏振, 偏光, 菲涅尔, 费涅尔, 透镜, 棱镜, 屈光, 近视, head mounted display, hmd, near eye display, ned, vr, ar, trans+, reflect+, semi-trans+, wave plate+, polar+, fresnel, lens+, prism+, refract+, myopic+, diopt+

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020045914 A1 (PANOVISION CO., LTD.) 05 March 2020 (2020-03-05) description, paragraphs [0050]-[0136], and figure 3 | 1, 3, 5-59 |
| Y | WO 2020045914 A1 (PANOVISION CO., LTD.) 05 March 2020 (2020-03-05) description, paragraphs [0050]-[0136], and figure 3 | 2, 4 |
| Y | CN 110703441 A (SEIKO EPSON CORP.) 17 January 2020 (2020-01-17) description, paragraphs [0021]-[0038], and figure 1B | 2, 4 |
| X | CN 1315008 A (KONINKLIJKE PHILIPS ELECTRONICS N.V.) 26 September 2001 (2001-09-26) description, page 1, line 5-page 8, line 16, and figure 2 | 1, 3, 5-59 |
| Y | CN 1315008 A (KONINKLIJKE PHILIPS ELECTRONICS N.V.) 26 September 2001 (2001-09-26) description, page 1, line 5-page 8, line 16, and figure 2 | 2, 4 |
| PX | CN 116165804 A (ROKID CORP.) 26 May 2023 (2023-05-26) entire document | 1-59 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 May 2024** | **07 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/074002** |

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 220208002 U (ROKID CORP.) 19 December 2023 (2023-12-19)<br>       entire document | 1-59 |
| PX | CN 220252304 U (ROKID CORP.) 26 December 2023 (2023-12-26)<br>       entire document | 1-59 |

Form PCT/ISA/210 (second sheet) (July 2022)

# EP 4 718 144 A1

| | INTERNATIONAL SEARCH REPORT<br>Information on patent family members | | International application No.<br>**PCT/CN2024/074002** |

**EP 4 718 144 A1**

**INTERNATIONAL SEARCH REPORT**
Information on patent family members

International application No.

**PCT/CN2024/074002**

| Patent document cited in search report | | | Publication date (day/month/year) | Patent family member(s) | | | Publication date (day/month/year) |
|---|---|---|---|---|---|---|---|
| WO | 2020045914 | A1 | 05 March 2020 | KR | 20200023966 | A | 06 March 2020 |
| | | | | KR | 102129669 | B1 | 02 July 2020 |
| CN | 110703441 | A | 17 January 2020 | US | 2020018966 | A1 | 16 January 2020 |
| | | | | US | 11275246 | B2 | 15 March 2022 |
| | | | | JP | 2020008749 | A | 16 January 2020 |
| | | | | JP | 7131145 | B2 | 06 September 2022 |
| CN | 1315008 | A | 26 September 2001 | WO | 0079325 | A1 | 28 December 2000 |
| | | | | JP | 2003502710 | A | 21 January 2003 |
| | | | | US | 6487021 | B1 | 26 November 2002 |
| | | | | KR | 20010089170 | A | 29 September 2001 |
| | | | | EP | 1105766 | A1 | 13 June 2001 |
| CN | 116165804 | A | 26 May 2023 | None | | | |
| CN | 220208002 | U | 19 December 2023 | None | | | |
| CN | 220252304 | U | 26 December 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310443709
- CN 2023221818965
- CN 2023218656147
- CN 2023223562402
- CN 2023228140271
- CN 2023115297397